(19) Europäisches Patentamt
European Patent Office
Office européen des brevets

(11) EP 2 014 718 B2

(12) NEW EUROPEAN PATENT SPECIFICATION
After opposition procedure

(45) Date of publication and mention of the opposition decision:
**31.10.2018 Bulletin 2018/44**

(45) Mention of the grant of the patent:
**06.01.2010 Bulletin 2010/01**

(21) Application number: **08017549.0**

(22) Date of filing: **17.06.2004**

(51) Int Cl.:
***C08L 33/20*** (2006.01) ***C08L 65/00*** (2006.01)
***C09D 5/24*** (2006.01) ***H01B 1/12*** (2006.01)
***H01G 9/00*** (2006.01)

# (54) Conductive composition, and their production method

Leitfähige Zusammensetzung und Herstellungsverfahren dafür

Composition conductrice et leur procédé de production

(84) Designated Contracting States:
**BE DE GB**

(30) Priority:
**18.06.2003 JP 2003173429**
**20.06.2003 JP 2003176426**
**03.09.2003 JP 2003311929**
**05.11.2003 JP 2003375667**
**21.01.2004 JP 2004013032**
**04.02.2004 JP 2004027627**
**02.04.2004 JP 2004109702**

(43) Date of publication of application:
**14.01.2009 Bulletin 2009/03**

(62) Document number(s) of the earlier application(s) in accordance with Art. 76 EPC:
**04746313.8 / 1 634 922**

(73) Proprietor: **Shin-Etsu Polymer Co. Ltd.**
**Tokyo 101-0041 (JP)**

(72) Inventors:
- **Yoshida, Kazuyoshi**
**Chuo-ku**
**Tokyo (JP)**
- **Kawaguchi, Toshiyuki**
**Chuo-ku**
**Tokyo (JP)**
- **Ning, Tailu**
**Chuo-ku**
**Tokyo (JP)**
- **Masahiro, Yasushi**
**Chuo-ku**
**Tokyo (JP)**

(74) Representative: **Berkenbrink, Kai-Oliver et al**
**Patentanwälte Becker & Müller**
**Turmstrasse 22**
**40878 Ratingen (DE)**

(56) References cited:
**JP-A- 5 009 308** **JP-A- 6 020 692**
**JP-A- 2001 135 551** **JP-A- 2002 265 781**

EP 2 014 718 B2

## Description

TECHNICAL FIELD

The present invention relates to conductive compositions, and their production method.

This application claims priority from Japanese Patent Application No. 2003-173429 filed on June 18, 2003, Japanese Patent Application No. 2003-375667 filed on November 5, 2003, Japanese Patent Application No. 2003-176426 filed on June 20, 2003, Japanese Patent Application No. 2004-109702 filed on April 2, 2004, Japanese Patent Application No. 2004-013032 filed on January 21, 2004, Japanese Patent Application No. 2004-027627 filed on February 4, 2004 and Japanese Patent Application No. 2003-311929 filed on September 3, 2003.

BACKGROUND ART

An object of the first aspect is to provide a conductive polymer composition, a conductive coating material and a conductive resin, which are excellent in moldability and are soluble in an organic solvent having a SP value (solubility parameter: unit $[(cal/cm^{-3})^{1/2}]$) within a wide range and have no ionic conductivity.

Since the polyelectrolyte described above itself is water soluble, when a conductive polymer solution is applied onto the desired position to form a coating film, the resulting coating film is inferior in water resistance and was easily wiped off by water or alcohol. Furthermore, the polyelectrolyte has no heat resistance with respect to exhibition of conductivity and therefore it could not be used as electronic components which require reliability under high temperature conditions.

Under these circumstances, the second aspect was completed and an object thereof is to provide a conductive composition which is excellent in moldability and is soluble in an organic solvent and also has no ionic conductivity and is used for various purposes because, after forming into a coating film or a molded article using a conductive coating material or a conductive resin, the resulting coating film or molded article is not dissolved in water or a solvent and has high heat resistance.

(Background Art of Third Aspect)

It is expected that the conductive composition containing a conjugated conductive polymer is used for purposes which require conductivity, for example, conductive coating materials, antistatic agents, electromagnetic wave shielding materials, conductive materials requiring transparency, battery materials, capacitor materials, conductive adhesive materials, sensors, electric device materials, semiconductive materials, electrostatic copying materials, photosensitive members such as printer, transfer materials, intermediate transfer materials, carrying members and electrophotographic materials.

In general, the conjugated conductive polymer refers to an organic polymer in which a main chain is composed of π-electron conjugation. As described in the above aspect, examples of the conjugated conductive polymer include polypyrroles, polythiophenes, polyacetylenes, polyphenylenes, polyphenylenevinylenes, polyanilines, polyacenes, polythiophenevinylenes, and copolymers thereof. These conjugated conductive polymers can be prepared by a chemical oxidation polymerization method and an electrolytic polymerization method.

According to the electrolytic polymerization method, an electrode material formed previously is put in a solution mixture of a monomer capable of forming a conjugated conductive polymer and an electrolyte serving as a dopant and a conjugated conductive polymer is formed on the electrode in the form of a film. Therefore, it is difficult to prepare a large amount of the conjugated conductive polymer.

To the contrary, according to the chemical oxidation polymerization method, restriction described above is not required, and a large amount of the n-conjugated conductive polymer can be polymerized in the solution using a suitable oxidizing agent a suitable oxidation polymerization catalyst, and a monomer which can theoretically form a π-conjugated conductive polymer.

However, according to the chemical oxidation polymerization method, solubility in an organic solvent deteriorates with the growth of the n-conjugation of the main chain of a n-conjugated conductive polymer. Therefore, the product is obtained in the form of an insoluble solid powder and, it is difficult to form a uniform conjugated conductive polymer film on the other solid surface. Therefore, there have been made various attempts such as solubilization due to introduction of a suitable functional group into a conjugated conductive polymer, dispersion in a suitable binder, and solubilization due to the use of a polyanion compound.

Furthermore, there have already been known a coating agent, a treating agent, a coating material and an adhesive, which use complex fine particles which comprises conjugated conductive polymer comprising a π-conjugated double bond and inorganic fine particles made of metal, carbon, inorganic oxide, an inorganic phosphoric acid salt or the like.

However, it was difficult to obtain a conjugated conductive polymer, which exhibits high conductivity and excellent heat resistance and also contain a small amount of residual ions, by these chemical oxidation polymerization methods.

The reason is considered as follows. That is, unpreferable side reaction due to an oxidizing agent having high oxidizability occurs in high probability to produce a polymer structure having low conjugation properties, and the polymer thus produced is attacked again by the oxidizing agent thereby to cause excess oxidation or the like to produce a conjugated conductive polymer having low conductivity. To solve such a problem, methods has been conducted such that transition metal ions are introduced as a catalyst and the reaction is conducted at low temperature for a long time. However, in this case, since the resulting polymer is attacked by protons produced by the dehydrogenation reaction of a reactive monomer, a conjugated conductive polymer having low structural order is hardly obtained and also a problem such as deterioration of conductivity arises.

Also, there arose a problem that anions or cations of the oxidizing agent, the oxidation polymerization catalyst and the like are simultaneously doped or remained in the resulting polymer. Conductivity and thermostability of the conjugated conductive polymer drastically vary with the kind of a dopant and small ion-sized inorganic anions or cations are liable to be dispersed in the molecules. Particularly in high temperature and high humidity atmosphere, de-doping may occur. Therefore, when these anions or cations are doped or remained, it becomes difficult to obtain a conjugated conductive polymer which is excellent in heat resistance, moisture resistance and long-term stability.

To solve such a problem, there is made such a proposal that a conjugated conductive polymer having excellent heat resistance is obtained in the presence of anions such as hydroxyallyl sulfonate and toluene sulfonate as a dopant (see, for example, Japanese Patent No. 2546617).

In introduction of a suitable substituent and solubilization into an organic solvent using a polyanion-based compound, a substituent such as alkyl group or sulfonic acid group is usually introduced. There is made such a proposal that a conjugated conductive polymer having excellent conductivity and heat resistance is obtained by introducing the sulfonic acid group (see, for example, Japanese Unexamined Patent Application, First Publication No. Hei 06-208198).

To improve processability of a conjugated conductive polymer, there is made such a proposal that conjugated conductive polymer complex microparticles comprising inorganic microparticles made of metal, carbon, inorganic oxide and inorganic phosphoric acid salt, and a $\pi$-conjugated double bond is used. According to this method, inorganic microparticles made of silicon oxide having a diameter of 1.8 nm are mixed with an aqueous solution and then stirred in a solution mixture of concentrated sulfuric acid, aniline and ammonium persulfate to give a greenish black polyaniline silica complex (see, for example, Japanese Unexamined Patent Application, First Publication No. Hei 11-241021). In this proposal, it is described that conjugated conductive polymer complex microparticles can be used in combination with resins and additives for the purpose of imparting conductivity, antistatic properties and corrosion resistance.

However, the conjugated conductive polymer described in Japanese Patent No. 2546617 had a problem that the molecule of hydroxyallyl sulfonate used as the dopant has a large size and is therefore slightly soluble in water, and thus it is hardly introduced into the polymer, resulting in deterioration of conductivity.

The conjugated conductive polymer described in Japanese Unexamined Patent Application, First Publication No. Hei 06-208198 had an additional problem that excess sulfonic acid groups exist, in addition to sulfonic acid groups contributing to doping, and therefore the conductive film thus formed contain a lot of ions. To solve such a problem, ions are removed by the method such as ion exchange, however, there was a problem that high cost is required and ions are still remained after subjecting to an ion removal treatment.

The conjugated conductive polymer complex microparticles described in Japanese Unexamined Patent Application, First Publication No. Hei 11-241021 exist in the form of particles and electrical conduction is attained by contact between particles, and thus causing a problem that electrical conductivity drastically vary with the contact sate of particles. Furthermore, the oxidizing agent and the catalyst used to polymerize the conjugated conductive polymer are remained on the surface of particles and it is very difficult to remove these residues, resulting in high cost.

An object of the present aspect is to solve the above technical problem of the prior art and to provide a conductive composition containing a conjugated conductive polymer, which exhibits high conductivity and excellent heat resistance and also contain a small amount of residual ions.

(Background Art of Fourth Aspect)

As described above, the conjugated conductive polymer can be prepared by an electrolytic polymerization method and a chemical oxidation polymerization method

The electrolytic polymerization method is a method of dipping an electrode in a solution containing a monomer constituting a conjugated conductive polymer and an electrolyte serving as a dopant, and synthesizing the conjugated conductive polymer in the form of a film on the surface, and is not suited for mass production.

The chemical oxidation polymerization method is a method of polymerizing a monomer constituting a conjugated conductive polymer in a solution in the presence of an oxidizing agent and/or an oxidation polymerization catalyst. There is no restriction as in case of the electrolytic polymerization method, and mass production can be theoretically conducted.

However, this method actually has the following problem.

The conjugated conductive polymer has a grown n-conjugation system in the main chain and therefore it may not exhibit solvent solubility and compatibility with the other resin. Therefore, according to the chemical oxidation polymerization method, solubility in a solvent deteriorates with the growth of the conjugation system of the main chain. Therefore, a solid powder insoluble in the solvent may be obtained and it is difficult to form a uniform film on the other solid surface.

In addition, according to the chemical oxidation polymerization method, it is difficult to obtain a conjugated conductive polymer having high electrical conductivity. This reason is considered as follows. A polymer having low conjugation properties (that is, low electrical conductivity) is produced as by-product by the side reaction due to an oxidizing agent and the resulting polymer is excessively oxidized by the reoxidation reaction due to an oxidizing agent, and also the resulting polymer is attacked by protons produced by the dehydrogenation reaction of the reactive monomer to give a polymer having low structural order (that is, low electrical conductivity). To solve such a problem, there has conventionally been made such an attempt that transition metal ions are introduced as a catalyst and the reaction is conducted at low temperature for a long time. However, it is insufficient to the production of a polymer having low structural order due to proton attack.

As means for solublization of the conjugated conductive polymer, for example, introduction of a specific functional group (generally long-chain alkyl group, carbonyl group, or sulfonic acid group) into a conjugated conductive polymer, dispersion of a binder and the co-existence of a polyanion are studied. It is also disclosed that a conductive composition having excellent electrical conductivity is obtained by introducing a specific functional group into a conjugated conductive polymer in the presence of a polyanion (Japanese Unexamined Patent Application, First Publication No. Hei 06-208198).

Also there is pointed out a problem that codoping of anions or cations used as the oxidizing agent and the oxidation polymerization catalyst are caused in the polymer and these ions are remained.

Electrical conductivity and thermostability of the conjugated conductive polymer drastically vary with the kind of a dopant. Furthermore, small ion-sized inorganic anions or cations are liable to be dispersed in the molecule, and particularly in high temperature and high humidity atmosphere, de-doping may occur. Therefore, doping and remaining of anions or cations cause deterioration of heat resistance (heat deterioration resistance), moisture resistance, long-term stability of the resulting conjugated conductive polymer and the like. To solve such a problem, there has conventionally been proposed that anions such as hydroxyaryl sulfonate and toluene sulfonate are used in combination as a dopant (Japanese Unexamined Patent Application, First Publication No. Hei 07-238149).

However, the technique described in Japanese Unexamined Patent Application, First Publication No. Hei 06-208198 is not effective against problems such as residual ions and deterioration of heat resistance. In the technique described in Japanese Unexamined Patent Application, First Publication No. Hei 07-238149, compounds such as hydroxyaryl sulfonate used as the dopant has a large molecular size and is therefore slightly soluble in water, and thus it is hardly introduced into the polymer and an improvement in conductivity cannot be expected.

Under these circumstances, the present aspect has been completed and an object thereof is to provide a conductive composition which has high electrical conductivity and is excellent in stability of electrical conductivity to the external environment and is also excellent in heat resistance, moisture resistance and long-term stability, and a method for producing the same. Another object is to provide a method for producing a conductive composition in which the amount of residual ions is reduced.

(Background Art of Fifth Aspect)

With recent digitalization of electronic equipments, it is requested for a capacitor used herein to decrease impedance in high frequency range. To comply with this request, for example, a so-called a functional capacitor comprising an anode made of a porous material of a valve metal such as aluminum, tantalum or niobium, a dielectric layer made of an oxide film of the valve metal, and a cathode comprising a solid electrolyte layer, a carbon layer and a silver layer which are laminated with each other has been used (see, for example, Japanese Unexamined Patent Application, First Publication No 2003 37024).

The solid electrolyte layer of the functional capacitor is made of a $\pi$-conjugated conductive polymer such as pyrrole, thiophene and the like. The $\pi$-conjugated conductive polymer plays a role of penetrating into a porous material thereby to contact furthermore with a dielectric layer having a larger area and to achieve high capacitance, and also repairing the defective portion of the dielectric layer with a $\pi$-conjugated conductive polymer thereby to prevent leakage from the defective portion of the dielectric layer caused by to leakage current.

Since performances of the solid electrolyte layer are further improved in case of low equivalent series resistance (ESR), high conductivity is required so as to achieve low ESR. Furthermore, those having excellent heat resistance are required because the operating environment of the capacitor becomes severe.

As a method of forming a solid electrolyte layer containing a $\pi$-conjugated conductive polymer on a dielectric

layer, an electrolytic polymerization or chemical polymerization method can be employed.

In the electrolytic polymerization disclosed in Japanese Unexamined Patent Application, First Publication No. Sho 63-158829, after forming a conductive layer made of manganese oxide on the surface of the porous material of the valve metal, electrolytic polymerization of a conductive polymer must be conducted using the conductive layer as an electrode. However, it is very complicated to electrolytically polymerize the conductive polymer layer after forming the conductive layer and manganese oxide has low conductivity, and therefore the effect of using the conductive polymer having high conductivity was lowered.

In the chemical polymerization disclosed in Japanese Unexamined Patent Application, First Publication No. Sho 63-173313, although a monomer is polymerized on a dielectric layer, productive efficiency of the capacitor drastically decreased because of long polymerization time. Moreover, since the oxidizing agent cannot be sufficiently washed, the surface of the dielectric layer is attacked by the oxidizing agent and thus leakage current characteristics and moisture resistance deteriorate.

In Japanese Unexamined Patent Application, First Publication No. Sho 63-158829 and Japanese Unexamined Patent Application, First Publication No. Sho 63-173313, electrolytic polymerization and chemical polymerization are conducted in the process for the production of the capacitor and there was a problem such as complicated process. Thus, as described in Japanese Unexamined Patent Application, First Publication No. Hei 7-105718, there is made such an attempt that aniline is polymerized in the presence of a polyelectrolyte having a sulfo group, a carboxyl group and the like to obtain a water-soluble polyaniline and an aqueous solution thereof is applied and dried, thereby to simplify the process. However, since the solvent is water, surface tension is large and permeability into the porous material is inferior, and also conductivity was low because it is not a conductive polymer alone. Furthermore, since the resulting solid electrolyte layer contains a polyelectrolyte, conductivity may be temperature-dependent.

To enhance conductivity of the solid electrolyte layer, as disclosed in Japanese Unexamined Patent Application, First Publication No. Hei 11-74157, there is made an attempt of preparing while highly controlling the polymerization conditions in the chemical polymerization. In that case, the complicated process becomes more complicated and is an obstacle to simplification of the process and cost reduction.

An object of the present aspect is to provide a conductive composition capable of forming a solid electrolyte layer having excellent conductivity and heat resistance by simple processes such as application and drying processes, and a method for producing the same, as well as a conductive coating material. Another object is to provide a capacitor using the conductive composition, and a method for producing the same.

(Background Art of Sixth Aspect)

A solar battery with a photoelectric transducer has attracted special interest as a power generating system which causes less environmental pollution, and a silicone-based photoelectric transducer is put into practical use. Since the silicone-based photoelectric transducer requires high production cost, it has recently been studied about a dye-sensitized photoelectric transducer with low production cost.

An example of a dye-sensitized photoelectric transducer is shown in Fig. 1. This dye-sensitized photoelectric transducer (dye-sensitized photoelectric transducer) 10 comprises a transparent substrate 11, a transparent electrode 12 formed on the transparent substrate 11, a dye-adsorbed n-type semiconductor electrode 13 formed on the.transparent electrode 12, an electrolyte film (hole transporting polymer electrolyte film) 14 formed on the n-type semiconductor electrode 13 and an electronic conductive electrode 15 formed on the electrolyte film 14. The n-type semiconductor electrode 13 is an electrode which tears electrons of a dye due to irradiation with light to generate holes on the dye, and the electrolyte film is a film in which holes generated in the n-type semiconductor electrode can move.

In this dye-sensitized photoelectric transducer 10, light irradiated on the transparent substrate 11 reach the n-type semiconductor electrode 13 and energy of the light generates holes (the light enables a conduction band to excite electrons) on the n-type semiconductor electrode 13. Holes generated on the n-type semiconductor electrode 13 moves through the electrolyte film 14 to reach an electronic conductive electrode 15. As a result, an electromotive force is produced between the transparent electrode 12 and the electronic conductive electrode 15, and thus power can be generated.

As an electrolyte of the electrolyte film 14, a liquid electrolyte such as iodine/iodine ion was used. However, when irradiated with sunlight, the photoelectric transducer is heated by its light energy. Therefore, when the electrolyte is liquid, it may expand by heating to cause leakage, resulting in failure of the photoelectric transducer.

For the purpose of suppressing expansion due to sunlight, it is studied to use a solid conjugated conductive polymer as the electrolyte (see, for example, Japanese Unexamined Patent Application, First Publication No. 2003-142168 and Japanese Unexamined Patent Application, First Publication No. 2003-243681). As the method for forming an electrolyte film containing a conjugated conductive polymer, for example, there have been known a method comprising electrolytically polymerizing a monomer on an n-type semiconductor electrode to directly form a film of the conjugated conductive polymer, and a method comprising mixing a conjugated conductive polymer, which is obtained

by polymerizing a monomer by a chemical oxidation polymerization method, with a solvent, applying the solution mixture onto an n-type semiconductor electrode and removing the solvent to form a film of the conjugated conductive polymer.

If the electrolyte is solid, it causes less expansion due to heating and therefore leakage of the electrolyte and failure of the photoelectric transducer can be prevented. However, when the film of the conjugated conductive polymer is formed by the electrolytic polymerization method, electrolytic polymerization must be conducted one by one and the method is not suited for mass production. When the film is formed by the chemical oxidation polymerization method, there is no restriction as in case of the electrolytic polymerization method and mass production of the film of the conjugated conductive polymer can be conducted. However, a high-molecular conjugated conductive polymer was insoluble in a solvent. Therefore, when a solution mixture prepared by merely mixing the conjugated conductive polymer with the solvent is applied, it was difficult to uniformly form a film.

The present aspect was completed under these circumstances and an object thereof is to provide a photoelectric transducer in which a solid electrolyte film containing a conjugated conductive polymer is suited for mass production

(Background Art of Seventh Aspect)

In general, the conjugated conductive polymer refers to an organic polymer in which the main chain has a conjugation system.

Examples thereof include polypyrroles, polythiophenes, polyacetylenes, polyphenylenes, polyphenylenevinylenes, polyanilines, polyacenes, polythiophenevinylenes, and copolymers thereof. These conjugated conductive polymers can be prepared by a chemical oxidation polymerization method and an electrolytic polymerization method.

According to the electrolytic polymerization method, an electrode material made previously is put in a solution mixture of an electrolyte serving as a dopant and a monomer capable of forming a conjugated conductive polymer, and a conjugated conductive polymer is formed on the electrode in the form of a film. Therefore, it is difficult to conduct mass production.

To the contrary, according to the chemical oxidation polymerization method, there is no restriction and a large amount of the conjugated conductive polymer can be polymerized in the solution using a monomer capable of theoretically forming a conjugated conductive polymer and a suitable oxidizing agent, a suitable oxidation polymerization catalyst and the like.

However, according to the chemical oxidation polymerization method, solubility in an organic solvent deteriorates with the growth of the conjugation of a conjugated conductive polymer main chain. Therefore, the product is obtained in the form of an insoluble solid powder and, the way things are going, it is difficult to form a uniform conjugated conductive polymer film on the other solid surface. Therefore, there have been made various attempts such as solubilization due to introduction of a suitable functional group into a conjugated conductive polymer, dispersion in a suitable binder, and solubilization due to the use of a polyanion compound.

However, it was difficult to obtain a conjugated conductive polymer, which exhibits high conductivity, and small temperature-dependence of electrical conductivity, and also contain a small amount of residual ions, by these chemical oxidation polymerization methods.

The reason is considered as follows. That is, in the chemical oxidation polymerization method, unpreferable side reaction due to an oxidizing agent having high oxidizability occurs in high probability to produce a polymer structure having low conjugation properties, the polymer thus produced is attacked again by the oxidizing agent thereby to cause excess oxidation to produce conjugated conductive polymer having low conductivity, and the like. To solve such a problem, methods have been conducted such that transition metal ions are introduced as a catalyst, the reaction is conducted at low temperature for a long time, and the like. However, in this case, since the resulting polymer is attacked by protons produced by the dehydrogenation reaction of a reactive monomer, a conjugated conductive polymer having low structural order tends to be obtained and also a problem such as deterioration of conductivity arises.

Also, there arose a problem that anions or cations used as the oxidizing agent, the oxidation polymerization catalyst and the like are codoped in the resulting polymer. Alternatively, these anions and cations are remained and the like. Conductivity and thermostability of the conjugated conductive polymer drastically vary with the kind of a dopant. That is, small ion-sized inorganic anions or cations are liable to be dispersed in the molecule. Particularly in high temperature and high humidity atmosphere, de-doping can occur easily. Therefore, it is difficult to obtain a conjugated conductive polymer which is excellent in heat resistance, moisture resistance and long-term stability because of doping of these anions or cations as well as remaining of anions or cations. To solve such a problem, there is made such a proposal that anions such as hydroxyaryl sulfonate and toluene sulfonate are used as a dopant. According to this proposal, a conductive polymer having excellent heat resistance is obtained (see, for example, Japanese Unexamined Patent Application, First Publication No. Hei 07-238149).

In solubilization into an organic solvent using a polyanion-based compound and introduction of a suitable substituent, a substituent such as alkyl group or sulfonic acid group is usually introduced (see, for example, Japanese Unexamined Patent Application, First Publication No. Hei 06-208198).

However, the method described in Japanese Unexamined Patent Application, First Publication No. Hei 07-238149 had a problem that the molecule of hydroxyaryl sulfonate is a large and is therefore slightly soluble in water, and thus it is hardly introduced into the polymer as a dopant, resulting in deterioration of conductivity.

According to the method described in Japanese Unexamined Patent Application, First Publication No. Hei 06-208198, excellent conductivity and heat resistance can be obtained by introduction of sulfonic acid group and the like. However, there arises an additional problem that excess sulfonic acid groups exist, in addition to sulfonic acid groups used for the dope, and therefore the resulting conductive film contain a large amount of ions. To solve such a problem, ions are removed by the method such as ion exchange, however, there was a problem that high cost is required and ions are still remained after ion exchange is sufficiently conducted.

## DISCLOSURE OF THE INVENTION

### (Disclosure of First Aspect)

The present inventors have found that, in case of polymerizing a material to obtain a conductive polymer in the presence of a polymer compound having a cyano group, the resulting conductive polymer has solvent solubility and moldability, and also a conductive composition having no ionic conductivity is obtained. Also, they have found that there can be obtained a conductive composition, wherein it is soluble in solvents having various SP values and a melting temperature thereof can be controlled and it also can be mixed with various insulating resins, by using a copolymer of a compound having a vinyl group and acrylonitrile or methacrylonitrile as the polymer compound. Thus, the present aspect has been completed.

The first aspect of the present invention is directed to a conductive composition comprising a $\pi$-conjugated conductive polymer and a cyano group-containing polymer compound which is a copolymer of a cyano group-containing monomer and a vinyl group-containing monomer.

### (Disclosure of Second Aspect)

The present inventors have found that a conductive composition, which has solvent solubility and moldability and also has no ionic conductivity, is obtained by forming a n-conjugated conductive polymer in the presence of a cyano group-containing polymer compound. Also, they have found that, when the conductive composition contains a curing agent and is dissolved in an organic solvent or mixed with a resin, the cyano group-containing polymer compound is crosslinked by the curing agent to obtain a coating material and a resin which are excellent in solvent resistance and heat resistance. Thus, the present aspect has been completed.

The second aspect of the present invention provides a conductive composition comprising a cyano group-containing polymer compound, a $\pi$-conjugated conductive polymer, and a curing agent capable of reacting with a cyano group. Also, the second aspect of the present invention provides a conductive composition comprising a cyano group-containing polymer compound which is a copolymer of a cyano group-containing monomer and a vinyl group-containing monomer having a functional group, a $\pi$-conjugated conductive polymer, and a curing agent capable of reacting at least one of a cyano group and the functional group.

### (Disclosure of Third Aspect)

The present inventors have intensively studied so as to achieve the above object and found that the above problems can be solved by using a specific carbon-based cluster derivative, and thus the present aspect has been completed.

The third aspect of the present invention is directed to a conductive composition comprising, at least, a conjugated conductive polymer, at least one of a polyanion and an electron-withdrawing functional group-containing polymer, and a cluster derivative in which an anion group is introduced into carbon atoms of a cluster molecule, which contains carbon as a main component.

### (Disclosure of the Invention of Fourth Aspect)

The present inventors have intensively studied so as to achieve the above object and arrived at the present aspect.

The fourth aspect of the present invention is a conductive composition comprising a polyanion (A), in which an anion group is bonded with a main chain via an ester group, and a conjugated conductive polymer (B).

(Disclosure of Fifth Aspect)

The fifth aspect of the present invention provides a conductive composition comprising a conductive filler and a conductive mixture of a cyano group-containing polymer compound and a $\pi$-conjugated conductive polymer. Also, the fifth aspect of the present invention provides a method for preparing a conductive composition, which comprises polymerizing a precursor monomer of a n-conjugated conductive polymer in the presence of a cyano group-containing polymer compound to provide a conductive mixture, and mixing the conductive mixture with a conductive filler.

(Disclosure of Sixth Aspect)

The sixth aspect of the present invention provides a photoelectric transducer having a laminated configuration

(Disclosure of the Invention of Seventh Aspect)

The present inventors have intensively studied so as to achieve the above object and arrived at the present aspect. That is, the seventh aspect of the present invention provides a conductive composition according to claims 1 and 2.

BRIEF DESCRIPTION OF THE DRAWINGS

**Fig. 1** is a sectional view showing an example of a dye-sensitized photoelectric transducer.

BEST MODE FOR CARRYING OUT THE INVENTION

Preferred examples of the present invention will now be described. However, the present invention is not limited to the following examples. For example, constituent elements of these examples and aspects can be corresponded or appropriately combined with each other.

Examples of the vinyl halide compound include vinyl chloride and vinyl fluoride. Examples of the aromatic vinyl compound include styrene, $\alpha$-methylstyrene, p-dodecylstyrene and p-octadecylstyrene. Examples of the heterocyclic vinyl compound include vinylpyridine. Examples of the aliphatic vinyl compound include linear hydrocarbons having one double bond in the molecule, such as propene, butene, pentene, hexene, octane and dodecene. Examples of the acrylic compound include ethyl acrylate, butyl acrylate, 2-ethylhexyl acrylate, lauryl acrylate, methyl methacrylate, acrylic acid, methacrylic acid and acrylamide.

Typical examples of the diene compound include butadiene. Examples of the maleimide compound include maleimide and N-substituted maleimide.

Solubility of the cyano group-containing polymer compound in a solvent can be controlled by copolymerizing these vinyl monomers with the cyano group-containing monomer. By selecting these vinyl monomers as a copolymerization component, it becomes possible to easily dissolve a polymer compound, which contains polyacrylonitrile (SP value: 15.4) and/or polymethacrylonitrile (SP value: 10.7) having particularly high polarity as a constituent unit, in commodity solvents having low polarity, such as toluene, MEK (methyl ethyl ketone), acetone and the like.

At the same time, selection of the vinyl group-containing monomer enables adjustment of chemical properties wherein a compatibilization moiety is served for controlling compatibility when the cyano group-containing polymer compound is mixed with an insulating resin, adjustment of thermal properties such as Tg (glass transition temperature) and adjustment of physical properties such as hardness.

Therefore, compatibility with a vinyl chloride resin, a vinylidene fluoride resin and a styrene resin can be improved by copolymerizing vinyl halides such as vinyl chloride and vinyl fluoride, aromatic vinyl compounds such as styrene and $\alpha$-methylstyrene, and the like. Also, it is possible to dissolve in commodity solvents such as toluene, MEK and acetone by copolymerizing with aliphatic vinyl compounds such as 1-hexene, 1-octene and 1-dodecene, aromatic vinyl compounds such as p-dodecylstyrene and p-octadecylstyrene and the like. Also, it is possible to decrease Tg and hardness by copolymerizing with heterocyclic vinyl compounds such as vinylpyridine, acrylic compound such as ethyl acrylate, butyl acrylate, 2-ethylhexyl acrylate, methyl methacrylate, and diene compounds such as butadiene. To the contrary, it is possible to increase Tg and hardness by copolymerizing with acrylic compounds such as methacrylic acid, and acrylamide, maleimides and maleimide compounds such as N-substituted maleimide.

A copolymerization molar ratio of the cyano group-containing monomer to the vinyl group-containing monomer is preferably from 99:1 to 10:90. Solvent solubility can be improved by adjusting the molar ratio of the cyano group-containing monomer to 99 or less. By adjusting the molar ratio to 10 or more, solubility of the $\pi$-conjugated conductive polymer can be improved, thus making it possible to prepare a uniform conductive composition solution.

In case of copolymerizing the cyano group-containing monomer with the vinyl group-containing monomer, a conventional polymerization method used in the radical polymerization can be employed, and a solution polymerization

method is a preferable polymerization method. As a polymerization initiator, any conventional polymerization initiator used in the radical polymerization can be used and azo type initiators such as azobisisobutyronitrile, azobisvaleronitrile are preferable polymerization initiators.

The conductive composition may contain synthetic rubber components for improving impact resistance, and age resistors, antioxidants and ultraviolet absorbers for improving environment-resistant characteristics. However, when amine compounds and the like are used as antioxidants, an action of an oxidizing agent used to polymerize the $\pi$-conjugated conductive polymer may be inhibited. Therefore, phenolic compounds are used as antioxidants in place of amine compound or, it is necessary to mix after the polymerization when amine compounds are used.

[Ion Concentration]

The conductive composition of the present aspect contains the above cyano group-containing polymer compound so as to obtain solvent solubility. Since the compositions does not contain an anionic substituent such as sulfonic acid group or carboxylic acid group, those having an ion concentration of 5000 ppm or less can be easily obtained. In the present aspect, the ion concentration is an extraction amount of ions contained per unit amount of the conductive composition. This extraction amount refers to the total ion concentration of ions of sulfuric acid, nitric acid and chlorine, which are contained in pure water at room temperature after dipping the conductive composition therein for 24 hours.

Those containing the above anionic substituent or halogen ion in a dopant or oxidizing agent described hereinafter may be used. In case of using the dopant and/or oxidizing agent, it is preferred to sufficiently purify the resulting composition.

When using those having an anionic substituent as a dopant, the mol number of the dopant to be mixed is preferably the same as or smaller than that of the conductive polymer to which the dopant is to be coordinated.

The oxidizing agent is preferably separated by techniques such as washing, filtration, dialysis, ion exchange, and the like after the completion of the reaction.

[Dopant]

The conductive polymer is preferably mixed with a dopant so as to improve conductivity. As the dopant, halogen compounds, Lewis acids, proton acids and the like are usually used. Examples of the halogen compound include chlorine, bromine, iodine, iodine chloride, iodine bromide and iodine fluoride. Examples of the Lewis acid include phosphorus pentafluoride ($PF_5$), arsenic pentafluoride ($AsF_5$), $SbF_5$, boron trifluoride ($BF_3$), boron trichloride ($BCl_3$) and boron tribromide ($BBr_3$). Examples of the proton acid include inorganic acids such as hydrochloric acid, sulfuric acid, nitric acid, phosphoric acid, fluoroboric acid, hydrofluoric acid and perchloric acid; organic acids such as organic carboxylic acid and organic sulfonic acid; organic cyano compounds; and fullerenes such as fullerene, hydrogenated fullerene and fullerene hydroxide.

Examples of the organic carboxylic acid include acetic acid, benzoic acid, phthalic acid, and metal salts thereof can also be used.

Examples of the organic acid include p-toluenesulfonic acid, naphthalenesulfonic acid, alkylnaphthalenesulfonic acid, anthraquinonesulfonic acid and dodecylbenzenesulfonic acid, and metal salts thereof can also be used.

Examples of the organic cyano compound include tetracyanoethylene, tetracyanoethylene oxide, tetracyanobenzene, tetracyanoquinodimethane and tetracyanoazanaphthalene.

The dopant is preferably a bulky substance having a large molecular weight because it is excellent in stability at high temperature and is less likely to cause de-doping. Among the above compounds, naphthalenesulfonic acid, alkylnaphthalenesulfonic acid, anthraquinonesulfonic acid, tetracyanoquinodimethane, tetracyanoazanaphthalene, fullerene, hydrogenated fullerene and fullerene hydroxide are preferably used.

[Preparation Method]

In the preparation of the conductive composition of the present aspect, the cyano group-containing polymer compound is dissolved in a solvent which can dissolve the cyano group-containing polymer compound. An oxidizing agent is added dropwise to a system obtained by sufficiently mixing with a precursor monomer of a conductive polymer and the obtained solution including the polymer compound under stirring, thereby enabling the polymerization to proceed. The oxidizing agent, the residual monomer and by-product are removed from a complex of the cyano group-containing polymer compound and the conductive polymer, followed by purification to obtain a conductive composition.

As described above, since the cyano group-containing polymer compound can control the SP value, there can be selected various solvents which dissolve the polymer compound. Examples of the solvent include hydrocarbon-based solvents containing a halogenated hydrocarbon, such as hexane, cyclohexane, toluene, xylene, benzene, styrene, dichloromethane and chloroform; alcohol-based solvents such as ethanol, butanol, isopropyl alcohol, cyclohexanol and

lauryl alcohol; ether-based solvents such as diethyl ether, ethylene oxide, propylene oxide, furan and tetrahydrofuran; ketone-based solvents such as acetone, methyl ethyl ketone and cyclohexanone; ester-based solvents such as ethyl acetate, isobutyl acetate, vinyl acetate and butyrolactone; fatty acid-based solvents such as acetic anhydride and succinic anhydride; phenolic solvents such as m-cresol and nonyl phenol; and nitrogen containing compounds such as nitromethane, nitrobenzene, N-methylformamide, N,N-dimethylformamide, N,N-dimethylacetamide, acetonitrile and N-methyl-2-pyrrolidone. These solvents may be used alone or in combination.

It is important to select a solvent which dissolves the cyano group-containing polymer compound and dissolves the precursor monomer of the conductive polymer and also dissolves the oxidizing agent, thereby enabling the reaction of the precursor monomer to proceed.

Regarding a ratio of the conductive polymer to the cyano group-containing polymer compound, a mass ratio of the cyano group-containing polymer compound to the conductive polymer is preferably from 5:95 to 99:1, and more preferably from 10:90 to 90:10. By adjusting the ratio of the conductive polymer to 1 or more, a composition having sufficient conductivity can be obtained. By adjusting the ratio of the conductive polymer to 95 or less, a composition having excellent solvent solubility can be obtained.

As the oxidizing agent capable of polymerizing the conductive polymer, known oxidizing agents can be used. Examples thereof include metal halides such as ferric chloride, boron trifluoride and aluminum chloride; peroxides such as hydrogen peroxide and benzoyl peroxide; persulfates such as potassium persulfate, sodium persulfate and ammonium persulfate; ozone and oxygen.

The conductive composition thus obtained may be used alone, or may be mixed with the other insulating binder resin to give a conductive resin or a molded article as a product.

The insulating binder resin to be mixed is not specifically limited and is preferably a resin which is excellent in compatibility and dispersibility with the conductive composition and does not exhibit ionic conductivity. A mixture of one or more resins selected from acrylic resins, urethane-based resins, fluorine-based resins, imide-based resins and epoxy-based resins is a preferable resin.

It is preferred to adjust a difference in SP value between the polymer resin compound and the insulating resin within a range from 0 to 2 so as to maintain compatibility with the insulating resin to be mixed. As described above, it is possible to control SP value by control of the composition of the cyano group-containing polymer compound by selecting a vinyl group-containing monomer to be copolymerized with a cyano group-containing monomer.

The SP values of the cyano group-containing polymer compound and the insulating resin can be determined as an average value of the SP value of a solvent capable of dissolving each resin after a dissolution test was conducted using various solvents having different SP values described below. As a series of solvents used in the measurement of the SP value, for example, there can be used n-pentane (SP = 7.0), n-heptane (SP = 7.4), methylcyclohexane (SP = 7.8), toluene (SP = 8.9), tetralin (SP = 9.5), o-dichlorobenzene (SP = 10.0), 1-bromonaphthalene (SP = 10.6), nitroethane (SP = 11.1), acetonitrile (SP = 11.8), nitromethane (SP = 12.7), diethyl ether (SP = 7.4), diisobutyl ketone (SP = 7.8), butyl acetate (SP = 8.5), methyl propionate (SP = 8.9), dimethyl phthalate (SP = 10.7), carbonic acid-2,3-butylene (SP = 12.1), propylene carbonate (SP = 13.3), ethylene carbonate (SP = 14.7), 2-ethylhexanol (SP = 9.5), 4-methyl-2-pentanol (SP = 10.0), 2-ethyl-1-butanol (SP = 10.5), 1-pentanol (SP = 10.9), 1-butanol (SP = 11.4), 1-propanol (SP = 11.9), ethanol (SP = 12.7) and methanol (SP = 14.5).

A mixing ratio of the insulating binder resin to the conductive composition is decided by conductivity required to the product and a resistance value peculiar to the conductive composition and cannot be necessarily mentioned, however, they are preferably mixed in any mixing ratio as far as inherent physical properties of the insulating binder are not adversely affected.

When the conductive resin is molded after dissolving in a solution, the solvent capable of dissolving these insulating binder resins is not specifically limited and there can be used any alcohol-based solvents, ketone-based solvents, ester-based solvents, hydrocarbon-based solvents and aromatic solvents which dissolve the above insulating binder resins.

[Molding Method]

A molded article may be obtained by dissolving a conductive resin in a solvent, conducting molding by optional method such as a solution molding, application, coating or printing method, and removing the solvent while drying. Also, a molded article may be obtained by melt-extruding a pelletized conductive resin, followed by melt-molding such as injection molding.

(Best Mode of Second Aspect)

The first conductive composition of the present aspect (hereinafter referred to as a "first conductive composition") contains a cyano group-containing polymer compound, a n-conjugated conductive polymer and a curing agent.

The second conductive composition of the present aspect (hereinafter referred to as a "second conductive composition") contains a cyano group-containing polymer compound which is a copolymer of a cyano group-containing monomer and a vinyl group-containing monomer having a functional group, a n-conjugated conductive polymer and a curing agent which can react with the cyano group and/or the functional group.

<First Conductive Composition>

The first conductive composition will now be described in detail below.

[n-Conjugated Conductive Polymer]

Examples of the π-conjugated conductive polymer in the present aspect include substituted or unsbstituted polyaniline, substituted or unsbstituted polypyrrole, substituted or unsbstituted polythiophene, and (co)polymers of one or more kinds selected from aniline, pyrrole, thiophene and derivatives thereof. Particularly, polypyrrole, polythiophene, poly N-methylpyrrole, poly 3-methylthiophene, poly 3-methoxythiophene, and copolymer of two or more kinds selected from them are advantageously used in view of cost and reactivity.

Particularly, alkyl-substituted compounds such as poly N-methylpyrrole and poly 3-methylthiophene are advantageous because the effect of improving solvent solubility of the conductive composition is obtained. Among alkyl groups, a methyl group is preferable because conductivity is not adversely affected.

[Cyano Group-Containing Polymer Compound]

Examples of the cyano group-containing polymer compound include a polymer of a cyano group-containing monomer described hereinafter, a copolymer of a cyano group-containing monomer and a vinyl group-containing monomer, a cyanoethyl cellulose resin having a cyanoethylated hydroxyl group and a polyallylamine resin having a cyanoethylated amino group.

Among these, resins soluble in solvents having a SP value (solubility parameter: unit [$(cal/cm^{-3})^{1/2}$]) within a wide range are preferable. When using the copolymer of a cyano group-containing monomer and a vinyl group-containing monomer, solubility of the cyano group-containing polymer compound in a solvent can be controlled to obtain a cyano group-containing polymer compound, which is soluble in solvents wherein SP values thereof are within a wide range.

[Cyano Group-Containing Monomer]

In the first conductive composition, when using a copolymer of a cyano group-containing monomer and a vinyl group-containing monomer as a cyano group-containing polymer compound, the cyano group-containing monomer as used herein is a compound which has a cyano group in the molecule and is polymerizable to form homopolymer, or is copolymerizable with the other monomer. The monomer is preferably a cyano group-containing vinyl-based monomer compound such as acrylonitrile, methacrylonitrile or a derivative thereof because it is easily polymerized and a copolymer is easily obtained. These monomers may be used alone or in combination.

Since acrylonitrile and methacrylonitrile have a cyano group and a vinyl group in the molecule, polyacrylonitrile and polymethacrylonitrile can be used as the cyano group-containing polymer compound in the present aspect.

[Vinyl Group-Containing Monomer]

The vinyl group-containing monomer is a polymerizable compound which has one or more carbon-carbon double bonds in the molecule.

Preferable vinyl group-containing monomers are vinyl halide compounds, aromatic vinyl compounds, heterocyclic vinyl compounds, aliphatic vinyl compounds, acrylic compounds, diene compounds and maleimide compounds.

Examples of the vinyl halide compound include vinyl chloride and vinyl fluoride. Examples of the aromatic vinyl compound include styrene, α-methylstyrene, p-dodecylstyrene and p-octadecylstyrene. Examples of the heterocyclic vinyl compound include vinylpyridine. Examples of the aliphatic vinyl compound include linear hydrocarbons having one double bond in the molecule, such as propene, butene, pentene, hexene, octane and dodecene. Examples of the acrylic compound include ethyl acrylate, butyl acrylate, 2-ethylhexyl acrylate, lauryl acrylate, methyl methacrylate, acrylic acid, methacrylic acid and acrylamide. Typical examples of the diene compound include butadiene. Examples of the maleimide compound include maleimide and N-substituted maleimide.

Examples of the cyano group-containing polymer compound composed of a copolymer of the vinyl group-containing monomer and the cyano group-containing monomer include acrylonitrile-styrene resin, acrylonitrile-butadiene resin and acrylonitrile-butadiene-styrene resin.

Solubility of the cyano group-containing polymer compound in a solvent can be controlled by copolymerizing these vinyl group-containing monomers with the cyano group-containing monomer. By selecting these vinyl group-containing monomers as a copolymerization component, it becomes possible to easily dissolve a polymer compound, which contains as a constituent unit polyacrylonitrile (SP value: 15.4) and/or polymethacrylonitrile (SP value: 10.7) having particularly high polarity, in commodity solvents having low polarity, such as toluene, MEK (methyl ethyl ketone) and acetone.

At the same time, selection of the vinyl group-containing monomer enables adjustment of chemical properties such that it can be served as a compatibilization moiety for controlling compatibility when the cyano group-containing polymer compound is mixed with an insulating resin, adjustment of thermal properties such as Tg (glass transition temperature) and adjustment of physical properties such as hardness.

Therefore, compatibility with a vinyl chloride resin, a vinylidene fluoride resin and a styrene resin can be improved by copolymerizing vinyl halides such as vinyl chloride and vinyl fluoride, and aromatic vinyl compounds such as α-methylstyrene. Also, it is possible to dissolve in commodity solvents such as toluene, MEK and acetone by copolymerizing with aliphatic vinyl compounds such as 1-hexene, 1-octene and 1-dodecene, and aromatic vinyl compounds such as p-dodecylstyrene and p-octadecylstyrene. Also, it is possible to decrease Tg and hardness by copolymerizing with heterocyclic vinyl compounds such as vinylpyridine, acrylic compounds such as ethyl acrylate, butyl acrylate, 2-ethylhexyl acrylate, methyl methacrylate, and diene compounds such as butadiene. To the contrary, it is possible to increase Tg and hardness by copolymerizing with acrylic compounds such as methacrylic acid and acrylamide, maleimides, and maleimide compounds such as N-substituted maleimide.

A copolymerization molar ratio of the cyano group-containing monomer to the vinyl group-containing monomer is preferably from 99:1 to 10:90.

When using a monomer having both a cyano group and a vinyl group in the cyano group-containing polymer compound, a molar ratio is calculated by regarding this monomer as the cyano group-containing monomer.

By adjusting the molar ratio of the cyano group-containing monomer to 99 or more, excellent heat resistance can be exhibited by increasing crosslink density when the conductive composition of the present aspect is used as a coating material or a resin to give a coating film or a molded article. By adjusting the molar ratio to 10 or more, solubility of the π-conjugated conductive polymer can be improved, thus making it possible to prepare a uniform conductive composition solution.

In case of copolymerizing the cyano group-containing monomer with the vinyl group-containing monomer, a conventional polymerization method used in the radical polymerization can be employed, and a solution polymerization method is a preferable polymerization method. As a polymerization initiator, any conventional polymerization initiator used in the radical polymerization can be used and azo-type initiators such as azobisisobutyronitrile, azobisvaleronitrile are preferable polymerization initiators.

[Curing Agent Capable of Reacting with Cyano Group]

The curing agent capable of reacting with a cyano group may be a compound having one of or two or more functional groups in a molecule, which can react with a cyano group of a cyano group-containing polymer compound in a solution or a resin when the cyano group-containing polymer compound coexist with the curing agent, thus making it possible to crosslink with the cyano group-containing polymer compound. Examples of the functional group capable of reacting with a cyano group include methylol group and chlorosulfon group. A compound having these functional groups can be used.

Bipolar compounds having a functional group such as nitron group, nitrile oxide group, nitrileimine group or sydnone group, metal oxides such as zinc oxide and copper sulfide, metal halides such as stannous chloride and zinc chloride, and organic metal salts and organic metal compounds such as copper acetylacetone can also be used because they have reactivity with a cyano group.

Since the first conductive composition contains a cyano group-containing polymer compound and a curing agent capable of reacting with a cyano group, the cyano group-containing polymer compound is cured by the curing agent when the composition is used as a coating material or a resin. Therefore, excellent heat resistance and solvent resistance can be exhibited in the resulting coating material or resin.

The conductive composition of the present aspect may contain synthetic rubber components for improving impact resistance, and age resistors, antioxidants and ultraviolet absorbers for improving environment-resistant characteristics. However, when amine compounds are used as antioxidants, an action of an oxidizing agent used to polymerize the n-conjugated conductive polymer may be inhibited. Therefore, phenolic compounds are used as antioxidants in place of amine compound, or it is necessary to mix after the polymerization when amine compounds are used.

[Dopant]

The π-conjugated conductive polymer is preferably mixed with a dopant so as to improve conductivity. That is, the composition of the present aspect preferably contain a dopant. As the dopant, halogen compounds, Lewis acids and proton acids are usually used. Examples of the halogen compound include chlorine, bromine, iodine, iodine chloride, iodine bromide and iodine fluoride. Examples of the Lewis acid include phosphorus pentafluoride, arsenic pentafluoride, lead pentafluoride, boron trifluoride, boron trichloride and boron tribromide.
Examples of the proton acid include inorganic acids such as hydrochloric acid, sulfuric acid, nitric acid, phosphoric acid, fluoroboric acid, hydrofluoric acid and perchloric acid; organic acids such as organic carboxylic acid and organic sulfonic acid; organic cyano compounds; and fullerenes such as fullerene, hydrogenated fullerene, fullerene hydroxide and sulfonated fullerene.
Examples of the organic carboxylic acid include acetic acid, benzoic acid, phthalic acid, and metal salts thereof can also be used.
Examples of the organic acid include p-toluenesulfonic acid, naphthalenesulfonic acid, alkylnaphthalenesulfonic acid, anthraquinonesulfonic acid and dodecylbenzenesulfonic acid, and metal salts thereof can also be used.
Examples of the organic cyano compound include tetracyanoethylene, tetracyanoethylene oxide, tetracyanobenzene, tetracyanoquinodimethane and tetracyanoazanaphthalene.
The dopant is preferably a bulky substance having a large molecular weight because it is excellent in stability at high temperature and is less likely to cause de-doping. Among the above compounds, naphthalenesulfonic acid, alkylnaphthalenesulfonic acid, anthraquinonesulfonic acid, polystyrenesulfonic acid, polyvinylsulfonic acid, polyallylsulfonic acid, tetracyanoquinodimethane, tetracyanoazanaphthalene, fullerene, hydrogenated fullerene, fullerene hydroxide and sulfonated fullerene are preferably used.

[Preparation Method]

In the preparation of the conductive composition of the present aspect, the cyano group-containing polymer compound is dissolved in a solvent, and an oxidizing agent is added dropwise to a system wherein the solution obtained is sufficiently mixing with a precursor monomer of a n-conjugated conductive polymer under stirring, thereby enabling the polymerization to proceed. Then, the oxidizing agent, the residual monomer and by-product are removed from the obtained complex of the cyano group-containing polymer compound and the conductive polymer, followed by purification and addition of curing agent which can react with cyano group to obtain a conductive composition.
As described above, the cyano group-containing polymer compound is soluble in a solvent and therefore it can be used after dissolving in the solvent. Particularly, when the cyano group-containing polymer compound is composed of a copolymer of a cyano group-containing monomer and a vinyl group-containing monomer, the SP value can be adjusted and therefore a solvent used for the compound can be selected from various solvents which dissolve the polymer compound. Examples of the solvent include hydrocarbon-based solvents containing a halogenated hydrocarbon, such as hexane, cyclohexane, toluene, xylene, benzene, styrene, dichloromethane and chloroform; alcohol-based solvents such as ethanol, butanol, isopropyl alcohol, cyclohexanol and lauryl alcohol; ether-based solvents such as diethyl ether, ethylene oxide, propylene oxide, furan and tetrahydrofuran; ketone-based solvents such as acetone, methyl ethyl ketone and cyclohexanone; ester-based solvents such as ethyl acetate, isobutyl acetate, vinyl acetate and butyrolactone; fatty acid-based solvents such as acetic anhydride and succinic anhydride; phenolic solvents such as m-cresol and nonylphenol; and nitrogen compounds such as nitromethane, nitrobenzene, N-methylformamide, N,N-dimethylformamide, N,N-dimethylacetamide, acetonitrile and N-methyl-2-pyrrolidone. These solvents may be used alone or in combination.
It is important to select a solvent which dissolves the cyano group-containing polymer compound and dissolves the precursor monomer of the n-conjugated conductive polymer and also dissolves the oxidizing agent, thereby enabling the reaction of the precursor monomer to proceed.
Regarding a ratio of the n-conjugated conductive polymer to the cyano group-containing polymer compound, a mass ratio of the cyano group-containing polymer compound to the π-conjugated conductive polymer is preferably from 5:95 to 99:1, and more preferably from 10:90 to 90:10. By adjusting the ratio of the n-conjugated conductive polymer to 1 or more, a composition having sufficient conductivity can be obtained. By adjusting the ratio of the conductive polymer to 95 or less, a composition having excellent solvent solubility can be obtained.
As the oxidizing agent which is used for polymerizing the π-conjugated conductive polymer, known oxidizing agents can be used. Examples thereof include metal halides such as ferric chloride, boron trifluoride and aluminum chloride; peroxides such as hydrogen peroxide and benzoyl peroxide; persulfates such as potassium persulfate, sodium persulfate and ammonium persulfate; ozone and oxygen.
The conductive composition thus obtained may be circulated or used alone, or may be dissolved in an organic solvent to give a coating material or mixed with a binder composed of an insulating binder resin (hereinafter referred to

as an "insulating binder resin") to give a conductive resin or a molded article as a product.

The insulating binder resin to be mixed is not specifically limited and is preferably a resin which is excellent in compatibility and dispersibility with the conductive composition and does not exhibit ionic conductivity. A mixture of one or more resins selected from acrylic resins, urethane-based resins, fluorine containing resins, imide-based resins and epoxy-based resins is a preferable resin.

it is preferred to adjust a difference in SP value between the cyano group-containing polymer compound and the insulating resin to 0 or more and 2 or less so as to satisfy compatibility between the cyano group-containing polymer compound and the insulating resin to be mixed. As described above, the composition of the cyano group-containing polymer compound can be easily controlled by selecting a vinyl group-containing monomer to be copolymerized with a cyano group-containing monomer.

The each SP value of the cyano group-containing polymer compound and the insulating resin can be determined as follows. That is, after conducting a dissolution test using various solvents having different SP values described below, the each SP value can be obtained as an average value of the SP values of solvents which dissolve resin and/or polymer. As a series of solvents used in the measurement of the SP value, for example, there can be used n-pentane (SP = 7.0), n-heptane (SP = 7.4), methylcyclohexane (SP = 7.8), toluene (SP = 8.9), tetralin (SP = 9.5), o-dichlorobenzene (SP = 10.0), 1-bromonaphthalene (SP = 10.6), nitroethane (SP = 11.1), acetonitrile (SP = 11.8), nitromethane (SP = 12.7), diethyl ether (SP = 7.4), diisobutyl ketone (SP = 7.8), butyl acetate (SP = 8.5), methyl propionate (SP = 8.9), dimethyl phthalate (SP = 10.7), carbonic acid-2,3-butylene (SP = 12.1), propylene carbonate (SP = 13.3), ethylene carbonate (SP = 14.7), 2-ethylhexanol (SP = 9.5), 4-methyl-2-pentanol (SP = 10.0), 2-ethyl-1-butanol (SP = 10.5), 1-pentanol (SP = 10.9), 1-butanol (SP = 11.4), 1-propanol (SP = 11.9), ethanol (SP = 12.7) and methanol (SP = 14.5).

A mixing ratio of the insulating binder resin to the conductive composition is decided by conductivity required to the product and a resistance value peculiar to the conductive composition, and therefore it is not be necessarily mentioned. However, they can be preferably mixed in any mixing ratio as far as inherent physical properties of the insulating binder are not adversely affected.

When the conductive resin is molded after dissolving in a solution, the solvent capable of dissolving the insulating binder resins is not specifically limited. There can be used any alcohol-based solvents, ketone-based solvents, ester-based solvents, hydrocarbon-based solvents and aromatic solvents which dissolve the above insulating binder resins.

[Molding Method]

A molded article may be obtained by dissolving a conductive resin in a solvent, molding the solution using a solution molding, application, coating, printing method, or the like, and removing the solvent while drying. In addition, a molded article may be obtained by melt-extruding a pelletized conductive resin, followed by melt-molding such as injection molding.

<Second Conductive Composition>

The second conductive composition can be obtained in the same manner as in case of the first conductive composition, except that a copolymer of a cyano group-containing monomer and a vinyl group-containing monomer having a functional group is used as the cyano group-containing polymer compound and a curing agent capable of reacting with a cyano group and/or the functional group is used as the curing agent. The second conductive composition can be used and molded in the same manner as in case of the first conductive composition.

Since the second conductive composition also contains a cyano group-containing polymer compound having a functional group and a curing agent capable of reacting with a cyano group or the functional group, the cyano group-containing polymer compound can be cured by the curing agent when the composition is dissolved in an organic solvent and be used as a coating or it is used after mixing with a resin. Therefore, excellent heat resistance and solvent resistance can be exhibited.

[Vinyl Group-Containing Monomer having Functional Group]

The vinyl group-containing monomer having a functional group may be a monomer which is copolymerizable with the cyano group-containing monomer exemplified for the first conductive composition, a functional group thereof reacts with a curing agent described hereinafter. Among vinyl group-containing monomers exemplified in the first conductive composition, vinyl halide compounds, acrylic compounds, diene compounds, maleimide compounds and the like can be used.

Copolymerization of the vinyl group-containing monomer with a cyano group-containing monomer enables the cyano group-containing polymer compound to crosslink a cyano group or a functional group in the molecule by a curing agent described hereinafter, and thus solvent resistance and heat resistance can be improved.

The functional group preferably comprises one or more kinds selected from sulfo group, carboxyl group, hydroxyl group, epoxy group and amino group in view of ease of copolymerization with the cyano group-containing monomer and good reactivity with the curing agent.

Examples of the vinyl compound having a functional group such as sulfo group, carboxyl group, hydroxyl group, epoxy group or amino group include carboxylic acid compounds such as acrylic acid and methacrylic acid; hydroxy compounds such as 2-hydroxyethyl acrylate, 2-hydroxypropyl acrylate and 4-hydroxybutyl acrylate; amide compounds such as acrylamide and methacrylamide; epoxy compounds such as glycidyl acrylate and glycidyl methacrylate; and sulfonic acid compounds such as vinylsulfonic acid, allylsulfonic acid and styrenesulfonic acid.

Therefore, examples of the cyano group-containing polymer compound comprising a vinyl group-containing monomer having a functional group include acrylonitrile-acrylic acid copolymer, acrylonitrile-methacrylic acid copolymer, acrylonitrile-2-hydroxyethyl acrylate copolymer, acrylonitrile-vinylsulfonic acid copolymer and acrylonitrile-styrenesulfonic acid copolymer.

[Curing Agent Capable of Reacting with Cyano Group and/or Functional Group]

Examples of the curing agent capable of reacting with a cyano group and/or a functional group include curing agents capable of reacting with a cyano group, curing agents capable of reacting with the functional group and curing agents having reactivity with both groups.

As the curing agent capable of reacting with a cyano group, there can be exemplified the same curing agents as those used in the first conductive composition.

The curing agent capable of reacting with the functional group may be a compound having one or more functional groups in a molecule, wherein the functional groups are capable of reacting with the aforementioned functional group of the polymer compound. Examples of the functional group capable of reacting with the functional group of the polymer compound include thiol group, methylol group, hydroxyl group, carboxyl group, amino group, epoxy group, isocyanate group, vinyl group and chlorosulfon group, and a compound having these functional groups can be used. The curing agent to be used is selected according to the functional group of the polymer compound. That is, for example, when the functional group is a carboxyl group, curing agents having a methylol group, amino group, epoxy group or isocyanate group can be used as the curing agent.

Examples of the curing agent having reactivity with both a cyano group and the functional group include curing agents having a group such as a methylol group and a chlorosulfon group, and compounds having these functional groups can be used. For example, when the functional group in the cyano group-containing polymer compound is a carboxyl group, curing agents having a methylol group can be used.

Cyano group-containing monomer, π-conjugated conductive polymer and their production, a method for preparing a coating material or a resin and the like, which are usable or preferably used in the second conductive composition, are the same as those descried in the first conductive composition.

(Best Mode of Third Aspect)

Embodiments of the present aspect will now be described in detail. The conductive composition of the present aspect is not limited to the following embodiments and examples.

[Conjugated Conductive Polymer]

In the conductive composition of the present aspect, an organic polymer having a conjugated main chain can be used as the conjugated conductive polymer.

Examples thereof include polypyrroles, polythiophenes, polyacetylenes, polyphenylenes, polyphenylenevinylenes, polyanilines, polyacenes, and copolymers thereof. Among these polymers, those composed of one or more conjugated five-membered heterocyclic compounds, which can be stable in an atmospheric air, are preferable in view of ease of polymerization and handling properties. Examples of the conjugated five-membered heterocyclic compound include polypyrroles and polythiophenes. The conjugated conductive polymer is more preferably a conjugated conductive polymer obtained by introducing a functional group such as alkyl group, carboxyl group, sulfonic acid group, alkoxyl group, ester residue, hydroxy group or cyano group into a conductive organic polymer having a conjugated main chain, in view of solubility in an organic solvent and dispersibility into a resin.

Specific examples of the conjugated conductive polymer include polypyrrole, poly 3-methylpyrrole, poly 3-butylpyrrole, poly 3-octylpyrrole, poly 3-decylpyrrole, poly 3,4-dimethylpyrrole, poly 3,4-dibutylpyrrole, poly 3-hydroxypyrrole, poly 3-methyl-4-hydroxypyrrole, poly 3-methoxypyrrole, poly 3-ethoxypyrrole, poly 3-octoxypyrrole, poly 3-carboxypyrrole, poly 3-methyl-4-carboxypyrrole, polythiophene, poly 3-methylthiophene, poly 3-butylthiophene, poly 3-octylthiophene, poly 3-decylthiophene, poly 3-dodecylthiophene, poly 3-methoxythiophene, poly 3-ethoxythiophene,

poly 3-octoxythiophene, poly 3-carboxythiophene, poly 3-methyl-4-carboxythiophene and poly 3,4-ethylenedioxythiophene.

The conjugated conductive polymer can be obtained from a polymerizable conjugated monomer in the presence of an oxidizing agent or an oxidation polymerization catalyst using a chemical oxidation polymerization method. As the monomer, for example, there can be used pyrrole and derivatives thereof, thiophene and derivatives thereof, and aniline and derivatives thereof. As the oxidizing agent, for example, there can be used peroxodisulfates such as ammonium peroxodisulfate, sodium peroxodisulfate and potassium peroxodisulfate; transition metal compounds such as ferric chloride and cupric chloride; metal oxides such as silver oxide and cesium oxide; peroxides such as hydrogen peroxide and ozone; organic peroxides such as benzoyl peroxide; and oxygen.

[Polyanion]

As the polyanion, those obtained by introducing an anion group capable of causing chemical oxidation doping in the conjugated conductive polymer can be used. Examples of the anion group include groups such as $-O-SO_3X$, $-O-PO(OX)_2$, - COOX and $-SO_3X$ (in the respective formulas, X represents a hydrogen atom or an alkali metal atom). In view of the doping effect to the conjugated conductive polymer, $-SO_3X$ and $-O-SO_3X$ are preferable (X is as defined above).

The polyanion may be a polymer composed only of an anionic polymerizable monomer. The polyanion is preferably a copolymer of an anionic polymerizable monomer and the other polymerizable monomer.

As the anionic polymerizable monomer, there can be used those in which an anion group such as $-O-SO_3X$, $-O-PO(OX)_2$, - COOX or $-SO_3X$ (X is as defined above) is substituted on a suitable moiety of a polymerizable monomer. Examples of the anionic polymerizable monomer include substituted or unsubstituted ethylenesulfonic acid compounds, substituted or unsubstituted styrenesulfonic acid compounds, substituted heterocyclic sulfonic acid compounds, substituted acrylamidesulfonic acid compounds, substituted or unsubstituted cyclovinylenesulfonic acid compounds, substituted or unsubstituted butadienesulfonic acid compounds and vinyl aromatic sulfonic acid compounds.

Specific examples of the substituted or unsubstituted ethylenesulfonic acid compound include vinylsulfonic acid, vinylsulfonic acid salt, allylsulfonic acid, allylsulfonic acid salt, metallylsulfonic acid, metallylsulfonic acid salt, 4-sulfobutyl methacrylate, 4-sulfobutyl methacrylate salt, metallyloxybenzenesulfonic acid, metallyloxybenzenesulfonic acid salt, allyloxybenzenesulfonic acid and allyloxybenzenesulfonic acid salt.

Specific examples of the substituted or unsubstituted styrenesulfonic acid compound include styrenesulfonic acid, styrenesulfonic acid salt, $\alpha$-methylstyrenesulfonic acid and $\alpha$-methylstyrenesulfonic acid salt.

Specific examples of the substituted acrylamidesulfonic acid compound include acrylamide-t-butylsulfonic acid, acrylamide-t-butylsulfonic acid salt, 2-acrylamide-2-methylpropanesulfonic acid and 2-acrylamide-2-methylpropanesulfonic acid salt.

Specific examples of the substituted or unsubstituted cyclovinylenesulfonic acid compound include cyclobutene-3-sulfonic acid and cyclobutene-3-sulfonic acid salt.

Specific examples of the substituted or unsubstituted butadienesulfonic acid compound include isoprenesulfonic acid, isoprenesulfonic acid salt, 1,3-butadiene-1-sulfonic acid, 1,3-butadiene-1-sulfonic acid salt, 1-methyl-1,3-butadiene-2-sulfonic acid, 1-methyl-1,3-butadiene-3-sulfonic acid salt, 1-methyl-1,3-butadiene-4-sulfonic acid and 1-methyl-1,3-butadiene-4-sulfonic acid salt.

Among these compounds, vinylsulfonic acid salt, styrenesulfonic acid, styrenesulfonic acid salt, isoprenesulfonic acid and isoprenesulfonic acid salt are preferable, and isoprenesulfonic acid and isoprenesulfonic acid salt are more preferable.

Examples of the other polymerizable monomer, which is copolymerizable with the anionic polymerizable monomer, include substituted or unsubstituted ethylene compounds, substituted acrylic acid compounds, substituted or unsubstituted styrenes, substituted or unsubstituted vinylamines, unsaturated group-containing heterocyclic compounds, substituted or unsubstituted acrylamide compounds, substituted or unsubstituted cyclovinylene compounds, substituted or unsubstituted butadiene compounds, substituted or unsubstituted vinyl aromatic compounds, substituted or unsubstituted divinylbenzene compounds, substituted vinylphenol compounds, optionally substituted silylstyrenes and optionally substituted phenol compounds.

Specific examples thereof include ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, 2-vinylnaphthalene, 6-methyl-2-vinylnaphthalene, 1-vinylimidazole, vinylpyridine, vinylacetate, acrylaldehyde, acrylonitrile, N-vinyl-2-pyrrolidone, acrylamide, N,N-dimethylacrylamide, methyl acrylate, ethyl acrylate, propyl acrylate, butyl acrylate, isobutyl acrylate, isooctyl acrylate, isononylbutyl acrylate, allyl acrylate, ethyl methacrylate, hydroxyethyl acrylate, methoxyethyl acrylate, methoxybutyl acrylate, stearyl acrylate, acrylic acid ester, acryloyl morpholine, vinylamine, N,N-dimethylvinylamine, N,N-diethylvinylamine, N,N-dibutylvinylamine, N,N-di-t-butylvinylamine, N,N-diphenylvinylamine, N-vinyl carbazole, vinyl alcohol, vinyl chloride, vinyl fluoride, vinyl ether, cyclopropene, cyclobutene, cyclopentene, cyclohexene, cycloheptene, cyclooctene, 2-methylcyclohexene, vinylphenol, 1,3-butadiene, 1-methyl-1,3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene, 2-hydroxy-1,3-butadiene, allyl acrylate, acrylamideallyl, divinyl ether, o-divinylbenzene, m-divinylbenzene and p-divinylbenzene. Among these compounds, 1-butene, vinylphenol, butyl acrylate, N-vinyl-2-pyrrolidone and 1,3-butadiene are preferable.

The polyanion can be obtained from the anionic polymerizable monomer and/or the other polymerizable monomer in the presence of an oxidizing agent and/or an oxidation polymerization catalyst using a chemical oxidation polymerization method.

As the oxidizing agent, for example, there can be used peroxodisulfates such as ammonium peroxodisulfate, sodium peroxodisulfate and potassium peroxodisulfate; transition metal compounds such as ferric chloride, ferric sulfate and cupric chloride; metal oxides such as silver oxide and cesium oxide; peroxides such as hydrogen peroxide and ozone; organic peroxides such as benzoyl peroxide; and oxygen.

Among these oxidizing agents, polyisoprenesulfonic acid or a copolymer of isoprenesulfonic acid is preferable.

[Electron-Withdrawing Functional Group-Containing Polymer]

As the electron-withdrawing functional group-containing polymer, any polymer can be used as far as an electron-withdrawing functional group such as a cyano group, halogen such as fluorine, chlorine or bromine, carbonyl group and hydroxyl group are introduced into a polymer. In view of electron-withdrawing properties and solvent solubility, an electron-withdrawing functional group is preferably a cyano group, a fluorine or a carbonyl group. Specific examples of preferable electron-withdrawing functional group-containing polymer include polyacrylonitrile, polyvinylidene fluoride and polyparabanic acid.

[Cluster Derivative]

The conductive composition of the present aspect contains a cluster derivative in which an anion group is introduced into carbon atoms of a cluster molecule containing carbon as a main component (hereinafter referred to as a carbon cluster molecule).

The carbon cluster molecule refers to an aggregate formed of several carbon atoms to hundreds of carbon atom bonded with each other, regardless of the kind of a carbon-carbon bond. This carbon cluster molecule is not necessarily limited to those composed only of carbon atoms and may contain heteroatoms. When carbon atoms account for the half or more of the total atoms in the carbon cluster molecule, an electronic structure of the carbon cluster can be maintained. Therefore, when heteroatoms exist, heteroatoms account for the half or less of carbon atoms.

Examples of the carbon cluster molecule include spherical or spheroidal (prolate spheroid) carbon cluster molecule having a planar structure in which a large number of carbon atoms form a closed structure, cage-like carbon cluster molecule as a spherical cluster molecule wherein a portion of a spherical structure defects, tubular carbon cluster molecule, and scaly carbon cluster molecule having a planar structure. Among these carbon cluster molecules, cage-like carbon cluster molecule, spherical carbon cluster molecule and tubular carbon cluster molecule are preferably used.

Examples of the spherical or spheroidal carbon cluster molecule include monofullerenes such as $C_{36}$, $C_{60}$, $C_{70}$, $C_{76}$, $C_{78}$, $C_{80}$, $C_{82}$, $C_{84}$, $C_{90}$, $C_{94}$, $C_{96}$, $C_{120}$ and $C_{180}$ fullerenes; hydrogenated fullerenes such as $C_{60}H_8$, $C_{60}H_{10}$, $C_{60}H_{12}$, $C_{60}H_{20}$, $C_{60}H_{32}$ and $C_{60}H_{36}$ fullerenes; fullerene hydroxides such as $C_{60}(OH)_6$, $C_{60}(OH)_8$, $C_{60}(OH)_{10}$ and $C_{60}(OH)_{12}$ fullerene hydroxides; halogenated fullerenes such as $C_{60}Br_2$, $C_{60}Br_6C_{60}F_6$ and $C_{60}F_{12}$ halogenated fullerenes, and mixtures including two or more thereof.

Since the cage-like carbon cluster molecule which is a spherical cluster molecule defective in a portion has an electronic structure and reactivity of the spherical carbon cluster molecule and also have very high reactivity in the defective portion, a functional group such as anion group can be easily introduced. Therefore, the cage-like carbon cluster molecule can be preferably used as compared with the spherical and spheroidal carbon cluster molecules.

Moreover, almost all of cage-like carbon cluster molecules are produced as by-product in a large amount when the spherical carbon cluster molecule is produced, and can be obtained in a large amount at reasonable price as compared with the spherical carbon cluster molecule. Therefore, the cage-like carbon cluster molecule is most preferable in view of characteristics, production cost, production conditions and the like. Although the number of carbon atoms in the cluster molecule is not defined, a mixture of two or more kinds of carbon cluster molecules having 30 to 70 carbon atoms is preferable in view of ease of introduction of a functional group and molecular size. It is more preferable that 2 to 20 hydrogen or other atoms are substituted in a carbon cluster molecule mixture.

Examples of the tubular carbon cluster molecule include carbon nano-tube (CNT) such as single-wall carbon nano-tube (SWCNT) or multi-wall carbon nano-tube (MWCNT), and carbon nanofiber (CNF).

Although the size of the carbon cluster derivative is not specifically defined, the length of a major axis is preferably 100 nm or less so as to dope to the conjugated conductive polymer. The length is more preferably 30 nm or less taking accounts of dispersion into the organic solvent or organic resin component.

The carbon cluster molecule can be synthesized by using a known resistance heating method, arc discharge method, microwave method, high-frequency heating method, CVD method, thermal plasma methed, combustion method, laser vaporization method or thermal decomposition method. Among these methods, combustion and arc discharge methods are preferable because a large amount of carbon cluster molecule can be produced at low cost.

As the anion group of the carbon cluster derivative, groups such as $-O-SO_3X$, $-O-PO(OX)_2$, -COOX and $-SO_3X$ (in the respective formulas, X represents a hydrogen atom or an alkali metal atom) can be used. Among these groups, $-SO_3X$, $-O-SO_3X$ and -COOX are preferable in view of the doping effect to the conjugated conductive polymer, and $-SO_3X$ and $-O-SO_3X$ are more preferable (X is as defined above). These anion groups may be used alone or in combination.

A desired anion group among these anion groups can be easily introduced into a desired carbon cluster molecule by subjecting the carbon cluster molecule or derivatives thereof to optional combination of known treatment methods such as halogen treatment, acid treatment, hydrolysis and esterification. Thus, a carbon cluster derivative as the objective product can be easily obtained.

For example, when a halogenated spherical or hydrolxylated spherical carbon cluster molecule is used as a starting material and then subjected to an acid treatment using an acid such as sulfuric acid or phosphoric acid, a $-O-SO_3H$ group and/or a $-O-PO(OH)_2$ group can be easily introduced. When a hydrogenate spherical or cage-like carbon cluster molecule is used as a starting material and then subjected to an acid treatment using sulfuric acid, a $-SO_3H$ group can be easily introduced.

At least one of anion group can be introduced onto the carbon cluster derivative. When the number of the anion group to be introduced is too small, sufficient doping effect with the conjugated conductive polymer is not exerted. Therefore, the number of the anion group to be introduced is preferably 2 or more, and more preferably from 5 to 20.

The conductive composition can be obtained from the polyanion, the polymerizable conjugated monomer and the anion-substituted carbon cluster derivative in the presence of an oxidizing agent or an oxidation polymerization catalyst by using an oxidation polymerization method.

As the oxidizing agent, for example, there can be used peroxodisulfates such as ammonium peroxodisulfate, sodium peroxodisulfate and potassium peroxodisulfate; transition metal compounds such as ferric chloride and cupric chloride; metal oxides such as silver oxide and cesium oxide; peroxides such as hydrogen peroxide and ozone; organic peroxides such as benzoyl peroxide; and oxygen. It is preferred that the oxidation polymerization catalyst such as oxidizing agent is not remained in the conductive composition. The oxidation polymerization catalyst and residual ions can be removed by washing with water after the polymerization.

To improve film strength, environment-resistant characteristics and adhesion to base material of a coating film of the conductive composition according to the present aspect, organic resin components other than the conductive composition can be added. As the organic resin component, a thermosetting resin and a thermoplastic resin can be used as far as they are compatible with or dispersible in the conductive composition. Examples thereof include polyester-based resins such as polyethylene terephthalate, polybutylene terephthalate and polyethylene naphthalate; polyimide-based resins such as polyimide and polyamideimide; polyamide resins such as polyamide 6, polyamide 66, polyamide 12 and polyamide 11; fluororesins such as polyvinylidene fluoride, polyvinyl fluoride, polytetrafluoroethylene, ethylene tetrafluoroethylene copolymer and polychlorotrifluoroethylene; vinyl resins such as polyvinyl alcohol, polyvinyl ether, polyvinyl butyral, polyvinyl acetate and polyvinyl chloride; epoxy resin, xylene resin, aramid resin, polyurethane-based resin, polyurea-based resin, melamine resin, phenolic resin, polyether, acrylic resin, and copolymers thereof.

The conductive composition can be dispersed in the organic resin component by mixing a solvent with a solution prepared by dissolving or dispersing the conductive composition and the organic resin component, and dispersing the solution mixture using a suitable method. To obtain uniform mixing and dispersion, there can be preferably used a method such as dispersion with mixing under stirring or jet dispersion.

The solvent is not specifically limited. It may be a solvent which can dissolve or disperse the conjugated conductive polymer and the oxidation inhibiting component. Examples of the solvent include polar solvents such as water, N-methyl-2-pyrrolidone, N,N'-dimethylformamide, N,N'-dimethylacetamide, dimethyl sulfoxide and hexamethylenephosphotriamide; phenols such as cresol, phenol and xylenol; alcohols such as methanol, ethanol, propanol and butanol; ketones such as acetone and methyl ethyl ketone; hydrocarbons such as hexane, benzene and toluene; and carboxylic acids such as formic acid and acetic acid. If necessary, these solvents can be used alone or in combination, or a mixture with the other organic solvent may be used.

To adjust electrical conductivity of the conductive composition, the conductive composition can be doped with an acceptable or donative dopant, if necessary.

As the acceptable dopant, halogen compounds, Lewis acids, proton acids, organic sulfonic acids, organic cyano compounds, organic metal compounds and the like can be used. Taking accounts of ion contamination and the like, organic cyano compounds are preferable.

As the organic cyano compound, compounds containing two or more cyano groups in a conjugated bond can be used. Examples of the organic cyano compound include tetracyanoethylene, tetracyanoethylene oxide, tetracyanobenzene, tetracyanoquinodimethane and tetracyanoazanaphthalene.

In the conductive composition according to the present aspect, the content of an anion group and/or an electron-withdrawing functional group in the polyanion and/or the electron-withdrawing functional group-containing polymer based on the conjugated conductive polymer is preferably from 1 to 300 mols, and more preferably from 10 to 100 mols, based on 100 mols of the conjugated conductive polymer. The content of a cluster derivative based on the conjugated conductive polymer is preferably from 0.1 to 500 parts by mass, and more preferably from 30 to 200 parts by mass, based on 100 parts by mass of the conjugated conductive polymer. By using 0.1 parts by mass or more of the cluster derivative, the doping effect to the conjugated conductive polymer and heat resistance of the conductive composition can be improved. By using 500 parts by mass or less of the cluster derivative, a composition having well-balanced characteristics can be obtained, without that characteristics such as conductivity, solubility and compatibility of the conductive composition are excessively affected by characteristics of the cluster derivative.

The conductive composition according to the present aspect can exhibit excellent heat resistance and low ion contamination by imparting the doping effect of doping the conjugated conductive polymer using the cluster derivative.

Since a portion of electrons in the electron-withdrawing functional group-containing polymer is drawn by an electron-withdrawing group, electronic energy of the entire polymer can be decreased. Consequently, the polymer exhibits acceptability and the doping effect to the conjugated conductive polymer is exerted. Since the electron-withdrawing functional group-containing polymer and the anion group have the doping effect to the conjugated conductive polymer, either or both of them may be used. In view of the doping effect, it is preferred to use the polyanion in the larger amount.

In the present aspect, since the composition contains the conjugated conductive polymer, the carbon cluster derivative containing the anion group introduced therein, and the polyanion and/or electron-withdrawing functional group-containing polymer as constituent components, high conductivity and excellent heat resistance can be exhibited.

(Best Mode of Fourth Aspect)

The present aspect is directed to a conductive composition containing a polyanion and a conjugated conductive polymer, and a method for preparing the same.

[Conductive Composition]

The conductive composition of the present aspect contains a polyanion (A) in which an anion group is bonded with a main chain via an ester group, and a conjugated conductive polymer (B). One of or two or more polyanions (A) and conjugated conductive polymers (B) can be used, respectively.

The composition of the present aspect is preferably obtained by chemical oxidation polymerization of a monomer of the conjugated conductive polymer (B) in the presence of the polyanion (A).

In the composition of the present aspect, the conjugated conductive polymer (B) exhibits high electrical conductivity and is also excellent in solvent solubility and compatibility with the other resin. The reason is considered as follows.

When chemical oxidation polymerization of the monomer of the conjugated conductive polymer (B) is conducted in the presence of the polyanion (A), as the main chain of the conjugated conductive polymer (B) grows, the conjugated conductive polymer (B) is doped with an anion group of the polyanion (A) to produce a salt with the conjugated conductive polymer (B) and the group. Particularly, when the anion group is an anion group such as sulfonic acid group, a strong ionic bond is formed. Consequently, the conjugated conductive polymer (B) is strongly drawn to the main chain of the polyanion (A) and the main chain of the conjugated conductive polymer (B) grows along the main chain of the polyanion (A) to obtain a regularly arranged conjugated conductive polymer (B). The conjugated conductive polymer (B) thus synthesized reacts with the polyanion (A) to produce a huge number of salts, which are fixed to the main chain of the polyanion (A).

In the present aspect, it is considered that, by allowing an ester group to exist between a main chain and an anion group in the polyanion (A), solvent solubility of the conjugated conductive polymer (B) integrated with the polyanion (A) and compatibility with the other resin are noticeably improved by excellent solvent solubility of the ester group and excellent compatibility with the other resin.

In the present aspect, the use of the polyanion (A) having an ester group enables excellent stability of electrical conductivity to the external environment as well as remarkably excellent heat resistance, moisture resistance and long-term stability.

That is, it is considered that the following process arises. The ester group has such a property that it is chemically unstable in an acid or a base and is likely to be hydrolyzed. For example, the ester group is converted into carboxylic acid as a result of hydrolysis in an acidic state and is therefore stabilized. In the conductive composition, before the conjugated conductive polymer (B) is attacked by a radical generated in a high temperature environment, an ester of

the polyanion (A) having weak bond energy is attacked in place of the conjugated conductive polymer. Accordingly, the radical disappears and thus the conjugated conductive polymer is stabilized and deterioration of the conjugated conductive polymer (B) bearing electrical conductivity due to heat is suppressed.

By the same reason, when the ester group of the polyanion (A) is sacrificed to the reoxidation reaction due to the oxidizing agent and the like and/or attack due to protons generated by the dehydrogenation reaction of the reactive monomer, the production of a polymer having low electrical conductivity is suppressed and excellent conjugated conductive polymer (B) having high electrical conductivity is prepared in a stable manner.

[Polyanion (A)]

A basic skeleton of the polyanion (A) is not specifically limited and examples thereof include polyalkylene, polyalkenylene, polyimide, polyamide and polyester (these compounds may have a substituent).

The polyalkylene contains a methylene group as a repeating unit in a main chain. Specific examples thereof include polyethylene, polypropylene, polybutene, polypentene, polyhexene, polyvinyl alcohol, polyvinyl phenol, poly 3,3,3-trifluoropropylene, polyacrylonitrile, poly(meth)acrylate, polystyrene, and copolymers thereof. In the present aspect, poly(meth)acrylate and/or a copolymer thereof are preferably used.

The polyalkenylene is a polymer comprising a constituent unit containing one or more unsaturated bonds in a main chain.

Examples of the constituent unit include propenylene, 1-methyl-propenylene, 1-butyl-propenylene, 1-decyl-propenylene, 1-cyano-propenylene, 1-phenyl-propenylene, 1-hydroxy-propenylene, 1-butenylene, 1-methyl-1-butenylene, 1-ethyl-1-butenylene, 1-octyl-1-butenylene, 1-pentadecyl-1-butenylene, 2-methyl-1-butenylene, 2-ethyl-1-butenylene, 2-butyl-1-butenylene, 2-hexyl-1-butenylene, 2-octyl-1-butenylene, 2-decyl-1-butenylene, 2-dodecyl-1-butenylene, 2-phenyl-1-butenylene, 2-butenylene, 1-methyl-2-butenylene, 1-ethyl-2-butenylene, 1-octyl-2-butenylene, 1-pentadecyl-2-butenylene, 2-methyl-2-butenylene, 2-ethyl-2-butenylene, 2-butyl-2-butenylene, 2-hexyl-2-butenylene, 2-octyl-2-butenylene, 2-decyl-2-butenylene, 2-dodecyl-2-butenylene, 2-phenyl-2-butenylene, 2-propylenephenyl-2-butenylene, 3-methyl-2-butenylene, 3-ethyl-2-butenylene, 3-butyl-2-butenylene, 3-hexyl-2-butenylene, 3-octyl-2-butenylene, 3-decyl-2-butenylene, 3-dodecyl-2-butenylene, 3-phenyl-2-butenylene, 3-propylenephenyl-2-butenylene, 2-pentenylene, 4-propyl-2-pentenylene, 4-propyl-2-pentenylene, 4-butyl-2-pentenylene, 4-hexyl-2-pentenylene, 4-cyano-2-pentenylene, 3-methyl-2-pentenylene, 4-ethyl-2-pentenylene, 3-phenyl-2-pentenylene, 4-hydroxy-2-pentenylene and hexenylene.

Examples of the polyimide include condensates of acid anhydrides such as pyromellitic dianhydride, biphenyltetracarboxylic dianhydride, benzophenonetetracarboxylic dianhydride, 2,2,3,3-tetracarboxydiphenyl ether dianhydride and 2,2-[4,4'-di(dicarboxyphenyloxy)phenyl]propane dianhydride with diamines such as oxydianiline, paraphenylenediamine, metaphenylenediamine and benzophenonediamine.

Examples of the polyamide include polyamide 6, polyamide 6,6, polyamide 6,10, polyamide 6,12, polyamide 11, polyamide 12, and copolymers thereof.

Examples of the polyester include polyvinyl ester, polyethylene terephthalate, polybutylene terephthalate, and copolymers thereof.

The polyanion (A) is that in which an anion group is bonded with a main chain via an ester group, but may optionally contain the other substituent at the portion where an anion group of the main chain is not bonded. Furthermore, a substituent may be further introduced into the substituent bonded with the main chain.

The substituent is not specifically limited and examples thereof include alkyl group, hydroxy group, carboxyl group, cyano group, phenyl group, hydroxyphenyl group, alkoxy group and carbonyl group. One or more substiteunts can be introduced.

Among these substituents, an alkyl group is excellent in solubility or dispersibility in a polar or nonpolar solvent, and compatibility with or dispersibility in the other resin. A hydroxy group easily forms a hydrogen bond with a hydrogen atom and is excellent in solubility in an organic solvent as well as compatibility with, dispersibility in and adhesion to the other resin. A cyano group and a hydroxyphenyl group are excellent in compatibility with and solubility in a polar resin and are also excellent in heat resistance. Therefore, these substituents are preferably introduced. Particularly, alkyl group, hydroxy group and cyano group are preferably introduced.

Examples of the alkyl group include noncyclic alkyl groups such as methyl group, ethyl group, propyl group, n-butyl group, i-butyl group, t-butyl group, pentyl group, hexyl group, octyl group, decyl group and dodecyl group; and cyclic alkyl groups such as cyclopropyl group, cyclopentyl group and cyclohexyl group. Among these alkyl groups, an alkyl group having 1 to 12 carbon atoms is preferable taking accounts of solubility in an organic solvent, dispersibility in a resin and steric hindrance.

Examples of the aspect of introduction of a hydroxy group include aspect in which a hydroxy group is directly bonded with a main chain of a polyanion, aspect in which a hydroxy group is bonded with the end of an alkyl group having 1 to 7 carbon atoms bonded with a main chain of a polyanion, and aspect in which a hydroxy group is bonded

with the end of an alkenyl group having 2 to 7 carbon atoms bonded with a main chain of a polyanion. Among these aspects, an aspect in which a hydroxy group is bonded with the end of an alkyl group having 1 to 6 carbon atoms bonded with a main chain of a polyanion is preferable in view of solubility in an organic solvent and compatibility with the other resin.

Similarly, examples of the aspect of introduction of a cyano group include aspect in which a cyano group is directly bonded with a main chain of a polyanion, aspect in which a cyano group is bonded with the end of an alkyl group having 1 to 7 carbon atoms bonded with a main chain of a polyanion, and aspect in which a cyano group is bonded with the end of an alkenyl group having 2 to 7 carbon atoms bonded with a main chain of a polyanion.

Similarly, examples of the aspect of introduction of a hydroxyphenyl group include aspect in which a hydroxyphenyl group is directly bonded with a main chain of a polyanion, aspect in which a hydroxyphenyl group is bonded with the end of an alkyl group having 1 to 6 carbon atoms bonded with a main chain of a polyanion, and aspect in which a hydroxyphenyl group is bonded with the end of an alkenyl group having 2 to 6 carbon atoms bonded with a main chain of a polyanion.

The kind and introduction aspect of an ester group, which exists between a main chain and an anion group, is not specifically limited. Examples thereof include alkyl-based ester group or aromatic ester group bonded directly with a main chain of a polyanion, and an alkyl-based ester group or aromatic ester group bonded to a main chain via the other functional group such as alkylene group, aromatic ring, alkenylene group and the like (which may have a substituent).

In the present aspect, the polyanion (A) must have an ester group between a main chain and an anion group, and an ester group bonded with no anion group may be introduced, if necessary.

The anion group is not specifically limited and is preferably a group represented by the general formula: $-O-SO_3^-X^+$, $-SO_3^-X^+$, $-O-PO_2^-X^+$ or $-COO^-X^+$ (in the respective formulas, X represents a hydrogen atom or an alkali metal atom). Among these groups, a sulfonic acid group is preferable because it is excellent in dopant effect and forms a strong ionic bond with the conjugated conductive polymer (B) .

The aspect of bonding of an anion group with an ester group is not specifically limited and examples thereof include direct bond and direct bond via the other functional group such as alkylene group, aromatic ring or alkenylene group (which may have a substituent). Particularly, when the anion group is bonded with the ester group via the other functional group such as alkylene group, aromatic ring or alkenylene group (which may have a substituent), the main chain of the conjugated conductive polymer (B) can be removed from the main chain of the polyanion (A) and thus sufficient solvent solubility of the polyanion (A) and compatibility with a resin can be secured, preferably.

In the present aspect, the polyanion (A) must have an anion group bonded with an ester group, but may have an ester group bonded with no anion group, if necessary.

The polyanion (A) is obtained, for example, by (1) anionization of a polymer compound having an ester group in a side chain, (2) esterification and anionization of a polymer compound having a carboxylic acid group in a side chain, or (3) polymerization of a polymerizable monomer (MX) having an ester group bonded with an anion group.

(1) Examples of the anionization of a polymer compound having an ester group in a side chain include transesterification using an anion group-containing compound, introduction of a sulfonic acid group or a sulfuric acid group due to fuming sulfuric acid or concentrated sulfuric acid, introduction of a sulfonic acid group due to a sulfonic acid compound and introduction of a phosphoric acid group due to phosphoric acid.

(2) Examples of the esterification and anionization of a polymer compound having a carboxylic acid group include esterification due to reaction of carboxylic acid group of poly(meth)acrylate or a copolymer thereof with an anion group-containing hydroxy compound or the like.

(3) When the polyanion (A) is polymerized, a monomer (MY) other than the polymerizable monomer (MX) can also be copolymerized for the purpose of improving solvent solubility, compatibility with the other resin and film forming properties. The polymerization method is not specifically limited and includes a method of dissolving or dispersing a raw monomer (including a monomer mixture) in a solvent and polymerizing the monomer solution in the presence of an oxidizing agent and/or an oxidation polymerization catalyst.

Examples of the polymerizable monomer (MX) include, but are not limited to, ethyl acrylate sulfonic acid ($CH_2CH-COO-(CH_2)_2-SO_3H$) and a salt thereof ($CH_2CH-COO-(CH_2)_2-SO_3-X^+$), propyl acrylate sulfonic acid ($CH_2CH-COO-(CH_2)_3-SO_3H$) and a salt thereof ($CH_2CH-COO-(CH_2)_3-SO_3^-X^+$), acrylic acid-t-butylsulfonic acid ($CH_2CH-COO-C(CH_3)_2CH_2-SO_3H$) and a salt thereof ($CH_2CH-COO-C(CH_3)_2CH_2-SO_3^-X^+$), acrylic acid-n-butylsulfonic acid ($CH_2CH-COO-(CH_2)_4-SO_3H$) and a salt thereof ($CH_2CH-COO-(CH_2)_4-SO_3^-X^+$), ethyl allylate sulfonic acid ($CH_2CHCH_2-COO-(CH_2)_2-SO_3H$) and a salt thereof ($CH_2CHCH_2-COO-(CH_2)_2-SO_3^-X^+$), allylic acid-t-butylsulfonic acid ($CH_2CHCH_2-COO-C(CH_3)_2CH_2-SO_3H$) and a salt thereof ($CH_2CHCH_2-COO-C(CH_3)_2CH_2-SO_3^-X^+$), ethyl 4-pentenoate sulfonic acid ($CH_2CH(CH_2)_2-COO-(CH_2)_2-SO_3H$) and a salt thereof ($CH_2CH(CH_2)_2-COO-(CH_2)_2-SO_3^-X^+$), propyl 4-pentenoate sulfonic acid ($CH_2CH(CH_2)_2-COO-(CH_2)_3-SO_3H$) and a salt thereof ($CH_2CH(CH_2)_2-COO-(CH_2)_3-SO_3^-X^+$), 4-pentenoic acid-n-butylsulfonic acid ($CH_2CH(CH_2)_2-COO-(CH_2)_4-SO_3H$) and a salt thereof ($CH_2CH(CH_2)_2-COO-(CH_2)_4-SO_3^-X^+$), 4-pentenoic acid-t-butylsulfonic acid ($CH_2CH(CH_2)_2-COO-C(CH_3)_2CH_2-SO_3H$) and a salt

thereof ($CH_2CH(CH_2)_2$-COO-$C(CH_3)_2CH_2$-$SO_3^-X^+$), phenylene 4-pentenoate sulfonic acid ($CH_2CH(CH_2)_2$-COO-$C_6H_4$-$SO_3H$) and a salt thereof ($CH_2CH(CH_2)_2$-COO-$C_6H_4$-$SO_3^-X^+$), naphthalene 4-pentenoate sulfonic acid ($CH_2CH(CH_2)_2$-COO-$C_{10}H_8$-$SO_3H$) and a salt thereof ($CH_2CH(CH_2)_2$-COO-$C_{10}H_8$-$SO_3^-X^+$), ethyl methacrylate sulfonic acid ($CH_2C(CH_3)$-COO-$(CH_2)_2$-$SO_3H$) and a salt thereof ($CH_2C(CH_3)$-COO-$(CH_2)_2$-$SO_3^-X^+$), propyl methacrylate sulfonic acid ($CH_2C(CH_3)$-COO-$(CH_2)_3$-$SO_3H$) and a salt thereof ($CH_2C(CH_3)$-COO-$(CH_2)_3$-$SO_3^-X^+$), methacrylic acid-t-butylsulfonic acid ($CH_2C(CH_3)$-COO-$C(CH_3)_2CH_2$-$SO_3H$) and a salt thereof ($(CH_2)C(CH_3)$-COO-$C(CH_3)_2CH_2$-$SO_3^-X^+$), methacrylic acid-n-butylsutfonic acid ($CH_2C(CH_3)$-COO-$(CH_2)_4$-$SO_3H$) and a salt thereof ($CH_2C(CH_3)$-COO-$(CH_2)_4$-$SO_3^-X^+$), phenylene methacrylate sulfonic acid ($CH_2C(CH_3)$-COO-$C_6H_4$-$SO_3H$) and a salt thereof ($CH_2C(CH_3)$-COO-$C_6H_4$-$SO_3^-X^+$), and naphthalene methacrylate sulfonic acid ($CH_2C(CH_3)$-COO-$C_{10}H_8$-$SO_3H$) and a salt thereof ($CH_2C(CH_3)$-COO-$C_{10}H_8$-$SO_3^-X^+$) (in the respective formulas, X represents a hydrogen atom or an alkali metal atom). These polymerizable monomers can be used alone or in combination.

Examples of the polymerizable monomer (MY) which is optionally used in combination include, but are not limited to, ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, $\alpha$-methylstyrene, 2-vinylnaphthalene, 6-methyl-2-vinylnaphthalene, 1-vinylimidazole, vinylpyridine, vinyl acetate, acrylaldehyde, acrylnitrile, N-vinyl-2-pyrrolidone, N-vinylacetamide, N-vinylformamide, N-vinylimidazole, acrylamide, N,N-dimethylacrylamide, (meth)acrylic acid, methyl(meth)acrylate, ethyl(meth)acrylate, propyl(meth)acrylate, n-butyl(meth)acrylate, i-butyl(meth)acrylate, t-butyl(meth)acrylate, i-octyl(meth)acrylate, i-nonylbutyl(meth)acrylate, 2-ethylhexyl(meth)acrylate, lauryl(meth)acrylate, allyl(meth)acrylate, tridecyl(meth)acrylate, stearyl(meth)acrylate, isobornyl(meth)acrylate, cyclohexyl(meth)acrylate, benzyl(meth)acrylate, ethylcarbitol(meth)acrylate, phenoxyethyl(meth)acrylate, 2-hydroxyethyl(meth)acrylate, 2-hydroxypropyl(meth)acrylate, methoxyethyl(meth)acrylate, ethoxyethyl(meth)acrylate, methoxybutyl(meth)acrylate, acryloyl morpholine, vinylamine, N,N-dimethylvinylamine, N,N-diethylvinylamine, N,N-dibutylvinylamine, N,N-di-t-butylvinylamine, N,N-diphenylvinylamine, N-vinyl carbazole, vinyl alcohol, vinyl chloride, vinyl fluoride, methyl vinyl ether, ethyl vinyl ether, cyclopropene, cyclobutene, cyclopentene, cyclohexene, cycloheptene, cyclooctene, 2-methylcyclohexene, vinylphenol, 1,3-butadiene, 1-methyl-1,3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene, 2-hydroxy-1,3-butadiene, vinylsulfonic acid and a salt thereof, allylsulfonic acid and a salt thereof, methacrylsulfonic acid and a salt thereof, styrenesulfonic acid and a salt thereof, methacryloxybenzenesulfonic acid a and a salt thereof, allyloxybenzenesulfonic acid and a salt thereof, $\alpha$-methylstyrenesulfonic acid and a salt thereof, acrylamide-t-butylsulfonic acid and a salt thereof, 2-acrylamide-2-methylpropanesulfonic acid and a salt thereof, cyclobutene-3-sulfonic acid and a salt thereof, isoprenesulfonic acid and a salt thereof, 1,3-butadiene-1-sulfonic acid and a salt thereof, 1-methyl-1,3-butadiene-2-sulfonic acid and a salt thereof, and 1-methyl-1,3-butadiene-4-sulfonic acid and a salt thereof. The (meth)acrylic acid in the context is a general term which indicates acrylic acid, methacrylic acid and the like.

The solvent used for the polymerization is not specifically limited as far as it dissolves or disperses a raw monomer and does not adversely affect oxidizability of the oxidizing agent and/or the oxidation catalyst. Examples of the solvent include polar solvents such as water, N-methyl-2-pyrrolidone, N,N'-dimethylformamide, N,N'-dimethylacetamide, dimethyl sulfoxide, hexamethylene phosphortriamide, acetonitrile and benzonitrile; phenols such as cresol, phenol and xylenol; alcohols such as methanol, ethanol, propanol and butanol; ketones such as acetone and methyl ethyl ketones; hydrocarbons such as hexane, benzene and toluene; and carboxylic acids such as formic acid and acetic acid. These solvents can be used alone or in combination.

The oxidizing agent and the oxidation polymerization catalyst are not specifically limited as far as they oxidize the raw monomer. Examples thereof include peroxodisulfates such as platinum catalyst, ammonium peroxodisulfate, sodium peroxodisulfate and potassium peroxodisulfate; transition metal compounds such as ferric chloride, ferric sulfate, ferric nitrate and cupric chloride; metal oxides such as silver oxide and cesium oxide; peroxides such as hydrogen peroxide and ozone; organic peroxides such as benzoyl peroxide; and oxygen.

(Conjugated Conductive Polymer (B))

The conjugated conductive polymer (B) is not specifically limited as far as it is an organic polymer in which the main chain has a conjugation system. In view of electrical conductivity, polypyrroles, polythiophenes, polythiophenevinylenes, polyanilines, polyphenylenes, polyphenylenevinylenes, polyacenes, and copolymers thereof are preferably used. Particularly, polypyrroles, polythiophenes and polyanilines are preferably used because they are chemically stable in an air and are excellent in handling properties.

In the present aspect, since the polyanion (A) coexists, solvent solubility of the conjugated conductive polymer (B) and compatibility (dispersibility) with the other resin are excellent without introducing a specific functional group into the conjugated conductive polymer (B). It is preferred to introduce a functional group such as alkyl group, carboxy group, sulfonic acid group, alkoxy group, hydroxy group and the like into the conjugated conductive polymer (B) because solvent

solubility and compatibility (dispersibility) with the other resin can be more improved.

Specific examples of the conjugated conductive polymer (B), which is preferably used, include polypyrroles such as polypyrrole, poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxylpyrrole), poly(3-methyl-4-carboxylpyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole) and poly(3-methyl-4-hexyloxypyrrole); polythiophenes such as polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene) and poly(3-methyl-4-carboxybutylthiophene); and

polyanilines such as polyaniline, poly(2-methylaniline), poly(3-isobutylaniline), poly(2-anilinesulfonic acid) and poly(3-anilinesulfonic acid).

The conjugated conductive polymer (B) is obtained, for example, by chemical oxidation polymerization in which a polymerizable conjugated monomer (MZ) is dissolved or dispersed in a solvent and the monomer solution is polymerized by using an oxidizing agent and/or an oxidation polymerization catalyst. If necessary, a monomer other than the polymerizable conjugated monomer (MZ) can be polymerized.

The polymerizable conjugated monomer (MZ) is not specifically limited as far as it has a conjugation system in the molecule and an organic polymer having a conjugation system in the main chain is obtained after the polymerization which uses the monomer. Examples thereof include pyrroles such as pyrrole, 3-methylpyrrole, 3-ethylpyrrole, 3-n-propylpyrrole, 3-butylpyrrole, 3-octylpyrrole, 3-decylpyrrole, 3-dodecylpyrrole, 3,4-dimethylpyrrole, 3,4-dibutylpyrrole, 3-carboxylpyrrole, 3-methyl-4-carboxylpyrrole, 3-methyl-4-carboxyethylpyrrole, 3-methyl-4-carboxybutylpyrrole, 3-hydroxypyrrole, 3-methoxypyrrole, 3-ethoxypyrrole, 3-butoxypyrrole, 3-hexyloxypyrrole, 3-methyl-4-hexyloxypyrrole and 3-methyl-4-hexyloxypyrrole;

thiophenes such as thiophene, 3-methylthiophene, 3-ethylthiophene, 3-propylthiophene, 3-butylthiophene, 3-hexylthiophene, 3-heptylthiophene, 3-octylthiophene, 3-decylthiophene, 3-dodecylthiophene, 3-octadecylthiophene, 3-bromothiophene, 3-chlorothiophene, 3-iodothiophene, 3-cyanothiophene, 3-phenylthiophene, 3,4-dimethylthiophene, 3,4-dibutylthiophene, 3-hydroxythiophene, 3-methoxythiophene, 3-ethoxythiophene, 3-butoxythiophene, 3-hexyloxythiophene, 3-heptyloxythiophene, 3-octyloxythiophene, 3-decyloxythiophene, 3-dodecyloxythiophene, 3-octadecyloxythiophene, 3,4-dihydroxythiophene, 3,4-dimethoxythiophene, 3,4-diethoxythiophene, 3,4-dipropoxythiophene, 3,4-dibutoxythiophene, 3,4-dihexyloxythiophene, 3,4-diheptyloxythiophene, 3,4-dioctyloxythiophene, 3,4-didecyloxythiophene, 3,4-didodecyloxythiophene, 3,4-ethylenedioxythiophene, 3,4-propylenedioxythiophene, 3,4-butenedioxythiophene, 3-methyl-4-methoxythiophene, 3-methyl-4-ethoxythiophene, 3-carboxythiophene, 3-methyl-4-carboxythiophene, 3-methyl-4-carboxyethylthiophene and 3-methyl-4-carboxybutylthiophene; and

anilines such as aniline, 2-methylaniline, 3-isobutylaniline, 2-anilinesulfonic acid and 3-anilinesulfonic acid.

These monomers can be used alone or in combination.

As the solvent, the oxidizing agent and the oxidation polymerization catalyst used for the polymerization, those exemplified in the synthesis of the polyanion (A) can be used.

For the purpose of adjusting electrical conductivity and the like, the conductive composition of the present aspect may contain an anion compound (E) other than the polyanion (A), if necessary. That is, a oxidation-reduction potential of conjugated electrons of the conjugated conductive polymer (B) can be controlled by doping with the anion compound (E) other than the polyanion (A), for example, an acceptable or donative dopant.

Examples of the acceptable dopant include halogen compounds, Lewis acids, proton acids, organic cyano compounds and organic metal compounds, and examples of the donative dopant include alkali metals, alkali earth metals and quaternary amine compounds.

Examples of the halogen compound suited for use as the acceptable dopant include chlorine ($Cl_2$), bromine ($Br_2$), iodine ($I_2$), iodine chloride (ICl), iodine bromide (IBr) and iodine fluoride (IF).

Examples of the Lewis acid include $PF_5$, $AsF_5$, $SbF_5$, $BF_5$, $BCl_5$, $BBr_5$ and $SO_3$.

Examples of the proton acid include inorganic acids such as hydrochloric acid, sulfuric acid, nitric acid, phosphoric acid, fluoroboric acid, hydrofluoric acid and perchloric acid; and organic acids such as organic carboxylic acids,

phenols and organic sulfonic acids. Among these organic acids, organic carboxylic acids and organic sulfonic acids are preferably used in view of the doping effect.

As organic carboxylic acids, there can be used those in which one or more carboxylic acid groups are bonded with aliphatic compounds, aromatic compounds, cyclic aliphatic compounds and the like. Examples thereof include formic acid, acetic acid, oxalic acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid and triphenylacetic acid.

As organic sulfonic acids, there can be used those in which one or more sulfonic acid groups are bonded with aliphatic, aromatic compounds, cyclic aliphatic compounds and the like.

Examples of the compound having one sulfonic acid group include methanesulfonic acid, ethanesulfonic acid, 1-propanesulfonic acid, 1-butanesulfonic acid, 1-hexanesulfonic acid, 1-heptansulfonic acid, 1-octanesulfonic acid, 1-nonanesulfonic acid, 1-decanesulfonic acid, 1-dodecanesulfonic acid, 1-tetradecanesulfonic acid, 1-pentadecanesulfonic acid, 2-bromoethanesulfonic acid, 3-chloro-2-hydroxypropanesulfonic acid, trifluoromethanesulfonic acid, colistinmethanesulfonic acid, 2-acrylamide-2-methylpropanesulfonic acid, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, benzenesulfonic acid, p-toluenesulfonic acid, xylenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, hexadecylbenzenesulfonic acid, 2,4-dimethylbenzenesulfonic acid, dipropylbenzenesulfonic acid, butylbenzenesulfonic acid, 4-aminobenzenesulfonic acid, o-aminobenzenesulfonic acid, m-aminobenzenesulfonic acid, 4-amino-2-chlorotoluene-5-sulfonic acid, 4-amino-3-methylbenzene-1-sulfonic acid, 4-amino-5-methoxy-2-methylbenzenesulfonic acid, 2-amino-5-methylbenzene-1-sulfonic acid, 4-amino-2-methylbenzene-1-sulfonic acid, 5-amino-2-methylbenzene-1-sulfonic acid, 4-amino-3-methylbenzene-1-sulfonic acid, 4-acetamide-3-chlorobenzenesulfonic acid, 4-chloro-3-nitrobenzenesulfonic acid, p-chlorobenzenesulfonic acid, naphthalenesulfonic acid, methylnaphthalenesulfonic acid, propylnaphthalenesulfonic acid, butylnaphthalenesulfonic acid, pentylnaphthalenesulfonic acid, dimethylnaphthalenesulfonic acid, 4-amino-1-naphthalenesulfonic acid, 8-chloronaphthalene-1-sulfonic acid, naphthalenesulfonic acid formalin polycondensate and melaminesulfonic acid formalin polycondensate.

Examples of the organic sulfonic acid having two or more sulfonic acid group include ethanedisulfonic acid, butanedisulfonic acid, pentanedisulfonic acid, decanedisulfonic acid, m-benzenedisulfonic acid, o-benzenedisulfonic acid, p-benzenedisulfonic acid, toluenedisulfonic acid, xylenedisulfonic acid, chlorobenzenedisulfonic acid, fluorobenzenedisulfonic acid, aniline-2,4-disulfonic acid, aniline-2,5-disulfonic acid, dimethylbenzenedisulfonic acid, diethylbenzenedisulfonic acid, dibutylbenzenesulfonic acid, naphthalenedisulfonic acid, methylnaphthalenedisulfonic acid, ethylnaphthalenedisulfonic acid, dodecylnaphthalenedisulfonic acid, pentadecylnaphthalenedisulfonic acid, butylnaphthalenedisulfonic acid, 2-amino-1,4-benzenedisulfonic acid, 1-amino-3,8-naphthalenedisulfonic acid, 3-amino-1,5-naphthalenedisulfonic acid, 8-amino-1-naphthol-3,6-disulfonic acid, 4-amino-5-naphthol-2,7-disulfonic acid, anthracenedisulfonic acid, butylanthracenedisulfonic acid, 4-acetamide-4'-isothiocyanatostilbene-2,2'-disulfonic acid, 4-acetamide-4'-isothiocyanatostilbene-2,2'-disulfonic acid, 4-acetamide-4'-maleimidylstilbene-2,2'-disulfonic acid, 1-acetoxypyrene-3,6,8-trisulfonic acid, 7-amino-1,3,6-naphthalenetrisulfonic acid, 8-aminonaphthalene-1,3,6-trisulfonic acid and 3-amino-1,5,7-naphthalenetrisulfonic acid.

Examples of the organic cyano compound include compounds having two or more cyano groups in a conjugated bond, for example, tetracyanoethylene, tetracyanoethylene oxide, tetracyanobenzene, tetracyanoquinodimethane and tetracyanoazanaphthalene.

The conductive composition of the present aspect may contain other components, if necessary.

For the purpose of adjusting film forming properties, film strength and the like, the other organic resin (F) can be used in combination.

As the organic resin (F), either of thermosetting and thermoplastic resins may be used as far as it is compatible with or dispersed in the conductive composition.

Specific examples thereof include polyester resins such as polyethylene terephthalate, polybutylene terephthalate and polyethylene naphthalate; polyimide resins such as polyimide and polyamideimide; polyamide resins such as polyamide 6, polyamide 6,6, polyamide 12 and polyamide 11; fluororesins such as polyvinylidene fluoride, polyvinyl fluoride, polytetrafluoroethylene and polychlorotrifluoroethylene; vinyl resins such as polyvinyl alcohol, polyvinyl ether, polyvinyl butyral, polyvinyl acetate and polyvinyl chloride; epoxy resins; xylene resins; aramid resins; polyurethane resins; polyurea resins; melamine resins; phenol resins; polyether; acrylic resins; and copolymer resins thereof.

In the present aspect, with the composition comprising a polyanion (A) in which an anion group is bonded with a main chain via an ester group, and a conjugated conductive polymer (B), as described above, it is made possible to obtain a conductive composition which has high electrical conductivity and is excellent in stability of electrical conductivity to the external environment and is also excellent in heat resistance, moisture resistance and long-term stability.

[Method for Preparing Conductive Composition]

The method for preparing the conductive composition of the present aspect will now be described.

The method of the present aspect comprises the step (1) of subjecting a monomer of a conjugated conductive polymer (B) (one or more polymerizable conjugated monomers (MZ) and, if necessary, other copolymerizable monomer) dissolved or dispersed in a solvent to chemical oxidation polymerization in the presence of a polyanion (A).

The doped conjugated conductive polymer has conventionally been prepared by polymerizing a conjugated conductive polymer and adding a dopant. In this case, the conjugated conductive polymer is liable to be aggregated and is therefore inferior in dispersibility and is also inferior in efficiency of imparting conductivity to the composition.

In the present aspect, by chemical oxidation polymerization of the conjugated conductive polymer (B) in the presence of the polyanion (A), as described above, the main chain of the conjugated conductive polymer (B) grows along the main chain of the polyanion (A) to obtain a regularly arranged conjugated conductive polymer (B), thus obtaining a conductive composition which contains a regularly arranged and well dispersed conjugated conductive polymer (B) and exhibits high electrical conductivity and is also excellent in stability of electrical conductivity to the external environment in a stable manner.

As described in the BACKGROUND ART, the conjugated conductive polymer is inferior in solvent solubility in general. However, in the present aspect, since the polyanion (A) coexists, as described above, the polymerization can proceed while dissolving the conjugated conductive polymer (B) which grows by the polymerization, and has excellent solvent solubility. Therefore, there can be obtained a composition which is excellent in dispersibility of the conjugated conductive polymer (B) and exhibits high electrical conductivity in a stable manner. Furthermore, since the resulting composition is liquid, a film is easily formed.

The step (1) includes the step of preparing raw materials (a polyanion (A), a monomer of a conjugated conductive polymer (B), an oxidizing agent and/or an oxidation polymerization catalyst) and mixing them, and the step of polymerizing the monomer of the conjugated conductive polymer (B) in a solution mixture.

The method for synthesizing the polyanion (A) is as described above. In case of mixing raw materials, the respective components may be dissolved and mixed in a solvent at a time, or the respective components may be mixed after previously dissolving the monomer, the oxidizing agent and/or the oxidation polymerization catalyst in the solvent, respectively.

The polymerization conditions are not specifically limited and the polymerization may be conducted in any manner, if necessary. Examples of the polymerization will be described in "EXAMPLES" of the present aspect.

The method of the present aspect can further comprise the step (2) of removing free ions from the solution containing the polyanion (A) and the resulting conjugated conductive polymer (B) by an ultrafiltration method, after the step (1).

The ultrafiltration method is a kind of membrane separation methods and is a technique of separating a component using an ultrafilter comprising a porous supporting base material and a polymer film formed on porous supporting base material, the polymer film containing pores having a diameter smaller than that of the porous supporting base material. In the present aspect, since a required polymer component does not penetrates through the film, cross flow filtration is preferably employed. If necessary, only small particles and impurities containing residual ions can be removed by carrying out an ultrafiltration treatment once or plural times while optionally diluting. In the present aspect, an ultrafilter having a fractionation molecular weigh of 1 to 1000 K is preferably used.

It is preferred that the method of the present aspect further includes the step (3) of adding a proton-containing solution. The step (3) may be carried out simultaneously with the step (2) or after the step (2).

The proton-containing solution used in the step (3) is not specifically limited, and a solution containing sulfuric acid, hydrochloric acid, phosphoric acid, nitric acid, a sulfonic acid compound and the like is used. By optionally carrying out the step (3), cations, which constitute a complex with an anion group, can be replaced by protones. Consequently, higher electrical conductivity can be obtained and free metal ions are removed, preferably.

The above method of the present aspect includes the step (1) of subjecting a monomer of a conjugated conductive polymer (B) dissolved or dispersed in a solvent to chemical oxidation polymerization in the presence of a polyanion (A). Consequently, as described above, it is made possible to obtain a conductive composition which has high electrical conductivity and is excellent in stability of electrical conductivity to the external environment and is also excellent in heat resistance, moisture resistance and long-term stability in a stable manner.

Since the method of the present aspect includes the step (2) of an ultrafiltration treatment, impurities containing residual ions can be removed. Therefore, according to the present aspect, deterioration of heat resistance, moisture resistance, long-term stability of the conjugated conductive polymer (B) and the like caused by residual ions can be suppressed.

(Best Mode of Fifth Aspect)

The present aspect is directed to a conductive composition which can be employed for antistatic agents, electromagnetic wave shielding materials, and cathode materials of functional capacitors, and a method for preparing the same as well as a conductive coating material. Also the present invention is directed to a capacitor and a method for preparing the same.

First, the conductive composition of the present aspect will be described.

The conductive composition of the present aspect comprises a conductive mixture of a cyano group-containing polymer compound and a π-conjugated conductive polymer, and a conductive filler.

[π-Conjugated Conductive Polymer]

Examples of the π-conjugated conductive polymer include substituted or unsbstituted polyaniline, substituted or unsbstituted polypyrrole, substituted or unsbstituted polythiophene, and (co)polymers of one or more kinds selected from them. Particularly, polypyrrole, polythiophene, poly N-methylpyrrole, poly 3-methylthiophene, poly 3-methoxythiophene, and (co)polymers of two or more kinds selected from them are preferably used in view of resistance value, cost and reactivity.

Particularly, alkyl-substituted compounds such as poly N-methylpyrrole and poly 3-methylthiophene are more preferable because the effect of improving solvent solubility is exerted. Among alkyl groups, a methyl group is preferable because conductivity is not adversely affected. The (co)polymer indicates that the polymer may be a copolymer.

[Cyano Group-Containing Polymer Compound]

Examples of the cyano group-containing polymer compound included in the conductive mixture refers to a polymer compound having a cyano group in the molecule. Examples thereof include polyacrylonitrile resin, polymethacrylonitrile resin, acrylonitrile-styrene resin, acrylonitrile-butadiene resin, acrylonitrile-butadiene styrene resin, and resin in which a hydroxyl or amino group-containing resin is cyanoethylated, for example, cyanoethylcellulose.

Such a cyano group-containing polymer compound has a function of dissolving a π-conjugated conductive polymer in water or an organic solvent (hereinafter water and an organic solvent may be referred to as a solvent).

The cyano group-containing polymer compound may be a copolymer, for example, a copolymer obtained by copolymerizing the cyano group-containing polymer compound having a cyano group with one or more polymers having a sulfo group having a dopant action. Examples of the polymer having a sulfo group include polyvinylsulfonic acid resin, polystyrenesulfonic acid resin, polyallylsulfonic acid resin, polyacrylsulfonic acid resin, polymethacrylsulfonic acid resin, poly-2-acrylamide-2-methylpropanesulfonic acid resin and polyisoprenesulfonic acid resin.

The cyano group-containing polymer compound may be copolymerized with the other vinyl compound.

Examples of the other vinyl compound include polymerizable vinyl compounds such as styrene, butadiene, acrylic acid, methacrylic acid, hydroxyacrylic acid, hydroxymethacrylic acid, acrylic acid ester, methacrylic acid ester and p-vinyltoluene. When these polymerizable vinyl compounds are copolymerized, solvent solubility can be controlled.

The cyano group-containing polymer compound may contain synthetic rubber components for improving impact resistance, and age resistors, antioxidants and ultraviolet absorbers for improving environment-resistant characteristics.

Since an amine compound as the antioxidant may inhibit the function of the oxidizing agent used to polymerize the π-conjugated conductive polymer, it is preferred to use a phenolic antioxidant instead of an amine-based antioxidant, to mix an amine-type antioxidant after the polymerization and the like.

[Conductive Filler]

Examples of the conductive filler include graphite particles and carbon particles having a particle size of 5 to 5000 nm; metal particles of copper, nickel, silver, gold, tin, iron and the like; and carbon nano-tube and carbon fiber having a fiber length of 0.1 to 500 μm and a wire diameter of 1 to 1000 nm. Among these conductive fillers, preferred are carbon fiber and carbon nano-tube since they are excellent in dispersibility and small amount of carbon fiber and carbon nano-tube can improve conductivity.

The carbon materials such as carbon particles, graphite particles, carbon fiber and carbon nano-tube are preferable because they have a reduction action and prevent deterioration of the π-conjugated conductive polymer due to oxygen.

The conductive filler preferably has a sulfo group and/or a carboxyl group on the surface. When the conductive filler has a sulfo group and/or a carboxyl group on the surface, dispersibility in the π-conjugated conductive polymer is improved and these groups can serve as a dopant to the π-conjugated conductive polymer, and thus heat resistance of the dopant can be enhanced. As the method of introducing a sulfo group and/or a carboxyl group onto the surface of

the conductive filler, for example, well-known surface treatments such as treatments of the conductive filler with concentrated sulfuric acid, peroxide or the like can be employed.

The surface of the conductive filler is preferably coated with a π-conjugated conductive polymer. When the surface of the conductive filler is coated with the n-conjugated conductive polymer, short circuit caused by direct contact of the conductive filler with a dielectric layer can be prevented when a solid electrolyte film made of a conductive composition is formed on the dielectric layer. Furthermore, a function of repairing the dielectric layer due to the π-conjugated conductive polymer can be secured.

The surface of the conductive filler can be coated with the π-conjugated conductive polymer in a simple manner using a so-called chemical polymerization method. In the coating using the chemical polymerization, first, a precursor monomer of a n-conjugated conductive polymer and, if necessary, a dopant are added in a solvent containing a conductive filler dispersed therein, followed by well mixing under stirring to prepare a solution mixture. Then, an oxidizing agent is added to the solution mixture, thereby enabling the polymerization to proceed, followed by removal of the oxidizing agent, a residual monomer and by-product and further purification to obtain a conductive filler whose surface is coated with a n-conjugated conductive polymer.

Also the surface of a conductive filler may be coated with the π-conjugated conductive polymer by treating a conductive filler with a solution prepared by dissolving a conductive mixture of a cyano group-containing polymer compound and a π-conjugated conductive polymer in a solvent. In this case, the cyano group-containing polymer compound used in the treatment preferably has polarity different from that of a cyano group-containing polymer compound which is separately added so as to obtain a conductive composition. Consequently, it is possible to prevent dissolution during the dispersion treatment.

Even if the surface of the conductive filler is coated with a π-conjugated conductive polymer, when a conductive filler having a sulfo group and a carboxyl group is used, the sulfo group and the carboxyl group serve as a strong dopant and a π-conjugated conductive polymer film having high conductivity can be formed.

[Dopant]

The conductive composition preferably contains a dopant so as to improve both conductivity and heat resistance. As the dopant, halogen compounds, Lewis acids, proton acids and the like are usually used. Specific examples of the dopant include organic acids such as organic carboxylic acid and organic sulfonic acid, organic cyano compound, fullerene, hydrogenated fullerene, fullerene hydroxide, carboxylated fullerene and sulfonated fullerene.

Examples of the organic acid include alkylbenzenesulfonic acid, alkylnaphthalenesulfonic acid, alkylnaphthalenedisulfonic acid, naphthalenesulfonic acid formalin polycondensate, melaminesulfonic acid formalin polycondensate, naphthalenedisulfonic acid, naphthalenetrisulfonic acid, dinaphthylmethanedisulfonic acid, anthraquinonesulfonic acid, anthraquinonedisulfonic acid, anthracenesulfonic acid and pyrenesulfonic acid, and metal salts thereof can also be used.

Examples of the organic cyano compound include dichlorodicyanobenzoquione (DDQ), tetracyanoquinodimethane and tetracyanoazanaphthalene.

In the conductive composition, a mass ratio of the cyano group-containing polymer compound to the π-conjugated conductive polymer (cyano group-containing polymer compound:π-conjugated conductive polymer) is preferably from 5:95 to 99:1, more preferably from 10:90 to 95:5, and particularly preferably from 20:80 to 85:15. When the mass ratio is within the above range, both conductivity and solvent solubility are high. On the other hand, when the ratio of the π-conjugated conductive polymer is less than the above range, it may become impossible to obtain sufficient conductivity. When the ratio is more than the above range, solvent solubility may become inferior.

A mass ratio of the conductive mixture to the conductive filler (conductive mixture:conductive filler) is preferably from 50:50 to 99.9:0.1, more preferably from 60:40 to 95:5, and particularly preferably from 70:30 to 90:10. When the mass ratio is within the above range, both conductivity and film forming properties are high. On the other hand, when the ratio of the conductive filler is less than the above range, it may become impossible to sufficiently improve conductivity. On the other hand, when the ratio is more than the above range, film forming properties may become inferior and the cost may increase when using an expensive carbon nano-tube. When the conductive composition is used as the cathode material of the capacitor, excess conductive filler may cause short circuit due to leakage current of the capacitor derivative, and thus the resulting capacitor may do not function as the capacitor.

The conductive composition described above contains a cyano group-containing polymer compound and the cyano group-containing polymer compound has a property which enables the π-conjugated conductive polymer to be soluble in a solvent. Therefore, it becomes possible to form a solid electrolyte layer by applying the π-conjugated conductive polymer. Since the conductive composition contains a conductive filler, not only conductivity of the solid electrolyte layer formed of the conductive composition enhances, but also heat resistance of the solid electrolyte layer is enhanced because the conductive filler is made of inorganic particles.

[Method for Preparing Conductive Composition]

The method for preparing the conductive composition of the present aspect is a method comprising polymerizing a precursor monomer of a π-conjugated conductive polymer in the presence of a cyano group-containing polymer compound to prepare a conductive mixture and mixing the conductive mixture with a conductive filler.

An example of the method will now be described. First, a cyano group-containing polymer compound is dissolved in a solvent which can dissolve the cyano group-containing polymer compound, and a precursor monomer of a n-conjugated conductive polymer is added to the solution, followed by well mixing under stirring to prepare a monomer-containing solution. Then, an oxidizing agent is added to the monomer-containing solution, thereby enabling the polymerization to proceed, followed by removal of the oxidizing agent, a residual monomer and by-product and further purification to obtain a conductive mixture of the cyano group-containing polymer compound and the π-conjugated conductive polymer. Then, a conductive filler is added to the conductive mixture and well dispersed while mixing under stirring to obtain a conductive composition.

As the oxidizing agent used to polymerize the precursor monomer of the π-conjugated conductive polymer, known oxidizing agents can be used. Examples of the oxidizing agent include metal halides such as ferric chloride, boron trifluoride and aluminum chloride; peroxides such as hydrogen peroxide and benzoyl peroxide; persulfates such as potassium persulfate, sodium persulfate and ammonium persulfate; ozone and oxygen.

The solvent used to dissolve the cyano group-containing polymer compound is not specifically limited. For example, the cyano group-containing polymer compound may be dissolved in water, methanol, ethanol, propylene carbonate, N-methyl pyrrolidone, dimethylformamide, dimethylacetamide, cyclohexanone, acetone, methyl ethyl ketone, methyl isobutyl ketone, toluene, or a solvent mixture thereof. Among these solvents, an organic solvent other than water exhibits small surface tension and high permeability into the porous material and therefore conductivity further enhances.

In the above method, the dopant may be added together with the precursor monomer of the π-conjugated conductive polymer, or may be added to the conductive mixture.

Mixing of the conductive filler with the conductive mixture is not limited to the addition directly to the conductive mixture and, for example, the conductive filler may be mixed with the conductive mixture such that the filler is added to a monomer-containing solution and coexist during the polymerization reaction of a conductive polymer .

In the above-described method for preparing the conductive composition, since the cyano group-containing polymer compound coexists in case of polymerizing the precursor monomer of the π-conjugated conductive polymer, the π-conjugated conductive polymer can be dissolved in a solvent. Therefore, it becomes possible to apply the π-conjugated conductive polymer and a solid electrolyte layer can be formed on the surface of a dielectric layer by simple processes such as application and drying processes. Furthermore, leakage current from the dielectric defective portion by the solid electrolyte layer can be prevented and also conductivity and heat resistance of the solid electrolyte layer can be improved because of mixing a conductive filler having high heat resistance.

[Conductive Coating Material]

The conductive coating material of the present aspect contains the above conductive composition, and water or an organic solvent. Examples of the organic solvent include those other than water among solvents which dissolve the cyano group-containing polymer compound.

The conductive coating material may be prepared by adding the conductive composition to water or an organic solvent. The conductive coating material may be the conductive composition containing a solvent obtained by the method for preparing the conductive composition.

[Capacitor]

The capacitor of the present aspect comprises an anode made of a porous material of a valve metal, a dielectric layer made of an oxide film of the valve metal, which is adjacent to the anode, and a cathode made of the aforementioned conductive composition

The cathode of the capacitor is formed of the conductive composition and is therefore excellent in performances and also endure severe operating environment.

Examples of the valve metal include aluminum, tantalum, niobium, titanium, hafnium, zirconium, zinc, tungsten, bismuth and antimony. Among these valve metals, aluminum, tantalum and niobium are suited for use as an anode of a capacitor.

An example of a method of producing the capacitor of the present aspect will be described below. In an example of the method for producing this capacitor, first, a dielectric layer made of an oxide film of the valve metal is formed on an anode made of a porous material of the valve metal to obtain a capacitor intermediate. Examples of the method for preparing a capacitor intermediate include a method comprising etching an aluminum foil, thereby to increase the surface

area, and oxidizing the surface, and a method comprising oxidizing the surface of a sintered body made of tantalum or niobium particles and forming the sintered body into a pellet.

Then, a conductive coating material is applied onto the capacitor intermediate by a dipping or spray coating method and drying to remove a solvent and to form a cathode obtained from a conductive composition on the surface of a dielectric layer, thus obtaining a capacitor.

In case of applying the conductive coating material by the dipping method, the capacitor intermediate is dipped in a conductive coating material, thereby to penetrate into a porous material and, if necessary, penetration into the porous material may be assisted by applying operations such as appling supersonic wave, vibration, evacuation and heating upon dipping. The thickness of coating may be adjusted by repeatedly dipping and drying.

in the method for producing the capacitor of the present aspect, since the conductive coating material is applied onto the dielectric layer and drying to form a cathode, the process for the production of the capacitor is simplified.

(Best Mode of Sixth Aspect)

The present aspect is directed to a dye-sensitized photoelectric transducer and a method for producing the same.

An embodiment of the photoelectric transducer of the present aspect and the method for producing the same will be described.

First, the method for producing the photoelectric transducer will be described. The photoelectric transducer of the present embodiment is a photoelectric transducer 10 shown in Fig. 1, an electrolyte film 4 containing a conjugated conductive polymer.

In the method of the present embodiment, first, a transparent conductive film is formed on a transparent substrate by a deposition, sputtering method or the like and, furthermore, an n-type semiconductor electrode containing an n-type semiconductor compound and a coloring matter is formed on a conductive film. Then, a solution is prepared by dispersing or dissolving a conjugated conductive polymer and a polyanion and/or an electron-withdrawing functional group-containing polymer in a solvent and optionally adding a fibrous conductor and an inorganic p-type semiconductor. The solution is applied onto the n-type semiconductor electrode and the solvent is removed to form a coating film (hole transporting polymer electrolyte film). Alternatively, a solution containing an inorganic p-type semiconductor is applied onto the n-type semiconductor electrode and a solution containing a conjugated conductive polymer and a polyanion and/or an electron-withdrawing functional group-containing polymer may be applied thereon to form a p-type semiconductor layer between an n-type semiconductor electrode and a hole transporting polymer electrolyte film.

On the hole transporting polymer electrolyte film, an electronic conductive electrode is formed by a deposition, sputtering, coating method or the like. Thus, a photoelectric transducer 10 comprising a transparent substrate 11, a transparent electrode 12, an n-type semiconductor electrode 13, a hole transporting polymer electrolyte film (electrolyte film 14) and an electronic conductive electrode 15 shown in Fig. 1 is obtained.

In the above method, the transparent substrate 11 may have high light transmissivity and mechanical and physical properties capable of protecting the transparent electrode 12. Examples thereof include glass plate, and sheets made of resins having excellent transparency such as polyethylene terephthalate, polycarbonate, polyphenylene sulfide, polysulfon, polyestersulfon, polyetherimide and polycycloolefin.

The thickness of the transparent substrate is preferably from 20 to 2000 $\mu$m, and more preferably from 50 to 500 $\mu$m. Light transmittance is preferably 50% or more.

The transparent electrode 12 may be formed of a known transparent conductive film made of tin oxide, indium oxide doped with tin (ITO) and indium oxide doped with fluorine (FTO).

The thickness of the transparent electrode 12 is preferably from 0.01 to 0.5 $\mu$m and the surface resistance value is preferably 500 Q or less. The surface resistance value is a valued measured in accordance with JIS K 6911.

Examples of the n-type semiconductor compound constituting the n-type semiconductor electrode 13 include oxides of titanium, tin, zinc, iron, tungsten, zirconium, hafnium, strontium, indium, cerium, yttrium, lanthanum, vanadium niobium and tantalum; and sulfides of cadmium, zinc, lead, silver, antimony and bismuth.

The dye has photosensitization and examples thereof include organic metal complex dyes, methine dyes, porphyrin-based dyes and phthalocyanine-based dyes. This dye is formed on the n-type semiconductor compound in the form of a layer.

The thickness of the n-type semiconductor electrode is preferably from 2 to 50 $\mu$m.

The n-type semiconductor electrode 13 is formed by applying or printing a dispersion, which is prepared by dispersing an n-type semiconductor compound in a solvent, onto a transparent conductive film to form a coating film, and dipping the coating film in a solution containing a dye. Examples of the method of coating a dispersion prepared by dispersing the n-type semiconductor compound in the solvent include doctor blade method, roll coating method, spray coating method and spin coating method. Examples of the printing method include screen printing method, ink jet printing method, offset printing method and gravure printing method.

Examples of the conjugated conductive polymer constituting the hole transporting polymer electrolyte film

include conjugated five-membered heterocyclic polymer wherein two or more elements are included in a five-membered ring, and specific examples thereof include polypyrroles, polythiophenes, and copolymers thereof.

Even if the conjugated conductive polymer is not substituted, excellent hole transporting properties can be obtained. Since it is effective to the addition to the other organic resin component or the like, and dispersion or dissolution in the solvent, functional groups such as alkyl group, carboxyl group, sulfonic acid group, alkoxyl group, ester group, hydroxy group and cyano groups are more preferably introduced to the polymer.

Specific examples thereof include polypyrrole, poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxylpyrrole), poly(3-methyl-4-carboxylpyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole), poly(3-methyl-4-hexyloxypyrrole), poly(thiophene), poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly (3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-methoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene), poly(3-methyl-4-carboxybutylthiophene), polyaniline, poly(2-methylaniline), poly(3-isobutylaniline), poly(2-anilinesulfonic acid) and poly(3-anilinesulfonic acid).

The conjugated conductive polymer can be obtained from a polymerizable conjugated monomer in the presence of an oxidizing agent or an oxidation polymerization catalyst using a chemical oxidation polymerization method. As the monomer, pyrrole and derivatives thereof, thiophene and derivatives thereof can be used. As the oxidizing agent, there can be used peroxodisulfates such as ammonium peroxodisulfate, sodium peroxodisulfate and potassium peroxodisulfate; transition metal compounds such as ferric chloride and cupric chloride; metal oxides such as silver oxide and cesium oxide; peroxides such as hydrogen peroxide and ozone; organic peroxides such as benzoyl peroxide; and oxygen.

As the polyanion, those obtained by introducing an anion group capable of causing doping in the conjugated conductive polymer can be used. Examples of the anion group include groups such as $-O-SO_3X$, $-O-PO(OX)_2$, -COOX and $-SO_3X$ (in the respective formulas, X represents a hydrogen atom or an alkali metal atom). In view of the doping effect to the conjugated conductive polymer, $-SO_3X$ and $-O-SO_3X$ are preferable (X is as defined above).

The polyanion may be a polymer composed only of an anionic polymerizable monomer(s), but is preferably a copolymer of an anionic polymerizable monomer and the other polymerizable monomer is preferable.

As the anionic polymerizable monomer, there can be used those in which an anion group such as $-O-SO_3X$, $-O-PO(OX)_2$, -COOX or $-SO_3X$ (X is as defined above) is substituted on a suitable moiety of a polymerizable monomer. Examples of the anionic polymerizable monomer include substituted or unsubstituted ethylenesulfonic acid compounds, substituted or unsubstituted styrenesulfonic acid compounds, substituted heterocyclic sulfonic acid compounds, substituted acrylamidesulfonic acid compounds, substituted or unsubstituted cyclovinylenesulfonic acid compounds, substituted or unsubstituted butadienesulfonic acid compounds and vinyl aromatic sulfonic acid compounds.

Specific examples of the substituted or unsubstituted ethylenesulfonic acid compound include vinylsulfonic acid, vinylsulfonic acid salt, allylsulfonic acid, allylsulfonic acid salt, methallylsulfonic acid, methallylsulfonic acid salt, 4-sulfobutyl methacrylate, 4-sulfobutyl methacrylate salt, methallyloxybenzenesulfonic acid, methallyloxybenzenesulfonic acid salt, allyloxybenzenesulfonic acid and allyloxybenzenesulfonic acid salt.

Specific examples of the substituted or unsubstituted styrenesulfonic acid compound include styrenesulfonic acid, styrenesulfonic acid salt, $\alpha$-methylstyrenesulfonic acid and $\alpha$-methylstyrenesulfonic acid salt.

Specific examples of the substituted acrylamidesulfonic acid compound include acrylamide-t-butylsulfonic acid, acrylamide-t-butylsulfonic acid salt, 2-acrylamide-2-methylpropanesulfonic acid and 2-acrylamide-2-methylpropanesulfonic acid salt.

Specific examples of the substituted or unsubstituted cyclovinylenesulfonic acid compound include cyclobutene-3-sulfonic acid and cyclobutene-3-sulfonic acid salt.

Specific examples of the substituted or unsubstituted butadienesulfonic acid compound include isoprenesulfonic acid, isoprenesulfonic acid salt, 1,3-butadiene-1-sulfonic acid, 1,3-butadiene-1-sulfonic acid salt, 1-methyl-1,3-butadiene-2-sulfonic acid, 1-methyl-1,3-butadiene-3-sulfonic acid salt, 1-methyl-1,3-butadiene-4-sulfonic acid and 1-methyl-1,3-butadiene-4-sulfonic acid salt.

Among these compounds, vinylsulfonic acid salt, styrenesulfonic acid, styrenesulfonic acid salt, isoprenesulfonic

acid and isoprenesulfonic acid salt are preferable, and isoprenesulfonic acid and isoprenesulfonic acid salt are more preferable.

Examples of the other polymerizable monomer, which is copolymerizable with the anionic polymerizable monomer, include substituted or unsubstituted ethylene compounds, substituted acrylic acid compounds, substituted or unsubstituted styrenes, substituted or unsubstituted vinylamines, unsaturated group-containing heterocyclic compounds, substituted or unsubstituted acrylamide compounds, substituted or unsubstituted cyclovinylene compounds, substituted or unsubstituted butadiene compounds, substituted or unsubstituted vinyl aromatic compounds, substituted or unsubstituted divinylbenzene compounds, substituted vinylphenol compounds, optionally substituted silylstyrenes and optionally substituted phenol compounds.

Specific examples thereof include ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, 2-vinylnaphthalene, 6-methyl-2-vinylnaphthalene, 1-vinylimidazole, vinylpyridine, vinyl acetate, acrylaldehyde, acrylonitrile, N-vinyl-2-pyrrolidone, acrylamide, N,N-dimethylacrylamide, methyl acrylate, ethyl acrylate, propyl acrylate, butyl acrylate, isobutyl acrylate, isooctyl acrylate, isononylbutyl acrylate, allyl acrylate, ethyl methacrylate, hydroxyethyl acrylate, methoxyethyl acrylate, methoxybutyl acrylate, stearyl acrylate, acrylic acid ester, acryloyl morpholine, vinylamine, N,N-dimethylvinylamine, N,N-diethylvinylamine, N,N-dibutylvinylamine, N,N-di-t-butylvinylamine, N,N-diphenylvinylamine, N-vinyl carbazole, vinyl alcohol, vinyl chloride, vinyl fluoride, vinyl ether, cyclopropene, cyclobutene, cyclopentene, cyclohexene, cycloheptene, cyclooctene, 2-methylcyclohexene, vinylphenol, 1,3-butadiene, 1-methyl-1,3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene, 2-hydroxy-1,3-butadiene, allyl acrylate, acrylamideallyl, divinyl ether, o-divinylbenzene, m-divinylbenzene and p-divinylbenzene. Among these compounds, 1-butene, vinylphenol, butyl acrylate, N-vinyl-2-pyrrolidone and 1,3-butadiene are preferable.

The polyanion can be obtained from the anionic polymerizable monomer and the other polymerizable monomer, which is optionally used, in the presence of an oxidizing agent and/or an oxidation polymerization catalyst using a chemical oxidation polymerization method.

As the oxidizing agent, there can be used peroxodisulfates such as ammonium peroxodisulfate, sodium peroxodisulfate and potassium peroxodisulfate; transition metal compounds such as ferric chloride, ferric sulfate and cupric chloride; metal oxides such as silver oxide and cesium oxide; peroxides such as hydrogen peroxide and ozone; organic peroxides such as benzoyl peroxide; and oxygen.

Among these polyanions, polyisoprenesulfonic acid, copolymer of isoprenesulfonic acid, polystyrenesulfonic acid, and copolymer of polystyrenesulfonic acid are preferable.

As the electron-withdrawing functional group-containing polymer, any polymer can be used as far as the polymer includes an electron-withdrawing functional group such as carbonyl group, hydroxyl group, a cyano group, and halogen such as fluorine, chlorine or bromine. In view of electron-withdrawing properties and solvent solubility, an electron-withdrawing functional group is preferably a cyano group, a fluorine or a carbonyl group. Specific examples of preferable electron-withdrawing functional group-containing polymer include polyacrylonitrile, polyvinylidene fluoride and polyparabanic acid.

The solvent which can disperse or dissolve the conjugated conductive polymer may be any solvent which can disperse or dissolve the conjugated conductive polymer, and examples thereof include polar solvents such as water, N-methyl-2-pyrrolidone, N,N'-dimethylformamide, N,N'-dimethylacetamide, dimethyl sulfoxide and hexamethylenephopshortriamide; phenols such as cresol, phenol and xylenol; alcohols such as methanol, ethanol, propanol and butanol; ketones such as acetone and methyl ethyl ketone; hydrocarbons such as hexane, benzene and toluene; carboxylic acids such as formic acid and acetic acid; carbonate compounds such as ethylene carbonate and propylene carbonate; ether compounds such as dioxane and diethyl ether; chain ethers such as ethylene glycol dialkyl ether, propylene glycol dialkyl ether, polyethylene glycol dialkyl ether and polypropylene glycol dialkyl ether; heterocyclic compounds such as 3-methyl-2-oxazolidinone; and nitrile compounds such as acetonitrile, methoxyacetonitrile, propionitrile and benzonitrile. These solvents can be used alone or in combination, or a mixture with the other organic solvent may be used.

The hole transporting polymer electrolyte film can contain a fibrous conductor. The fibrous conductor enhances conductivity and thus photoelectric conversion efficiency is improved. As the fibrous conductor, a fibrous electrical conductor can be used and examples thereof include carbon-based fibrous materials, metal-based fibrous materials and metal oxide-based fibrous materials.

Examples of the carbon-based fibrous material include polyacrylonitrile-based carbon fibers, pitch-based carbon fibers, rayon-based carbon fibers, glassy carbons, carbon nano-tubes, and these carbon fibers subjected to a surface treatment.

Examples of the metal-based fibrous material include fibrous metals, fibrous metal alloys and fibrous metal complexes, which is formed by using gold, silver, nickel platinum and the like, and metal fibers subjected to a surface treatment.

Examples of the metal oxide-based fibrous material include metal oxide fibers and metal oxide complex fibers,

which is formed by using $InO_2$, $InO_2Sn$, $SnO_2$, ZnO, $SnO_2$-$Sb_2O_4$, $SnO_2$-$V_2O_5$, $TiO_2$(Sn/Sb)$O_2$, $SiO_2$(Sn/Sb)$O_2$, $K_2O$-n$TiO_2$-(Sn/Sb)$O_2$, $K_2O$-n$TiO_2$-C and the like, these metal oxide fibers which subjected to a surface treatment, and these metal-coated fibers which are subjected to a surface treatment.

Among these materials, carbon-based fiberous materials, metal oxide-based fibrous materials, and surface-treated materials and the like, which have corrosion-resistant, are more preferable.

The fiber diameter (minor diameter) of the fibrous conductor is preferably 1 $\mu$m or less and the fiber length (major diameter) is preferably 1 $\mu$m to 100 $\mu$m (provided that fiber length/2 $\geq$ fiber diameter).

The fibrous conductor is preferably a material having a sulfonic acid group. Examples of the material having a sulfonic acid group include carbon fibrous material having a sulfonic acid group introduced therein, metal-based fibrous material having a sulfonic acid introduced into a surface-treated layer and metal oxide-based fibrous material.

When the fibrous conductor is a material having a sulfonic acid group, there arises an interaction between the sulfonic acid group on the surface of the fibrous conductor and a conjugated conductive polymer in a bipolaron state and thus a conductive complex having lower resistance is obtained.

The conjugated conductive polymer is preferably doped with a dopant so as to more enhance conductivity. As the dopant, for example, halogen compounds, Lewis acids, proton acids, organic cyano compounds and organic metal compounds can be used.

Examples of the halogen compound include chlorine ($Cl_2$), bromine ($Br_2$), iodine ($I_2$), iodine chloride (ICl), iodine bromide (IBr) and iodine fluoride (IF).

Examples of the Lewis acid include $PF_5$, $AsF_5$, $SbF_5$, $BF_3$, $BCl_3$, $BBr_3$ and $SO_3$.

Examples of the proton acid include inorganic acids such as hydrochloric acid, sulfuric acid, nitric acid, phosphoric acid, fluoroboric acid, hydrofluoric acid and perchloric acid; and organic acids such as organic carboxylic acid and sulfonic acid.

As the organic carboxylic acid, there can be used those in which aliphatic compounds, aromatic compounds, cyclic aliphatic compounds and the like, which have one or more carboxylic acid groups. Examples thereof include formic acid, acetic acid, oxalic acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid and triphenylacetic acid.

As organic sulfonic acids, there can be used those in which aliphatic compounds, aromatic compounds, cyclic aliphatic compounds and the like, which have one or more carboxylic acid groups, and a polymer which has one or more carboxylic acid groups. Examples of the organic sulfonic acid having one sulfonic acid group include methanesulfonic acid, ethanesulfonic acid, 1-propanesulfonic acid, 1-butanesulfonic acid, 1-hexanesulfonic acid, 1-heptansulfonic acid, 1-octanesulfonic acid, 1-nonanesulfonic acid, 1-decanesulfonic acid, 1-dodecanesulfonic acid, 1-tetradecanesulfonic acid, 1-pentadecanesulfonic acid, 2-bromoethanesulfonic acid, 3-chloro-2-hydroxypropanesulfonic acid, trifluoromethanesulfonic acid, trifluoroethanesulfonic acid, colistinmethanesulfonic acid, 2-acrylamide-2-methylpropanesulfonic acid, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, benzenesulfonic acid, p-toluenesulfonic acid, xylenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, hexadecylbenzenesulfonic acid, 2,4-dimethylbenzenesulfonic acid, dipropylbenzenesulfonic acid, 4-aminobenzenesulfonic acid, o-aminobenzenesulfonic acid, m-aminobenzenesulfonic acid, 4-amino-2-chlorotoluene-5-sulfonic acid, 4-amino-3-methylbenzene-1-sulfonic acid, 4-amino-5-methoxy-2-methylbenzenesulfonic acid, 2-amino-5-methylbenzene-1-sulfonic acid, 4-amino-2-methylbenzene-1-sulfonic acid, 5-amino-2-methylbenzene-1-sulfonic acid, 4-amino-3-methylbenzene-1-sulfonic acid, 4-acetamide-3-chlorobenzenesulfonic acid, 4-chloro-3-nitrobenzenesulfonic acid, p-chlorobenzenesulfonic acid, naphthalenesulfonic acid, methylnaphthalenesulfonic acid, propylnaphthalenesulfonic acid, butylnaphthalenesulfonic acid, pentylnaphthalenesulfonic acid, 4-amino-1-naphthalenesulfonic acid and 8-chloronaphthalene-1-sulfonic acid.

Examples of the organic sulfonic acid having one or more sulfonic acid groups include ethanedisulfonic acid, butanedisulfonic acid, pentanedisulfonic acid, decanedisulfonic acid, o-benzenedisulfonic acid, m-benzenedisulfonic acid, p-benzenedisulfonic acid, toluenedisulfonic acid, xylenedisulfonic acid, chlorobenzenedisulfonic acid, fluorobenzenedisulfonic acid, dimethylbenzenedisulfonic acid, diethylbenzenedisulfonic acid, aniline-2,4-disulfonic acid, aniline-2,5-disulfonic acid, 3,4-dihydroxy-1,3-benzenedisulfonic acid, naphthalenedisulfonic acid, methylnaphthalenedisulfonic acid, ethylnaphthalenedisulfonic acid, pentadecylnaphthalenedisulfonic acid, 3-amino-5-hydroxy-2,7-naphthalenedisulfonic acid, 1-acetamide-8-hydroxy-3,6-naphthalenedisulfonic acid, 2-amino-1,4-benzenedisulfonic acid, 1-amino-3,8-naphthalenedisulfonic acid, 3-amino-1,5-naphthalenedisulfonic acid, 4-acetamide-4'-isothiocyanatostilbene-2,2'-disulfonic acid, 4-acetamide-4'-isothiocyanatostilbene-2,2'-disulfonic acid and 4-acetamide-4'-maleimidylstilbene-2,2'-disulfonic acid.

The polymer having a sulfonic acid group may be a polymer having an anion group in a side chain. Examples

of the main chain of the polymer include polyalkylene including a repeating unit of methylene, and polyalkenylene including a constituent unit having one vinyl group in a main chain. Specific examples thereof include polyvinylsulfonic acid, polymethallylsulfonic acid, polyallylsulfonic acid, polystyrenesulfonic acid, polyisoprenesulfonic acid, polyacrylamide-t-butylsulfonic acid and polymethallyloxybenzenesulfonic acid.

The hole transporting polymer electrolyte film can contain an inorganic p-type semiconductor. The inorganic p-type semiconductor enhances photoelectric conversion efficiency. The inorganic p-type semiconductor is preferably a substance which has a stable reversible oxidation-reduction pair having a redox potential, that is 0.1 to 0.9 V smaller than an oxidation potential of a dye, and also can transport charges between electrodes at sufficiently high speed.

The reversible oxidation-reduction pair is preferably composed of a halogen molecule and a halogen compound such as $I^-/I_3^-$ pair. In such a reversible oxidation-reduction pair, reduced species such as $I^-$ receive holes from the dye to be converted into oxidated species such as $I_3^-$. The oxidated species can transport holes to the electronic conductive electrode 15 due to the move in the hole transporting polymer electrolyte film.

Examples of the halogen molecules include chlorine, bromine and iodine molecules.

Examples of the halogen compound include metal halides such as alkali metal, alkali earth metal and transition metal; halogenated quaternary ammonium compounds; and halogenated molten salts.

Specific examples of the metal halide include LiI, NaI, KI, CsI, $CaI_2$, $MgI_2$, $AlI_3$, $PbI_2$, $SnI_2$, $SnI_4$, $GeI_4$, $GaI_3$, $TiI_4$, $NiI_2$, $CoI_2$, $ZnI_2$, $MgI_2$, $CuI_2$, $RuI_3$, $PtI_4$, $MnI_2$, $OsCl_3$, $IrBr_3$, $RhI_3$, $PdI_2$, $GaI_4$, $FeI_2$, $CaCl_2$, $ZnCl_2$, $MgCl_2$, $BCl_3$, $PCl_3$, LiBr, NaBr, KBr, CsBr, $CaBr_2$, $ScBr_3$, $SiI_4$ and $TiBr_4$.

Examples of the halogenated quaternary ammonium compound include halogen compounds such as tetramethylammonium salt, tetraethylammonium salt, tetrapropylammoniumsalt, tetrabutylammonium salt, tetrahexylammonium salt, trimethylethylammonium salt, trimethylphenylammonium salt, triethylphenylammonium salt, trimethylbenzylammonium salt, trimethyloctylammonium salt, acetylcholine salt and benzoylcholine salt.

Examples of the halogenated molten salt include halogen compounds such as pyridinium and imidazolium. Examples of the halogen compound of pyridinium include 1-acetonylpyridinium chloride, 1-aminopyridinium iodide, 4-bromopyridine hydrobromide, 4-bromopyridine hydrochloride, 1-n-butylpyridine bromide, ethylpyridinium bromide, ethylpyridinium chloride, chloromethylpyridine hydrochloride, 2-chloromethylpyridinium iodide, hexadecylpyridinium bromide, hexadecylpyridinium chloride and 1,1'-dimethyl-4,4'-bipyridinium dichloride.

Examples of the halogen compound of imidazolium include 1,1-dimethylimidazolium iodide, 1-methyl-3-ethylimidazolium iodide, 1-methyl-3-pentylimidazolium iodide, 1-methyl-3-isopentylimidazolium iodide, 1-methyl-3-hexylimidazolium iodide, 1-methyl-3-isohexyl (branched) imidazolium iodide, 1-methyl-3-ethylimidazolium iodide, 1,2-dimethyl-

(Best Mode of Seventh Aspect)

An object of the present aspect is to solve the above problem of the prior art and to provide a conductive composition containing a conjugated conductive polymer, which has high conductivity and does not cause a large change in electrical conductivity due to temperature variation, and the amount of residual ions included therein is small.

The conductive compositions of the present application are described below. The polyalkylene constituting the polyanion is a polymer in which a main chain includes a repeating unit of methylene. Examples of the polyalkenylene include a polymer comprising a constituent unit having one vinyl group in a main chain.

Examples of the substituent of the polymer included in the polyanion include alkyl group, hydroxy group, carboxyl group, cyano group, phenyl group, phenol group, ester group, alkoxy group and carbonyl group. The alkyl group has excellent solubility and dispersibility in a polar or nonpolar solvent and dispersibility, compatibility, dispersibility and the like in an organic resin. The hydroxy group is likely to form a hydrogen bond with the other hydrogen atom and also has excellent solubility in an organic solvent, and compatibility with, dispersibility in and addition to an organic resin. The cyano group and hydroxyphenyl group is excellent in compatibility with a polar resin and solubility and is also excellent in heat resistance. Among these substituents, alkyl group, hydroxy group and cyano group are preferable.

Examples of the alkyl group include alkyl groups such as methyl, ethyl, propyl, butyl, isobutyl, t-butyl, pentyl, hexyl, octyl, decyl and dodecyl groups; and cycloalkyl groups such as cyclopropyl, cyclopentyl and cyclohexyl groups. Taking account of solubility in an organic solvent, dispersibility in a resin, steric hindrance, and the like, an alkyl group having 1 to 12 carbon atoms is more preferable.

Examples of the hydroxy group include hydroxy group bonded directly with the main chain of the polyanion, hydroxy group bonded with the end of an alkyl group having 1 to 7 carbon atoms bonded with the main chain of the polyanion, and hydroxy group bonded with the end of an alkenyl group having 2 to 7 carbon atoms bonded with the main chain of the polyanion. Among these groups, a hydroxy group bonded with the end of an alkyl group having 1 to 6 carbon atoms bonded with the main chain is preferable in view of compatibility with a resin and solubility in an organic solvent.

Examples of the cyano group include cyano group bonded directly with the main chain of the polyanion, cyano group bonded with the end of an alkyl group having 1 to 7 carbon atoms bonded with the main chain of the polyanion, and cyano group bonded with the end of an alkenyl group having 2 to 7 carbon atoms bonded with the main chain of

the polyanion.

Examples of the hydroxyphenyl group include hydroxyphenyl group bonded directly with the main chain of the polyanion, hydroxyphenyl group bonded with the end of an alkyl group having 1 to 6 carbon atoms bonded with the main chain of the polyanion, and hydroxyphenyl group bonded with the end of an alkenyl group having 2 to 6 carbon atoms bonded with the main chain of the polyanion.

Examples of the polyalkylene having a substituent include polyethylene, polypropylene, polybutene, polypentene, polyhexene, polyvinyl alcohol, polyvinylphenol, poly 3,3,3-trifluoropropylene, polyacrylate and polystyrene.

Specific examples of the polyalkenylene include polymers containing at one or more constituent units selected from propenylene, 1-methylpropenylene, 1-butyl-propenylene, 1-decyl-propenylene, 1-cyano-propenylene, 1-phenyl-propenylene, 1-hydroxy-propenylene, 1-butenylene, 1-methyl-1-butenylene, 1-ethyl-1-butenylene, 1-octyl-1-butenylene, 1-pentadecyl-1-butenylene, 2-methyl-1-butenylene, 2-ethyl-1-butenylene, 2-butyl-1-butenylene, 2-hexyl-1-butenylene, 2-octyl-1-butenylene, 2-decyl-1-butenylene, 2-dodecyl-1-butenylene, 2-phenyl-1-butenylene, 2-butenylene, 1-methyl-2-butenylene, 1-ethyl-2-butenylene, 1-octyl-2-butenylene, 1-pentadecyl-2-butenylene, 2-methyl-2-butenylene, 2-ethyl-2-butenylene, 2-butyl-2-butenylene, 2-hexyl-2-butenylene, 2-octyl-2-butenylene, 2-decyl-2-butenylene, 2-dodecyl-2-butenylene, 2-phenyl-2-butenylene, 2-propylenephenyl-2-butenylene, 3-methyl-2-butenylene, 3-ethyl-2-butenylene, 3-butyl-2-butenylene, 3-hexyl-2-butenylene, 3-octyl-2-butenylene, 3-decyl-2-butenylene, 3-dodecyl-2-butenylene, 3-phenyl-2-butenylene, 3-propylenephenyl-2-butenylene, 2-pentenylene, 4-propyl-2-pentenylene, 4-propyl-2-pentenylene, 4-butyl-2-pentenylene, 4-hexyl-2-pentenylene, 4-cyano-2-pentenylene, 3-methyl-2-pentenylene, 4-ethyl-2-pentenylene, 3-phenyl-2-pentenylene, 4-hydroxy-2-pentenylene and hexenylene.

Among these constituent units of the polymer constituting the polyanion, substituted or unsubstituted butenylene is preferable because there is an interaction between a conductive polymer and an unsaturated bond in the polyalkenylene and synthesis can be conducted using the substituted or unsubstituted butadiene as a starting material.

The aforementioned polyanion comprises a constituent unit having an anion group and a constituent unit having no anion group, and a copolymer of a monomer which has an anion group and a monomer which does not have anion group is preferable. The monomer having an anion group and the monomer having no anion group may be the same, except for the presence of or absence of the anion group, or may be different as far as they are copolymerizable.

The anion group of the constituent unit having the anion group is a sulfonic acid group.

In view of the doping effect of the functional group on the conjugated conductive polymer, sulfonic acid group is present.

This anion group may be directly bonded with the main chain of the polymer constituting the polyanion, and this polymer may have a side chain and the side chain may have an anion group.

When the anion group is bonded with the side chain, since the doping effect with the conjugated conductive polymer is exerted, characteristics such as size and length of the side chain as well as polarity exert a large influence on conductivity, heat resistance, compatibility and the like of the resulting composition. From such a point of view, it is preferred that the side chain is or include an optionally substituted alkylene having 1 to 9 carbon atoms, an optionally substituted alkenylene having 2 to 9 carbon atoms, 1 to 3 aromatic rings and/or 1 to 3 heterocycles, and the anion group is bonded with the end.

Regarding doping of the conjugated conductive polymer with an anionic dopant, 3 to 4 mols of the conjugated conductive polymeric monomer is usually doped with 1 mol of an anion group. In the polyanion according to the present aspect, when a ratio of the number (m) of the constituent unit (i.e. monomer) having an anion group (hereinafter referred to as a unit A) to the number (n) of the constituent unit (i.e. monomer) having no anion group (hereinafter referred to as a unit B), m/n, and a ratio of the conjugated conductive polymer to the polyanion are appropriately adjusted, 1 mol of an anion group can be obtained based on 3 to 4 mols of the conjugated conductive polymeric monomer.

Also the mol number of the anion group contained in the polyanion is adjusted to the mol number smaller than that required to doping, and the deficiency is covered by the addition of an anion other than the polyanion. Consequently, it is made possible to reduce residual ions and to control heat deterioration resistance and conductivity due to the dopant. Furthermore, characteristics such as solvent solubility, dispersibility and compatibility with resin of the conductive composition are improved by appropriately selecting the anion other than the polyanion.

The polyanion according to the present aspect exerts the doping effect on the conjugated conductive polymer and also exerts a large influence on characteristics such as dissolution and dispersion in and compatibility with the other component. By appropriately changing the ratio of the unit A to the unit B in the polyanion, the solvent, which dissolves or disperse the conductive composition, can be controlled. Solubility and dispersion in a polar solvent can be improved by introducing a polar functional group into the unit B and/or increasing the ratio of the unit A in the polyanion. When excess anion group is introduced, characteristics of the coating film of the conductive composition may deteriorate, and therefore the amount of the anion group is preferably controlled within a fixed range.

In the polyanion according to the present aspect of claim 1, the ratio of the unit A to the unit B must be 1 or less (m/n & ie; 1), preferably less than 1, and more preferably from 0.2 to 0.7 in the polyanion according to the present aspect of claim 2, the ratio of the unit A to the unit B must be from 02 to 1 ($0.2 \leq m/n \leq 1$). When the ratio is adjusted

within the above range, the unit A is widely dispersed in the polyanion and anion distributions spreads, and the main chain of the conjugated conductive polymer can be extended along the polyanion main chain. Also the anion group in the polyanion can be effectively used for doping and excess residual ions can be remarkably reduced.

When the ratio of the anion is more than the above range, anion groups in the polyanion exist too closer and anion groups are remained in the state where they do not trap the conjugated conductive polymer by the interruption of near anion group. Therefore, the coating film obtained by applying the conductive polymer and drying tend to be influenced by water, and temperature dependence may arise.

The polymerization degree of the polyanion is not specifically limited and a number average polymerization degree is preferably from 10 to 1000 in view of solubility in an organic solvent and compatibility with the resin.

The polyanion can be obtained by oxidation polymerization of a polymerizable monomer for unit A and a polymerizable monomer for unit B in the presence of an oxidizing agent and/or a polymerization catalyst.

Examples of the polymerizable monomer for unit B include monomers for polyalkylene, such as substituted or unsubstituted ethylene compounds, substituted or unsubstituted acrylic acid compounds, substituted or unsubstituted vinyl aromatic compounds, substituted or unsubstituted vinylamines, substituted or unsubstituted acrylamide compounds, substituted or unsubstituted or optionally substituted vinyl heterocyclic compounds and substituted or unsubstituted vinylphenol compounds. There can also be exemplified optionally substituted divinylbenzene compounds, optionally substituted silylstyrenes and optionally substituted phenol compounds.

Specific examples thereof include ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, & agr;-methylstyrene, 2-vinylnaphthalene, 6-methyl-2-vinylnaphthalene, 1-vinyl imidazole, vinyl pyridine, vinyl acetate, acrylaldehyde, acrylnitrile, N-vinyl-2-pyrrolidone, acrylamide, N,N-dimethylacrylamide, methyl acrylate, ethyl acrylate, propyl acrylate, butyl acrylate, isobutyl acrylate, isooctyl acrylate, isononylbutyl acrylate, allyl acrylate, ethyl methacrylate, hydroxyethyl acrylate, methoxyethyl acrylate, methoxybutyl acrylate, stearyl acrylate, acrylic acid ester, acryloyl morpholine, vinylamine, N,N-dimethylvinylamine, N,N-diethylvinylamine, N,N-dibutylvinylamine, N,N-di-t-butylvinylamine, N,N-diphenylvinylamine, N-vinyl carbazole, vinyl alcohol, vinyl chloride, vinyl fluoride, methyl vinyl ether and ethyl vinyl ether.

Examples of the polymerizable monomer for polyalkenylene include substituted or unsubstituted cyclovinylene compounds and substituted or unsubstituted butadiene compounds.

Specific examples thereof include cyclopropene, cyclobutene, cyclopentene, cyclohexene, cycloheptene, cyclooctene, 2-methylcyclohexene, vinylphenol, 1,3-butadiene, 1,3-methyl-3-butadiene, 2-methyl-1,3-butadiene, 1,4-dimethyl-1,3-butadiene, 1,2-dimethyl-1,3-butadiene, 1,3-dimethyl-1,3-butadiene, 1-octyl-1,3-butadiene, 2-octyl-1,3-butadiene, 1-phenyl-1,3-butadiene, 2-phenyl-1,3-butadiene, 1-hydroxy-1,3-butadiene and 2-hydroxy-1,3-butadiene.

As the monomer for unit A, for example, there can be used vinylsulfonic acid, vinylsulfonic acid salt, allylsulfonic acid, allylsulfonic acid salt, methallysulfonic acid, methallylsulfonic acid salt, styrenesulfonic acid, 4-sulfobutyl methacrylate, 4-sulfobutyl methacrylate salt, methallyloxybenzenesulfonic acid, methallylloxybenzenesulfonic acid salt, allyloxybenzenesulfonic acid, allyloxybenzenesulfonic acid salt, styrenesulfonic acid salt, & agr;-methylstyrenesulfonic acid, & agr;-methylstyrenesulfonic acid salt, acrylamide-tbutylsulfonic acid, acrylamide-t-butylsulfonic acid salt, 2-acrylamide-2-methylpropanesulfonic acid, 2-acrylamide-2-methylpropanesulfonic acid salt, cyclobutene-3-sulfonic acid, cyclobutene-3-sulfonic acid salt, isoprenesulfonic acid, isoprenesulfonic acid salt, 1,3-butadiene-1-sulfonic acid, 1,3-butadiene-1-sulfonic acid salt, 1-methyl-1,3-butadiene-2-sulfonic acid, 1-methyl-1,3-butadiene-3-sulfonic acid salt, 1-methyl-1,3-butadiene-4-sulfonic acid and 1-methyl-1,3-butadiene-4-sulfonic acid salt

As the oxidizing agent, there can be used peroxodisulfates such as ammonium peroxodisulfate, sodium peroxodisulfate and potassium peroxodisulfate; transition metal compounds such as ferric chloride, ferric sulfate and cupric chloride; metal oxides such as silver oxide and cesium oxide; peroxides such as hydrogen peroxide and ozone; organic peroxides such as benzoyl peroxide; and oxygen.

The solvent used in the oxidation polymerization is not specifically limited and may be a solvent which can dissolve or disperse the polyanion and/or the conjugated conductive polymer. Examples thereof include polar solvents such as water, N-methyl-2-pyrrolidone, N,N'-dimethylformamide, N,N'-dimethylacetamide and dimethyl sulfoxide; phenols such as cresol, phenol and xylenol; alcohols such as methanol, ethanol, propanol and butanol; ketones such as acetone and methyl ethyl ketone; hydrocarbons such as hexane, benzene and toluene; and carboxylic acids such as formic acid and acetic acid. These solvents can be used alone or in combination, or a mixture with the other organic solvent may be used.

The anion other than the polyanion is not specifically limited as far as the conjugated conductive polymer can be doped. In view of the adjustment of de-doping characteristics from the conjugated conductive polymer as well as solvent solubility of the conductive composition according to the present aspect, compatibility with and dispersibility in the other component, heat resistance and environment-resistant characteristics, an organic acid is preferable.

Examples of the organic acid include organic carboxylic acid, phenols and organic sulfonic acid. In view of the doping effect on the conjugated conductive polymer, an organic sulfonic acid is more preferable.

As the organic sulfonic acid, there can be used those in which aliphatic compounds, aromatic compounds and cyclic aliphatic compounds have one or more sulfonic acid groups. Examples of the organic acid having one sulfonic acid group include sulfonic acid compounds having a sulfonic acid group such as methanesulfonic acid, ethanesulfonic acid, 1-propanesulfonic acid, 1-butanesulfonic acid, 1-hexanesulfonic acid, 1-heptansulfonic acid, 1-octanesulfonic acid, 1-nonanesulfonic acid, 1-decanesulfonic acid, 1-dodecanesulfonic acid, 1-tetradecanesulfonic acid, 1-pentadecanesulfonic acid, 2-bromoethanesulfonic acid, 3-chloro-hydroxypropanesulfonic acid, trifluoromethanesulfonic acid, colistinmethanesulfonic acid, 2-acrylamide-2-methylpropanesulfonic acid, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, benzenesulfonic acid, p-toluenesulfonic acid, xylenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, hexadecylbenzenesulfonic acid, 2,4-dimethylbenzenesulfonic acid, dipropylbenzenesulfonic acid, butylbenzenesulfonic acid, 4-aminobenzenesulfonic acid, o-aminobenzenesulfonic acid, m-aminobenzenesulfonic acid, 4-amino-2-chlorotoluene-5-sulfonic acid, 4-amino-3-methylbenzenelsulfonic acid, 4-amino-5-methoxy-2-methylbenzenesulfonic acid, 2-amino-5-methylbenzene-1-sulfonic acid, 4-amino-2-methylbenzenel-sulfonic acid, 5-amino-2-methylbenzene-1-sulfonic acid, 4-amino-3-methylbenzene-1-sulfonic acid, 4-acetamide-3-chlorobenzenesulfonic acid, 4-chloro-3-nitrobenzenesulfonic acid, p-chlorobenzenesulfonic acid, naphthalenesulfonic acid, methylnaphthalenesulfonic acid, propylnaphthalenesulfonic acid, butylnaphthalenesulfonic acid, pentylnaphthalenesulfonic acid, dimethylnaphthalenesulfonic acid, 4-amino-1-naphthalenesulfonic acid, 8-chloronaphthalene-1-sulfonic acid, naphthalenesulfonic acid formalin polycondensate and melaminesulfonic acid formalin polycondensate.

Examples of the organic acid having two or more sulfonic acid groups include ethanedisulfonic acid, butanedisulfonic acid, pentanedisulfonic acid, decanedisulfonic acid, m-benzenedisulfonic acid, o-benzenedisulfonic acid, p-benzenedisulfonic acid, toluenedisulfonic acid, xylenedisulfonic acid, chlorobenzenedisulfonic acid, fluorobenzenedisulfonic acid, aniline-2,4-disulfonic acid, aniline-2,5-disulfonic acid, dimethylbenzenedisulfonic acid, diethylbenzenedisulfonic acid, dibutylbenzenesulfonic acid, naphthalenedisulfonic acid, methylnaphthalenedisulfonic acid, ethylnaphthalenedisulfonic acid, dodecylnaphthalenedisulfonic acid, pentadecylnaphthalenedisulfonic acid, butylnaphthalenedisulfonic acid, 2-amino-1,4-benzenedisulfonic acid, 1-amino-3,8-naphthalenedisulfonic acid, 3-amino-1,5-naphthalenedisulfonic acid, 8-amino-1-naphthol-3,6-disulfonic acid, 4-amino-5-naphthol-2,7-disulfonic acid, anthracenedisulfonic acid, butylanthracenedisulfonic acid, 4-acetamide-4’-isothio-cyanatostilbene-2,2’-disulfonic acid, 4-acetamide-4’-isothiocyanatostilbene-2,2’-disulfonic acid, 4-acetamide-4’-maleimidylstilbene-2,2’-disulfonic acid, 1-acetoxypyrene-3,6,8-trisulfonic acid, 7-amino-1,3,6-naphthalenetrisulfonic acid, 8-aminonaphthalene-1,3,6-trisulfonic acid and 3-amino-1,5,7-naphthalenetrisulfonic acid.

This anion other than polyanion may be added to a solution containing the polymerizable conjugated monomer, polyanion and an oxidizing agent and/or an oxidation polymerization catalyst before the polymerization of the conjugated conductive polymer, or added to a conductive composition containing a polyanion and a conjugated conductive polymer after the polymerization of the conjugated conductive polymer.

The conjugated conductive polymer used in the present aspect comprises one or more kinds selected from polypyrroles, and polythiophenes.

The conjugated conductive polymer can have sufficient compatibility with or dispersibility in additive components such as other organic resin component even when it is unsbstituted. However, it is more preferable to have functional groups, which are effective for dispersion or dissolution in an organic resin component and a solvent, such as alkyl group, carboxy group, sulfonic acid group, alkoxy group and hydroxy group into the conjugated conductive polymer.

Specific examples of the conjugated conductive polymer include polypyrrole, poly(3-methylpyrrole), poly(3-butylpyrrole), poly(3-octylpyrrole), poly(3-decylpyrrole), poly(3,4-dimethylpyrrole), poly(3,4-dibutylpyrrole), poly(3-hydroxypyrrole), poly(3-methyl-4-hydroxypyrrole), poly(3-methoxypyrrole), poly(3-ethoxypyrrole), poly(3-octoxypyrrole), poly(3-carboxylpyrrole), poly(3-methyl-4-carboxylpyrrole), polythiophene, poly(3-methylthiophene), poly(3-butylthiophene), poly(3-decylthiophene), poly(3-dodecylthiophene), poly(3-methoxythiophene), poly(3-ethoxythiophene), poly(3-octoxythiophene), poly(3-carboxylthiophene), poly(3-methyl-4-carboxylthiophene), poly(3,4-ethylenedioxythiophene).

The conductive composition according to the present aspect can be used alone, but can be used in combination with an organic resin for adjustment of film properties so as to adjust film forming properties, film strength and the like of the conductive composition.

The organic resin for adjustment of film properties may be a thermosetting resin or a thermoplastic resin as far as it is compatible with or dispersible in the conductive composition. Examples thereof include polyester-based resins such as polyethylene terephthalate, polybutylene terephthalate and polyethylene naphthalate; polyimide-based resins such as polyimide and polyamideimide; polyamide resins such as polyamide 6, polyamide 6,6, polyamide 12 and polyamide 11; fluororesins such as polyvinylidene fluoride, polyvinyl fluoride, polytetrafluoroethylene, ethylenetetrafluoroethylene copolymer and polychlorotrifluoroethylene; vinyl resins such as polyvinyl alcohol, polyvinyl ether, polyvinyl butyral, polyvinyl acetate and polyvinyl chloride; epoxy resins; xylene resins; aramid resins; polyurethane-based resins; polyurea-based resins; melamine resins; phenolic resins; polyethers; acrylic resins; and copolymers thereof.

To adjust electrical conductivity of the conductive composition, a redox potential of conjugated electrons of the conjugated conductive polymer may be changed by doping the conductive composition with an acceptable or donative dopant.

As the acceptable dopant, for example, halogen compounds, Lewis acids, proton acids, organic cyano compounds and organic metal compounds can be used.

Examples of the halogen compound include chlorine (Cl2), bromine (Br2), iodine (I2), iodine chloride (ICl), iodine bromide (IBr) and iodine fluoride (IF).

Examples of the Lewis acid include PF5, AsF5, SbF5, BF5, BCl5, BBr5 and SO3.

Examples of the proton acid include inorganic acids such as hydrochloric acid, sulfuric acid, nitric acid, phosphoric acid, fluoroboric acid, hydrofluoric acid and perchloric acid; and organic acids such as organic carboxylic acid and organic sulfonic acid.

As the organic carboxylic acid and organic sulfonic acid, the aforementioned carboxylic acid compound and the aforementioned sulfonic acid compound can be used.

As the organic cyano compound, compounds having two or more cyano groups in a conjugated bond can be used. Examples thereof include tetracyanoethylene, tetracyanoethylene oxide, tetracyanobenzene, tetracyanoquinodimethane and tetracyanoazanaphthalene.

Examples of the donative dopant include alkali metals, alkali earth metals and quaternary amine compounds.

The method for preparing the conductive composition of the present aspect will now be described.

According to the method for preparing a conventional doped conjugated conductive polymer, first, a conjugated conductive polymer is polymerized and then a dopant is added to the resulting conjugated conductive polymer. In this case, the conjugated conductive polymer is liable to be aggregated to have spherical form and is inferior in efficiency of imparting conductivity to the conjugated conductive polymer-containing composition.

The conductive composition of the method of the present aspect is characterized by oxidation polymerization of a monomer of the conjugated conductive polymer in the presence of a polyanion.

Upon the oxidation polymerization of the conjugated conductive polymer, an anion group of a polyanion forms a salt with the conjugated conductive polymer with the growth of the main chain of the conjugated conductive polymer in a solution mixture of a polyanion, an oxidizing agent or an oxidation polymerization catalyst, and a monomer capable of copolymerizing the conjugated conductive polymer, and thus the conjugated conductive polymer is doped. Particularly, sulfonic acid group strongly forms a salt with the conjugated conductive polymer, the conjugated conductive polymer is strongly drawn to the main chain of the polyanion and the main chain of the conjugated conductive polymer grows along the main chain of the polyanion to easily obtain a regularly arranged conjugated conductive polymer. The conjugated conductive polymer thus synthesized reacts with the polyanion to produce a huge number of salts, which are fixed to the main chain of the polyanion. The conductive composition thus synthesized is less likely to cause elimination of a dopant due to exterior contaminants, heat and humidity of the external environment, and thus a conductive composition having excellent heat resistance and moisture resistance is obtained.

EXAMPLES

(Test Method)

(1) Solvent solubility

Solubility in each of NMP (N-methyl pyrrolidone), acetone, MEK (methyl ethyl ketone), toluene and water was examined. Samples were considered to be dissolved when particles are not remained after dissolving in a solvent and a coating film can be formed. The amount dissolved in each solvent was evaluated according to the following criteria.

A: dissolved in an amount of more than 3%
B: dissolved in an amount of 1 to 3%
C: dissolved in an amount of less than 1% or not dissolved

(2) Surface resistance

Surface resistance of a coating film having a thickness of 2 μm was measured by using a resistivity meter (manufactured by Mitsubishi Chemical Corporation under the trade name of LORESTA GP).

(3) Ion concentration

After dipping the resulting conductive composition in pure water at room temperature for 24 hours, ion concentrations of sulfuric acid, nitric acid and chlorine ions extracted in pure water were measured by using an ion chromatograph (ion chromatograph manufactured by Dionex Corporation under the trade name of ION CHROMATOGRAPH DX-120) and the total of the resulting ion concentrations of these ions were taken as the ion concentration.

(Example 1)

1) Synthesis of cyano group-containing polymer compound
50 g of acrylonitrile and 5 g of butadiene were dissolved in 500 ml of toluene and 2.5 g of azobisisobutyronitrile as a polymerization initiator was added, and then the mixture was polymerized at 60°C for 8 hours.
The polymer produced by polymerization was washed with methanol.

2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.
To this solution, an oxidizing agent solution prepared by dissolving 250 g of ferric chloride in 1250 ml of acetonitrile was added dropwise over 2 hours while maintaining at -20°C. Furthermore, the pyrrole was polymerized while continuously stirring for 12 hours. After the completion of the reaction, the resulting solution showed a blackish blue color.
After the completion of the reaction, a precipitate produced by adding 2000 ml of methanol to the uniform solution obtained was filtered and washed with methanol and pure water until the filtrate becomes clear to obtain a conductive composition. Solvent solubility, surface resistance and ion concentration of the resulting conductive composition were examined according to the above test methods. The results are shown in Table 1.

(Example 2)

1) Synthesis of cyano group-containing polymer compound
30 g of acrylonitrile and 20 g of lauryl acrylate were dissolved in 500 ml of toluene and 2.5 g of azobisisobutyronitrile as a polymerization initiator was added, and then the mixture was polymerized at 60°C for 8 hours.
The polymer produced by polymerization was washed with methanol.

2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.
To this solution, an oxidizing agent solution prepared by dissolving 250 g of ferric chloride in 1250 ml of acetonitrile was added dropwise over 2 hours while maintaining at -20°C. Furthermore, the pyrrole was polymerized while continuously stirring for 12 hours. After the completion of the reaction, the resulting solution showed a blackish blue color.
After the completion of the reaction, a precipitate produced by adding 2000 ml of methanol was filtered and washed with methanol and pure water until the filtrate becomes clear to obtain a conductive composition. In the same manner as in Example 1, a test was conducted. The results are shown in Table 1.

(Example 3)

1) Synthesis of cyano group-containing polymer compound
30 g of acrylonitrile and 20 g of methyl acrylate were dissolved in 500 ml of toluene and 2.5 g of azobisisobutyronitrile as a polymerization initiator was added, and then the mixture was polymerized at 60°C for 8 hours. The polymer produced by polymerization was washed with methanol.

2) Preparation of conductive composition

10 g of the cyano group-containing polymer compound obtained in the step 1) was dissolved in 90 g of acetonitrile and 50 g of 3-methylthiphene was added, followed by stirring for one hour while cooling to -20°C.
To this solution, an oxidizing agent solution prepared by dissolving 250 g of ferric chloride in 1250 ml of acetonitrile was added dropwise over 2 hours while maintaining at -20°C. Furthermore, 3-methylthiphene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a conductive composition. In the same manner as in Example 1, a test was conducted. The results are shown in Table 1.

(Example 4)

1) Synthesis of cyano group-containing polymer compound

30 g of methacrylonitrile and 20 g of 2-ethylhexyl acrylate were dissolved in 500 ml of toluene and 2.5 g of azobisisobutyronitrile as a polymerization initiator was added, and then the mixture was polymerized at 60°C for 8 hours. The polymer produced by polymerization was washed with methanol.

2) Preparation of conductive composition

10 g of the polymer resin compound obtained in the step 1) was dissolved in 90 g of acetonitrile and 50 g of 3-methylthiphene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiphene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a conductive composition. The resulting conductive composition had a SP value of 8.8.

3) Polymerization of insulating resin (acrylic resin)

20 g of methyl methacrylate, 20 g of 2-ethylhexylacrylate and 10 g of acrylic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol. The resulting polymer had a SP value of 8.1.

4) Preparation of conductive resin

30 g of the resulting insulating resin was dissolved in 120 g of acetone and mixed with 1 g of the conductive composition obtained in the step 2). After stirring at normal temperature for 2 hours, the mixture was dried in the form of a coating film to obtain a conductive resin. In the same manner as in Example 1, a test was conducted. The results are shown in Table 1.

The resulting conductive resin was a resin, which can be subjected to melt-extrusion molding and injection molding, similar to a conventional acrylic resin.

(Comparative Example 1)

10 g of dodecylbenzenesulfonic acid was added in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at - 20°C. Furthermore, pyrrole was polymerized while continuously stirring for 12 hours. After the completion of the reaction, the resulting solution was a dispersion which showed a black color and caused precipitation of microparticles when allowed to stand for a while.

After the completion of the reaction, the resulting precipitate was filtered and washed with methanol and pure water until the filtrate becomes clear to obtain a conductive composition. In the same manner as in Example 1, a test was conducted. The results are shown in Table 1.

(Comparative Example 2)

10 g of sodium polystyrenesulfonate was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at - 20°C. Furthermore, pyrrole was polymerized while continuously stirring for 12 hours. After the completion of the reaction, the resulting solution was a solution which showed a blue color and is uniformly dissolved.

After the completion of the reaction, the resulting solution was washed by passing through a column filled with an ion-exchange resin several times to obtain a conductive composition. In the same manner as in Example 1, a test was conducted. The results are shown in Table 1.

Table 1

| | Solvent solubility | | | | | Surface resistance Ω/□ | Ion concentration ppm |
|---|---|---|---|---|---|---|---|
| | NMP | Acetone | MEK | Toluene | Water | | |
| Example 1 | A | B | C | C | C | $2 \times 10^3$ | 800 |
| Example 2 | A | A | A | B | C | $9 \times 10^3$ | 600 |
| Example 3 | A | A | A | B | C | $7 \times 10^3$ | 600 |
| Example 4 | A | A | A | A | C | $8 \times 10^3$ | 900 |
| Comparative Example 1 | B | C | C | C | C | $2 \times 10^3$ | 6700 |
| Comparative Example 2 | C | C | C | C | A | $1 \times 10^3$ | 7200 |

As is apparent from the results shown in Table 1, the conductive compositions of Comparative Examples 1 and 2 do not exhibit good solubility in organic solvents such as NMP, acetone, MEK and toluene, whereas, the conductive resin compositions of Examples 1 to 4 are dissolved in any of these organic solvents and are soluble in organic solvents having a SP value within a wide range. As described above, the conductive resin compositions of the present invention are useful because they are uniformly dissolved in various solvents and can be uniformly applied as a conductive coating material. The conductive compositions of Examples 1 to 3 can be subjected to solution molding and the conductive resin of Example 4 can be subjected to extrusion molding and injection molding.

The conductive resins of Comparative Examples 1 and 2 have high ion concentration and exhibit ionic conductivity and therefore conductivity drastically varies with humidity of the operating environment, whereas, the conductive resins of Examples 1 to 4 show low ion concentration and exhibit no ionic conductivity and therefore exhibit stable conductivity which does not vary with humidity.

(Examples of Second Aspect)

The present aspect will now be described in detail by way of examples.

(Test Method)

(1) Solvent solubility before curing

Solubility in each of NMP (N-methyl pyrrolidone), acetone, MEK (methyl ethyl ketone) and toluene was examined. Samples were considered to be dissolved when a coating film can be formed and particles are not remained after dissolving in a solvent. The amount dissolved in each solvent was evaluated according to the following criteria.

A: dissolved in an amount of more than 3%

B: dissolved in an amount of 1 to 3%

C: dissolved in an amount of less than 1% or not dissolved

(2) Electrical conductivity

Electrical conductivity (unit: S/cm) of a coating film having a thickness of 2 μm was measured by using a resistivity meter (manufactured by Mitsubishi Chemical Corporation under the trade name of LORESTA MCP-T600).

(3) Solvent resistance of coating film after curing

Each of NMP, toluene and water was dropped on a coating film after curing and, after standing for one hour,

the solvent was wiped off. The state of the coating film was visually observed and evaluated according to the following criteria.

A: no change in coating film is observed
B: coating film is swollen
C: coating film is peeled off (eliminated)

(Example 5)

1) Synthesis of cyano group-containing polymer compound

50 g of acrylonitrile and 5 g of butadiene were dissolved in 500 ml of toluene and 2.5 g of azobisisobutyronitrile as a polymerization initiator was added, and then the mixture was polymerized at 60°C for 8 hours.
The polymer produced by polymerization was washed with methanol.

2) Preparation of conductive composition

10 g of the cyano group-containing polymer compound obtained in the step 1) was dissolved in 90 g of acetonitrile and 50 g of a precursor monomer of a $\pi$-conjugated conductive polymer of pyrrole was added, followed by stirring for one hour while cooling to -20°C.
To this solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours. After the completion of the reaction, the resulting solution showed a blackish blue color.
After the completion of the reaction, a precipitate produced by adding 2000 ml of methanol to the uniform solution was filtered and washed with methanol and pure water until the filtrate becomes clear to obtain a mixture of a cyano group-containing polymer compound and a $\pi$-conjugated conductive polymer. Solvent solubility of the resulting mixture was tested according to the above test method. The results are shown in Table 2.
Subsequently, a 3% NMP solution of this mixture was mixed with a curing agent including 10% of dimethylol cresol based on the solid content to prepare a solution of a conductive composition of the present aspect, and the resulting solution was applied onto a glass plate so that a dry coating film has a thickness of 2 $\mu$m and then dried at 120°C for 2 hours to form a film. Electrical conductivity of the coating film thus formed was measured immediately after formation (initial) and after standing at 125°C for 240 hours according to the above test method. Also the solvent resistance was measured according to the above test method. The results are shown in Table 2.

(Example 6)

1) Synthesis of cyano group-containing polymer compound

30 g of acrylonitrile and 20 g of hydroxyethyl acrylate were dissolved in 500 ml of toluene and 2.5 g of azobisisobutyronitrile as a polymerization initiator was added, and then the mixture was polymerized at 60°C for 8 hours.
The polymer produced by polymerization was washed with methanol.

2) Preparation of conductive composition

10 g of the cyano group-containing polymer compound obtained in the step 1) was dissolved in 90 g of acetonitrile and 50 g of pyrrole was added, followed by stirring for one hour while cooling to -20°C.
To this solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours. After the completion of the reaction, the resulting solution showed a blackish blue color.
After the completion of the reaction, a precipitate produced by adding 2000 ml of methanol was filtered and washed with methanol and pure water until the filtrate becomes clear to obtain a mixture. Solvent solubility of the resulting mixture was tested in the same manner as in Example 1. The results are shown in Table 2.
Subsequently, a 3% NMP solution of this mixture was mixed with a curing agent comprising 5% of dimethylol cresol based on the solid content to prepare a solution of a conductive composition of the present aspect, and the resulting solution was applied onto a glass plate so that a dry coating film has a thickness of 2 $\mu$m and then dried at 120°C for 2 hours to form a film. In the same manner as in Example 5, electrical conductivity and solvent resistance of the coating film thus formed were measured. The results are shown in Table 2.

(Example 7)

1) Synthesis of cyano group-containing polymer compound

30 g of acrylonitrile and 20 g of methacrylic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol.

2) Preparation of conductive composition

10 g of the cyano group-containing polymer compound obtained in the step 1) was dissolved in 90 g of acetonitrile and 50 g of a precursor monomer of a π-conjugated conductive polymer of 3-methylthiophene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiophene was polymerized while continuously stirring for 12 hours. After the completion of the reaction, the resulting solution showed a blackish blue color.

After the completion of the reaction, a precipitate produced by adding 2000 ml of methanol was filtered and washed with methanol and pure water until the filtrate becomes clear to obtain a mixture. A solvent solubility test was conducted in the same manner as in Example 5. The results are shown in Table 2.

Subsequently, a 3% NMP solution of this mixture was mixed with a curing agent comprising 5% of a bisphenol A type epoxy resin ["EPIKOTE 828", manufactured by Japan Epoxy Resins Co., Ltd.] based on the solid content to prepare a solution of a conductive composition of the present aspect, and a coating film was formed in the same manner as in Example 1, using the resulting solution. Electrical conductivity and solvent resistance were measured. The results are shown in Table 2.

(Example 8)

1) Synthesis of cyano group-containing polymer compound

30 g of methacrylonitrile and 20 g of allylsulfonic acid were dissolved in 500 ml of toluene and 2.5 g of azobisisobutyronitrile as a polymerization initiator was added, and then the mixture was polymerized at 60°C for 8 hours. The polymer produced by polymerization was washed with methanol.

2) Preparation of conductive composition

10 g of the cyano group-containing polymer compound obtained in the step 1) was dissolved in 90 g of acetonitrile and 50 g of 3-methylthiophene was added, followed by stirring for one hour while cooling to -20°C.

To this solution, an oxidizing agent solution prepared by dissolving 250 g of ferric chloride in 1250 ml of acetonitrile was added dropwise over 2 hours while maintaining at -20°C. Furthermore, 3-methylthiophene was polymerized while continuously stirring for 12 hours.

After the completion of the reaction, a precipitate produced by adding 5000 ml of methanol was filtered and washed with methanol and pure water until the filtrate becomes clear to obtain a mixture of a cyano group-containing polymer compound and a π-conjugated conductive polymer. The resulting mixture had a SP value of 12.1. A solvent solubility test was conducted in the same manner as in Example 5. The results are shown in Table 2. A curing agent of 10% dimethylcresol was added to obtain a conductive composition of the present aspect.

3) Polymerization of insulating resin (acrylic resin)

20 g of methyl methacrylate, 20 g of allylsulfonic acid and 10 g of acrylic acid were dissolved in 500 ml of toluene and 2.5 g of azobisisobutyronitrile as a polymerization initiator was added, and the mixture was polymerized at 60°C for 8 hours. The polymer produced by polymerization was washed with methanol. The resulting polymer has a SP value of 12.8.

4) Preparation of conductive resin

30 g of the resulting insulating resin was dissolved in 120 g of acetone and mixed with 1 g of the conductive composition obtained in the step 2), followed by stirring at normal temperature for 2 hours. Then, the mixture was mixed with 0.02 g of a silane coupling agent (manufactured by SHIN-ETSU CHEMICAL CO., LTD. under the trade name of

KBM-403) and then dried at 120°C for 2 hours in the form of a coating film to obtain a conductive resin. Electrical conductivity and solvent resistance tests were conducted in the same manner as in Example 5. The results are shown in Table 2.

The resulting conductive resin was a resin, which can be subjected to melt-extrusion molding, injection molding, similar to a conventional acrylic resin.

(Comparative Example 3)

10 g of dodecylbenzenesulfonic acid was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at - 20°C. Furthermore, pyrrole was polymerized while continuously stirring for 12 hours. After the completion of the reaction, the resulting solution was a dispersion which showed a black color and caused precipitation of microparticles when allowed to stand for a while.

After the completion of the reaction, the resulting precipitate was filtered and washed with methanol and pure water until the filtrate becomes clear to obtain a conductive composition. In the same manner as in Example 5, a test was conducted. The results are shown in Table 2.

(Comparative Example 4)

10 g of sodium polystyrenesulfonate was dissolved in 100 g of pure water and 10 g of pyrrole was added, followed by stirring for one hour while cooling to -20°C.

To this solution, an oxidizing agent solution prepared by dissolving 250 g of ferric chloride in 1250 ml of pure water was added dropwise over 2 hours while maintaining at -20°C. Furthermore, pyrrole was polymerized while continuously stirring for 12 hours. After the completion of the reaction, the resulting solution was a solution which showed a blue color.

After the completion of the reaction, the resulting solution was washed by passing through a column filled with an ion-exchange resin several times to obtain a conductive composition. In the same manner as in Example 5, a test was conducted. The results are shown in Table 2.

Table 2

| | Solvent solubility | | | | Electrical conductivity | | Solvent resistance | | |
|---|---|---|---|---|---|---|---|---|---|
| | NMP | Acetone | MEK | Toluene | Initial (S/cm) | 125°C, 240 h (S/cm) | Water | NMP | Toluene |
| Example 5 | A | B | C | C | $2 \times 10^0$ | $3 \times 10^0$ | A | A | A |
| Example 6 | A | A | A | B | $9 \times 10^0$ | $8 \times 10^0$ | A | A | A |
| Example 7 | A | A | A | B | $7 \times 10^0$ | $7 \times 10^0$ | A | A | A |
| Example 8 | A | A | C | C | $8 \times 10^{-2}$ | $6 \times 10^{-2}$ | A | A | A |
| Comparative Example 3 | B | C | C | C | $2 \times 10^0$ | $1 \times 10^{-2}$ | C | C | C |
| Comparative Example 4 | C | C | C | C | $1 \times 10^0$ | $5 \times 10^{-1}$ | C | B | A |

As is apparent from the results shown in Table 2, the mixture constituting a portion of the conductive compositions of Comparative Examples 3 and 4 does not exhibit good solubility in organic solvents such as NMP, acetone, MEK and toluene, whereas, the mixture constituting a portion of the conductive resin compositions of Examples 5 to 8 are dissolved in any of these organic solvents and are soluble in organic solvents having a SP value within a wide range. In Examples 5 to 8, when the mixture of the cyano group-containing polymer compound and the $\pi$-conjugated conductive polymer is excellent in solvent solubility, the conductive composition obtained by mixing with the curing agent is excellent in solvent solubility.

As described above, the conductive resin compositions of the present invention are useful because they are uniformly dissolved in various solvents and can be uniformly applied as a conductive coating material. The conductive compositions of Examples 5 to 7 can be subjected to solution molding and the conductive resin of Example 8 can be

subjected to extrusion molding and injection molding.

Conductivity of the coating films or conductive resins of Comparative Examples 3 and 4 drastically varies with temperature of the operating environment, whereas, the coating films or conductive resins of Examples 5 to 8 exhibit excellent heat resistance because conductivity does not deteriorate even when exposed to high temperature conditions of 125°C. Furthermore, the coating films of Examples 5 to 8 exhibit excellent resistance to solvents such as water, NMP and toluene.

(Examples of Third Aspect)

The present aspect will now be described in detail by way of examples and comparative examples, but the present aspect is not limited by the examples.

(Evaluation)

The evaluation procedures in examples and comparative examples will now be described.

Electrical conductivity (S/cm): A solid was formed into a pellet (flat) measuring 0.1 mm in thickness ×30 mm × 30 mm by applying a pressure. Using the resulting pellet, electrical conductivity $R_{25B}$ at a temperature of 25°C was measured by a conductivity meter (manufactured by Mitsubishi Chemical Corporation under the trade name of LORESTA GP).

Change in electrical conductivity with heat (%): After measuring electrical conductivity $R_{25B}$ at a temperature of 25°C, the pellet was allowed to stand under the environment of a temperature of 150°C for 500 hours. Then, the temperature of the pellet was returned to 25°C and electrical conductivity $R_{25A}$ was measured. Change (rate of change) in electrical conductivity with heat (%) was calculated by the following equation.

$$\text{Change in electrical conductivity with heat (\%)} = 100 \times (R_{25B} - R_{25A})/R_{25B}$$

Residual ion analysis: Elution was conducted by providing 0.5 g of pellet in 50 ml of ultra pure water at 95°C for 16 hours and an effluent was measured by an ion chromatograph.

(Synthesis of hydrogen sulfate ester fullerene)

100 ml of fuming sulfuric acid was charged in a 300 ml flask and 5 g of a $C_{60}$ fullerene powder was added, followed by stirring under a nitrogen atmosphere at 60°C for 3 days. The resulting reaction solution was slowly added in a 200 ml of diethyl ether cooled in an ice water bath. The precipitated reaction product was separated, washed with a large amount of diethyl ether three times and then vacuum-dried in a vacuum oven at 60°C. The resulting dry substance was put in 200 ml of fuming sulfuric acid and, after stirring for 10 hours while feeding a nitrogen gas at 85°C, the product was separated. The separated product was washed with ion-exchange water three times and then vacuum-dried in a vacuum oven at 60°C. The powder thus obtained was subjected to the measurement by Fourier transform infrared spectrophotometry (FT-IR). The results nearly agreed with an IR spectrum of hydrogen sulfate ester fullerene disclosed in the document (Chiang, L. Y.; Wang, L. Y.; Swirczewski. J. W.; Soled, S.; Cameron, S., J. Org. Chem. 1994, 59, 3960).

Therefore, it was confirmed that the resulting powder is hydrogen sulfate ester fullerene $[C_{60}H_6(OSO_3H)_6]$.

(Synthesis of sulfonated carbon nano-tube)

1 g of a carbon nano-tube powder was added in 100 ml of chlorosulfonic acid, ultrasonic-dispersed and then refluxed under a nitrogen atmosphere at 130°C for 6 hours. The resulting reaction solution was slowly added in 200 ml of diethyl ether cooled in an ice water bath and then the reaction product was separated. The separated product was washed with a large amount of diethyl ether three times and then vacuum-dried in a vacuum oven at 60°C. The resulting dry matter was put in 200 ml of fuming sulfuric acid and, after stirring for 10 hours while feeding a nitrogen gas at 85°C, the product was separated. The separated product was washed with ion-exchange water three times and then vacuum-dried in a vacuum oven at 60°C. The powder thus obtained was subjected to FT-IR measurement. The resulting powder was burned and quantitative analysis of a recovered gas was conducted. As a result, it was confirmed that the powder contains five S(s) based on 100 carbon atoms. That is, it was confirmed that five hydrogens were sulfonated. Therefore, it was confirmed that the resulting powder is a sulfonated carbon nano-tube.

(Synthesis of sulfonated fullerene)

100 ml of fuming sulfuric acid was charged in a 300 ml flask and 5 g of a $C_{60}H_{12}$ fullerene powder was added, followed by stirring under a nitrogen atmosphere at 60°C for 3 days. The resulting reaction solution was slowly added in a 200 ml diethyl ether cooled in an ice water bath and the precipitated reaction product was separated. The resulting product was washed with a large amount of diethyl ether three times and then vacuum-dried in a vacuum oven at 60°C.

The resulting powder was subjected to FT-IR measurement. As a result, absorption of a sulfonic acid group was confirmed. Furthermore, the resulting powder was burned and quantitative analysis of a recovered gas was conducted. As a result, it was confirmed that six hydrogens were sulfonated. Therefore, it was confirmed that the resulting powder is a $C_{60}H_6(SO_3H)_6$ sulfonated fullerene.

(Synthesis of sulfonated cage-like carbon cluster)

150 ml of fuming sulfuric acid was charged in a 300 ml flask and 10 g of a $C_{30\text{-}60}H_{2\text{-}20}$ cage-like carbon cluster powder mixture was added, followed by stirring under a nitrogen atmosphere at 60°C for 3 days. The resulting reaction solution was slowly added in a 200 ml diethyl ether cooled in an ice water bath and the precipitated reaction product was separated. The resulting product was washed with a large amount of a solvent mixture of diethyl ether and acetonitrile (2:1) three times and then vacuum-dried in a vacuum oven at 60°C. The resulting powder was subjected to FT-IR measurement. As a result, absorption of a sulfonic acid group was confirmed. Furthermore, the resulting powder was burned and quantitative analysis of a recovered gas was conducted. As a result, it was confirmed that the powder contains eleven S(s) based on 100 carbon atoms. Therefore, it was confirmed that the resulting powder is a cage-like carbon cluster in which 10% or more carbons are sulfonated.

(Synthesis of polyisoprene-sodium isoprenesulfonate copolymer)

To a solvent mixture of 80 ml of water and 20 ml of methanol, 17 g of sodium isoprenesulfonate (manufactured by JSR Corporation under the trade name of IPS) and 13.6 g of isoprene (manufactured by Tokyo Kasei Kogyo Co., Ltd.) were added. While stirring at room temperature, a complex oxidizing agent solution prepared by previously dissolving 0.228 g of ammonium persulfate and 0.04 g of ferric sulfate in 10 ml of water was added dropwise for 20 minutes.

This solution mixture was stirred at room temperature for 3 hours and heated at reflux at 80°C for one hour, and then the solvent was removed under reduced pressure to obtain a pale yellow solid.

The results of IR absorption spectrum, ESCA analysis and GPC analysis revealed that the resulting compound is a copolymer including a sodium isoprenesulfonate unit and an isoprene unit in a ratio of about 1:2. The resulting pale yellow solid was a polyisoprene-sodium isoprenesulfonate copolymer.

(Example 9)

1.02 g of pyrrole, 1.53 g of polyisoprene-sodium isoprenesulfonate copolymer and 1.09 g of hydrogen sulfate ester fullerene (M1308) were dissolved in 60 ml of water. To the solution, 0.1 g of a 10 wt% sulfuric acid solution was added, followed by cooling to 0°C.

While maintaining the solution at 0°C, an oxidation catalyst solution prepared by dissolving 3.42 g of ammonium persulfate and 1.8 g of ferric sulfate in 30 ml of water was slowly added under stirring, followed by stirring for 3 hours. To the reaction solution, 100 ml of ethanol was added and the precipitate was filtered under reduced pressure to obtain a blackish blue solid.

The resulting blackish blue solid was homogeneously dispersed in 200 ml of water and 100 ml of ethanol was added, and then the precipitate was filtered under reduced pressure and the blackish blue solid was washed. The washing operation was conducted three times to remove residual ions in the solid. After vacuum-drying in a vacuum oven at 100°C, a blackish blue solid was obtained.

The resulting solid was compressed to give a pellet and electrical conductivity of the pellet was evaluated. The results are shown in Table 3.

(Example 10)

In the same manner as in Example 1, except that 1.34 g of a sulfonated carbon nano-tube was used in place of 1.09 g of a hydrogen sulfate ester fullerene in Example 10, a solid was obtained. Electrical conductivity of the resulting solid was evaluated in the same manner as in Example 9. The results are shown in Table 3.

(Example 11)

In the same manner as in Example 1, except that 1.01 g of sulfonated fullerene was used in place of 1.09 g of a hydrogen sulfate ester fullerene, a solid was obtained. Electrical conductivity of the resulting solid was evaluated in the same manner as in Example 9. The results are shown in Table 3.

(Example 12)

In the same manner as in Example 1, except that 0.71 g of a sulfonated cage-like carbon cluster was used in place of 1.09 g of a hydrogen sulfate ester fullerene, a solid was obtained. Electrical conductivity of the resulting solid was evaluated in the same manner as in Example 9. The results are shown in Table 3.

(Example 13)

1.02 g of pyrrole, 1.55 g of sodium polystyrenesulfonate and 0.43 g of a sulfonated cage-like carbon cluster were dissolved in 60 ml of water. To the solution, 0.1 g of a 10 wt% sulfuric acid solution was added, followed by cooling to 0°C.

While maintaining the solution at 0°C, an oxidation catalyst solution prepared by dissolving 3.42 g of ammonium persulfate and 1.8 g of ferric sulfate in 30 ml of water was slowly added under stirring, followed by stirring for 3 hours. To the reaction solution, 100 ml of ethanol was added and the precipitate was filtered under reduced pressure to obtain a blackish blue solid.

The resulting blackish blue solid was washed according to the washing method of Example 9 to obtain a blackish blue solid. The resulting solid was compressed to give a pellet and electrical conductivity of the pellet was evaluated. The results are shown in Table 3.

(Example 14)

1.02 g of pyrrole, 1.50 g of polyacrylonitrile and 0.86 g of a sulfonated cage-like carbon cluster were dissolved in 60 ml of acetonitrile. To the solution, 0.1 g of a 10 wt% sulfuric acid solution was added, followed by cooling to 0°C.

While maintaining the solution at 0°C, an oxidation catalyst solution prepared by dissolving 6.5 g of ferric chloride in 50 ml of acetonitrile was slowly added under stirring, followed by stirring for 3 hours. To the reaction solution, 100 ml of ethanol was added and the precipitate was filtered under reduced pressure to obtain a blackish blue solid.

The resulting blackish blue solid was washed according to the washing method of Example 9 to obtain a blackish blue solid. The resulting solid was compressed to give a pellet and electrical conductivity of the pellet was evaluated. The results are shown in Table 3.

(Comparative Example 5)

1.02 g (0.015 mols) of pyrrole and 3.92 g (0.003 mols) of a hydrogen sulfate ester fullerene (M1308) were dissolved in 100 ml of water. To the solution, 0.1 g of a 10 wt% sulfuric acid solution was added, followed by cooling to 0°C.

While maintaining the solution at 0°C, an oxidation catalyst solution prepared by dissolving 3.42 g (0.015 mols) of ammonium persulfate and 1.8 g (0.0045 mols) of ferric sulfate in 30 ml of water was slowly added under stirring, followed by stirring for 3 hours. To the reaction solution, 100 ml of ethanol was added and the precipitate was filtered under reduced pressure to obtain a blackish blue solid.

The resulting blackish blue solid was homogeneously dispersed in 200 ml of water and 100 ml of ethanol was added, and then the precipitate was filtered under reduced pressure and the blackish blue solid was washed. The washing operation was conducted three times to remove residual ions in the solid. After vacuum-drying in a vacuum oven at 100°C, a blackish blue solid was obtained.

The resulting solid was compressed to give a pellet and electrical conductivity of the pellet was evaluated. The results are shown in Table 3.

(Comparative Example 6)

1.02 g (0.015 mols) of pyrrole and 4.66 g (0.0225 mols) of sodium polystyrenesulfonate were dissolved in 100 ml of water, followed by cooling to 0°C.

While maintaining the solution at 0°C, an oxidation catalyst solution prepared by dissolving 3.42 g (0.015 mols) of ammonium persulfate and 1.8 g (0.0045 mols) of ferric sulfate in 30 ml of water was slowly added under stirring, followed by stirring for 3 hours to obtain a blackish blue solution.

To the resulting blackish blue solution, 200 ml of isopropanol was added and the precipitate obtained was centrifuged to obtain a blackish blue solid. The resulting blackish blue solid was dispersed again in 200 ml of water and 300 ml of isopropanol was added, and then the precipitate was filtered under reduced pressure and the solid was washed. The washing operation was conducted twice to remove residual ions in the solid. After vacuum-drying in a vacuum oven at 100°C, a blackish blue solid was obtained.
The resulting solid was compressed to give a pellet and electrical conductivity of the pellet was evaluated. The results are shown in Table 3.

Table 3

| | Electrical conductivity (S/cm) | Change in electrical conductivity with heat (%) | Residual ion (ppm) |
|---|---|---|---|
| Example 9 | 90 | -43 | < 10 |
| Example 10 | 135 | -75 | < 10 |
| Example 11 | 60 | -30 | < 10 |
| Example 12 | 230 | -5 | < 10 |
| Example 13 | 210 | -12 | 30 |
| Example 14 | 203 | -60 | < 10 |
| Comparative Example 5 | 5 | -120 | < 10 |
| Comparative Example 6 | 12 | -3500 | 7500 |

As is apparent from the results shown in Table 3, the conductive composition composed only of a conjugated conductive polymer and a cluster derivative of Comparative Example 5 and the conductive composition composed only of a conjugated conductive polymer and a polyanion of Comparative Example 6 exhibit small electrical conductivity and large change in electrical conductivity with heat (electrical conductivity drastically deteriorates due to heat history). The conductive composition of Comparative Example 6 exhibits large residual ion and this shows that electrical conductivity drastically vary with the atmosphere such as humidity, resulting in poor stability. To the contrary, the conductive compositions of Examples 9 to 14 are conductive compositions which exhibit large electrical conductivity, small change in electrical conductivity with heat, and small residual ion, that is high conductivity, high heat resistance and low residual ion.

(Examples of Fourth Aspect)

Examples of the present aspect will now be described in detail, but the present aspect is not limited by the following examples.

(Preparation Examples 15 to 19)

Synthesis of polyanions (A1) to (A4) and (D1)

(Preparation Example 1)

To 100 ml of ion-exchange water, 43.4 g of sodium sulfonate ethyl methacrylate (manufactured by Nippon Nyukazai Co., Ltd. under the trade name of ANTOX) was added. While maintaining at 80°C under stirring, a complex oxidizing agent solution prepared by dissolving 0.114 g of ammonium persulfate and 0.04 g of ferric sulfate in 10 ml of ion-exchange water was added, followed by stirring for 3 hours while maintaining at the same temperature.
After the completion of the reaction, the reaction solution was cooled to room temperature. Then, the operation (X) of adding 1000 ml of ion-exchange water and 30 g of an aqueous 30% sulfuric acid solution in this order and concentrating the solution to 300 ml by an ultrafiltration method was repeated five times. Furthermore, the operation (Y) of adding 2000 ml of ion-exchange water was concentrating the solution to 300 ml by an ultrafiltration method was repeated until the filtrate is nearly neutralized.
Ultrafiltration conditions are as follows (the same as those in case of other examples).
Fractionation molecular weight of ultrafilter: 30 K

Cross flow system
Flow rate of liquid to be fed: 3000 cc/min
Membrane partial pressure: 0.114 Pa

The resulting concentrated solution was dried with heating in an oven at 100°C to obtain a polyanion (A1) (ethyl polymethacrylate sulfonic acid).

(Preparation Example 2)

In the same manner as in Preparation Example 1, except that the feed composition comprises 21.7 g of sodium sulfonate ethyl methacrylate and 20.6 g of sodium styrenesulfonate (manufactured by Tokyo Kasei Kogyo Co., Ltd.), a polyanion (A2) (poly(ethyl methacrylate sulfonic acid-styrenesulfonic acid)copolymer) was obtained.

(Preparation Example 3)

In the same manner as in Preparation Example 1, except that the feed composition comprises 21.7 g of sodium sulfonate ethyl methacrylate and 11.1 g of N-vinyl-2-pyrrolidone (manufactured by Tokyo Kasei Kogyo Co., Ltd.) and the amount of an aqueous sulfuric acid solution to be added in the concentration step (X) was adjusted to 20 g, a polyanion (A3) (poly(ethyl methacrylate sulfonic acid-N-vinyl-2-pyrrolidone)copolymer) was obtained.

(Preparation Example 4)

In the same manner as in Preparation Example 3, except that a solvent mixture of 60 ml of ion-exchange water and 40 ml of methanol was used in place of 100 ml of ion-exchange water and a composition comprising 24.5 g of sodium sulfonate butyl methacrylate (Asahi Kasei Finechem Co., Ltd.) and 13 g of hydroxyethyl acrylate (manufactured by Osaka Organic Chemical Industry Ltd.) was used, a polyanion (A4) (poly(butyl methacrylate sulfonic acid-hydroxyethyl acrylate)copolymer) was obtained.

(Preparation Example 5)

In the same manner as in Preparation Example 1, except that the feed composition comprises 41.2 g of sodium styrenesulfonate (manufactured by Tokyo Kasei Kogyo Co., Ltd.), a comparative polyanion (D1) (polystyrenesulfonic acid) was obtained.

(Example 15)

2.91 g (0.015 mols) of a polyanion (A1) and 0.68 g (0.01 mols) of pyrrole were dissolved in 300 ml of ion-exchange water. The resulting solution mixture was maintained at 0°C and an oxidation polymerization catalyst solution prepared by dissolving 2.85 g (0.0125 mols) of ammonium persulfate and 0.1 g of ferric sulfate in 100 ml of ion-exchange water was slowly added under stirring, followed by stirring at the same temperature for 3 hours (step (1)).

The operation of adding 2000 ml of ion exchange water to the resulting reaction solution and concentrating the solution to 300 ml by an ultrafiltration method was repeated twice to remove free ions of the oxidation polymerization catalyst (step (2)). Furthermore, the operation of adding 100 ml of ion-exchange water and 20 g of an aqueous 10% sulfuric acid solution in this order to the concentrated solution and concentrating the solution to 300 ml by an ultrafiltration method was repeated five times, thereby conducting proton exchange (steps (3) and (2)). Furthermore, the operation of adding 3000 ml of ion-exchange water and concentrating the solution to 300 ml by an ultrafiltration method was repeated until the filtration is nearly neutralized (step (2)) to obtain a conductive composition (C1) as a blackish blue liquid.

The resulting composition was applied onto a glass plate and then dried in an oven at 125°C to obtain a 0.005 mm thick conductive film (M1).

(Examples 16 to 18)

In the same manner as in Example 1, except that the same mol number of polyanions (A2) to (A4) were used as the polyanion, conductive compositions (C2) to (C4) and conductive films (M2) to (M4) were obtained.

(Example 19)

To the conductive composition (C1) of Example 1, 0.1 g of p-toluenesulfonic acid as an anion compound (E) was added to obtain a conductive composition (C5). Using the resulting conductive composition, a conductive film (M5)

was obtained in the same manner as in Example 1.

(Comparative Example 7)

In the same manner as in Example 1, except that the same mol number of a polyanion (D1) was used as the polyanion, comparative conductive compositions (C6) and conductive film (M6) were obtained.

(Comparative Example 8)

3.80 g (0.02 mols) of p-toluenesulfonic acid and 1.36 g (0.02 mols) of pyrrole were dissolved in 300 ml of ion-exchange water. While maintaining the resulting solution mixture at 0°C under stirring, an oxidation polymerization catalyst solution prepared by dissolving 5.70 g (0.025 mols) of ammonium persulfate and 0.1 g of ferric sulfate in 100 ml of ion-exchange water was slowly added, followed by stirring at the same temperature for 3 hours.

To the resulting reaction solution, 100 ml of ethanol was added and the precipitate was filtered under reduced pressure to obtain a solid. The operation of homogeneously dispersing the resulting solid in 200 ml of ion-exchange water, adding 100 ml of ethanol, filtering the precipitate under reduced pressure and washing the solid was repeated three times. The resulting solid was compressed and formed into a pellet and then vacuum-dried to obtain a conductive composition (C7) as a blackish blue solid (pellet). The solid was filled into a mold measuring 10 mm × 30 mm and then compressed under a pressure of 100 MPa to obtain a 0.1 mm thick conductive film (M7).

(Evaluation Item and Evaluation Procedure)

<Electrical Conductivity (S/cm)>

Using each of conductive films measuring 10 mm × 30 mm obtained in the respective examples, electrical conductivity at 25°C was measured by LORESTA (manufactured by Mitsubishi Chemical Corporation).

<Conductivity retention ratio (%)>

As described above, initial electrical conductivity $R_{25B}$ at 25°C was measured. The conductive film was allowed to stand 125°C for 500 hours and then the temperature was returned to 25°C. Electrical conductivity $R_{25A}$ was measured again and conductivity retention ratio was calculated by the following equation.

$$\text{Conductivity retention ratio (\%)} = 100 \times (R_{25B}-R_{25A})/R_{25B}$$

<residual ion amount>

0.5 g of each solid of the conductive compositions obtained in the respective examples was dipped in 50 ml of ultra pure water and treated at 95°C for 16 hours. The amount of sulfuric acid ions in the effluent was measured by ion chromatograph.

(Results)

The results are shown in Table 4.

As show in Table 4, in all Examples 15 to 19 in which polypyrrole as the conjugated conductive polymer (B) was polymerized in the presence of the polyanion (A) containing an alkyl methacrylate sulfonic acid and then an ultrafiltration treatment was conducted, there could be obtained a liquid conductive composition which is excellent in solubility of the conjugated conductive polymer (B) in a solvent and has high electrical conductivity, and is also excellent in thermostability and contains residual ions in the amount of not more than detection limit. This composition is excellent in film forming properties, and thus a conductive film having high electrical conductivity and excellent thermostability could be obtained.

To the contrary, in Comparative Example 7 in which the comparative polyanion (D) having no ester group was used, thermostability of electrical conductivity was drastically poor. In Comparative Example 8 in which the polyanion was not used and the ultrafiltration treatment was not conducted, thermostability of electrical conductivity was drastically poor and the amount of residual ions was drastically large, and thus the resulting composition was inferior.

Table 4

| | Electrical conductivity (S/cm) | Conductivity retention ratio (%) | Amount of residual ions (ppm) |
|---|---|---|---|
| Example 15 | 59 | 69 | < 10 |
| Example 16 | 47 | 43 | < 10 |
| Example 17 | 36 | 45 | < 10 |
| Example 18 | 53 | 65 | < 10 |
| Example 19 | 73 | 53 | < 10 |
| Comparative Example 7 | 35 | 0.01 | < 10 |
| Comparative Example 8 | 72 | 0.12 | 9300 |

(Examples of Fifth Aspect)

The present aspect will now be described in detail by way of examples.

(Example 20)

(1) Synthesis of cyano group-containing polymer compound

50 g of acrylonitrile and 10 g of styrene were dissolved in 500 ml of toluene and 1.5 g of azobisisobutyronitrile as a polymerization initiator was added, and then the mixture was polymerized at 50°C for 5 hours. The polymer produced by polymerization was washed with methanol to obtain a cyano group-containing polymer compound.

(2) Preparation of conductive composition

10 g of the cyano group-containing polymer compound obtained in the step (1) was dissolved in 90 g of acetonitrile and 50 g of pyrrole and 20 g of sodium octadecylnaphthalenesulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, 10 parts by mass of a carbon nano-tube based on 100 parts by mass of the solid content of the conductive mixture was mixed to the conductive mixture, and stirred to obtain a conductive coating material containing a conductive composition and dimethylacetamide.

Electrical conductivity (conductivity) and heat resistance of the resulting conductive coating material were evaluated by the following test methods. The results are shown in Table 5.

<Test Method>

(a) Electrical conductivity

Electrical conductivity (unit: S/cm) of a coating film formed by applying a conductive coating material onto a PET film in a thickness of 2 μm was measured by a conductivity meter (trade name: LORESTA MCP-T600) (column of "Initial" in the table).

(b) Heat resistance

A conductive coating material was applied onto a PET film in a thickness of 10 μm and then allowed to stand in an oven at 125°C for 240 hours. After standing for 240 hours, a change in electrical conductivity was taken as an

indicator of heat resistance.

Table 5

| | Electrical conductivity (S/cm) | |
|---|---|---|
| | Initial | After 240 hours |
| Example 20 | $5 \times 10^1$ | $3 \times 10^1$ |
| Example 21 | $7 \times 10^1$ | $5 \times 10^1$ |
| Example 22 | $1 \times 10^2$ | $8 \times 10^1$ |
| Comparative Example 9 | $2 \times 10^{-2}$ | $1 \times 10^{-4}$ |

(Example 21)

(1) Synthesis of cyano group-containing polymer compound

30 g of acrylonitrile and 20 g of methyl methacrylate were dissolved in 500 ml of toluene and 1.5 g of azobisisobutyronitrile as a polymerization initiator was added, and then the mixture was polymerized at 50°C for 5 hours. The polymer produced by polymerization was washed with methanol to obtain a cyano group-containing polymer compound.

(2) Preparation of conductive composition

10 g of the cyano group-containing polymer compound obtained in the step (1) was dissolved in 90 g of acetonitrile and 50 g of pyrrole and 20 g of sodium anthraquinonedisulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, the conductive mixture solution was mixed with 15 parts by mass of a sulfo group-containing carbon nano-tube, which is based on 100 parts by mass of the solid content of the conductive mixture, and stirred to obtain a conductive coating material containing a conductive composition and dimethylacetamide. The sulfo group-containing carbon nano-tube used was obtained by adding 100 g of a carbon nano-tube in 1000 ml of concentrated sulfuric acid and refluxing at 100°C for 12 hours, followed by washing and further filtration.

The resulting conductive coating material was tested in the same manner as in Example 20.

(Example 22)

(1) Preparation of surface-coated conductive filler

10 g of the sulfo group-containing carbon nano-tube used in Example 21 was dispersed in 100 ml of acetonitrile, and 5 g of pyrrole and 1 g of p-toluenesulfonic acid were added, followed by stirring for one hour while cooling to - 20°C. Then, an oxidizing agent solution prepared by dissolving 15 g of ferric chloride in 100 ml of acetonitrile was added dropwise to the solution over 2 hours while maintaining at -20°C. Furthermore, while continuously stirring for 12 hours, pyrrole was polymerized. As a result of the polymerization, a surface-coated conductive filler in which the surface of the sulfo group-containing carbon nano-tube is coated with pyrrole was obtained.

The surface-coated conductive filler was collected by filtration and then washed with methanol and pure water until the filtrate becomes clear to obtain a high purity surface-coated conductive filler.

(2) Synthesis of cyano group-containing polymer compound

30 g of acrylonitrile and 20 g of methyl methacrylate were dissolved in 500 ml of toluene and 1.5 g of azobisisobutyronitrile as a polymerization initiator was added, and then the mixture was polymerized at 50°C for 5 hours. The

polymer produced by polymerization was washed with methanol to obtain a cyano group-containing polymer compound.

(3) Preparation of conductive composition

10 g of the cyano group-containing polymer compound obtained in the step (2) was dissolved in 90 g of acetonitrile and 50 g of pyrrole and 20 g of sodium anthraquinonedisulfonate were added, followed by stirring for one hour while cooling to -20°C to prepare a monomer-containing solution.

To the monomer-containing solution, an oxidizing agent solution prepared by dissolving 250 g of ferric chloride in 1250 ml of acetonitrile was added dropwise over 2 hours while maintaining at -20°C. Furthermore, pyrrole was polymerized while continuously stirring for 12 hours.

After the completion of the polymerization, 2000 ml of methanol was added to the reaction solution to precipitate a product, and the resulting precipitate was filtered and then washed with methanol and pure water until the filtrate becomes clear to obtain a conductive mixture. The resulting conductive mixture was dissolved in dimethylacetamide (DMAc) to prepare a conductive mixture solution having a concentration of 5% by mass. Then, the conductive mixture solution was mixed with 15 parts by mass of the surface-coated carbon nano-tube, which was based on is 100 parts by mass of the solid content of the conductive mixture solution, obtained in the step (1), and stirred to obtain a conductive coating material containing a conductive composition and dimethylacetamide.

The resulting conductive coating material was tested in the same manner as in Example 20.

(Comparative Example 9)

10 g of sodium polystyrenesulfonate having a molecular weight of 50000 was dissolved in 100 g of pure water and 10 g of aniline was added, followed by stirring for one hour while cooling to 5°C to prepare a monomer-containing solution.

To the monomer-containing solution, an oxidizing agent solution prepared by dissolving 250 g of ammonium persulfate in 1250 ml of pure water was added dropwise over 2 hours while maintaining at 5°C. Furthermore, aniline was polymerized while continuously stirring for 12 hours.

After the completion of the reaction, the resulting solution containing the polymerization product was washed by passing through a column filled with an ion-exchange resin several times to obtain a solution containing a conductive composition. Then, the concentration of the conductive composition of the solution was adjusted to 5% by mass to obtain a conductive coating material.

The resulting conductive coating material composition was tested in the same manner as in Example 20.

The conductive coating materials of Examples 20 to 22 contained a cyano group-containing polymer compound, a $\pi$-conjugated conductive polymer and a conductive filler and therefore had high conductivity and excellent heat resistance.

On the other hand, the conductive coating material of Comparative Example 9 was inferior in not only conductivity, but also heat resistance because the $\pi$-conjugated conductive polymer was dissolved in water using a polyelectrolyte.

(Examples of Sixth Aspect)

Examples of the present aspect will now be described, but the present aspect is not limited to the following examples.

(Preparation of Hole Transporting Polyelectrolyte Solution I)

1.02 g of pyrrole and 2.37 g of polyisoprenesulfonic acid were dissolved in 300 ml of distilled water. The resulting solution was maintained at 0°C and a solution prepared by dissolving 3.4 g of ammonium persulfate and 0.6 g of ferric sulfate in 40 ml of distilled water was slowly added thereto under stirring, followed by stirring for 3 hours.

400 ml of ion-exchange water was added to the resulting reaction solution and iron sulfate and ammonium sulfate ions were removed by an ultrafiltration method. The solution was concentrated under reduced pressure with heating to prepare a conductive polymer solution having a solid content of 10% by mass and the same mass of acetonitrile was added to prepare a 5% by mass hole transporting polyelectrolyte solution I.

(Preparation of Hole Transporting Polyelectrolyte Solution II)

To 20 g of the hole transporting polyelectrolyte solution I, 0.475 g of tetrapropylammonium iodide and 0.025 g of iodine dissolved in 9.5 g of acetonitrile were added, followed by sufficient stirring to prepare a 5% by mass hole

transporting polyelectrolyte solution II.

(Preparation of Hole Transporting Polyelectrolyte Solution III)

To 20 g of the hole transporting polyelectrolyte solution I, 0.475 g of tetrapropylammonium iodide and 0.025 g of iodine dissolved in 15 g of acetonitrile were added, followed by sufficient stirring, addition of 0.2 g of sulfonic acid-substituted carbon nano-tube and further stirring to prepare a 4.8% by mass hole transporting polyelectrolyte solution III.

(Example 23)

Formation of titanium dioxide layer: A commercially available aqueous solution of titanium oxide microparticles (manufactured by Catalyst&Chemicals Ind. Co., Ltd. under the trade name of PASOL-HPA-15R) was applied onto a transparent fluorine doped $SnO_2$ glass substrate by a doctor blade method, previously dried in an atmosphere at 100°C for 60 minutes and then fired in an atmosphere at 450°C for 90 minutes. Furthermore, the fired film was subjected to the above application, previous drying and firing to form a titanium dioxide porous layer having a thickness of 13 to 15 μm.
Formation of dye layer: The above titanium dioxide porous layer was dipped in a dye solution, in which the concentration of a sensitizing dye (ruthenium organic complex, manufactured by Kojima Chemical Co., Ltd.) having a structure represented by the following formula (1) in ethanol is $3 \times 10^{-4}$ mol/l, at 60°C for 5 hours to form a dye layer.
Formation of hole transporting polyelectrolyte layer: The hole transporting polyelectrolyte solution I was applied onto the titanium dioxide substrate with the dye layer formed thereon by doctor blade method and then vacuum-dried to form a hole transporting polyelectrolyte layer, and thus a photoelectric transducer I was obtained.

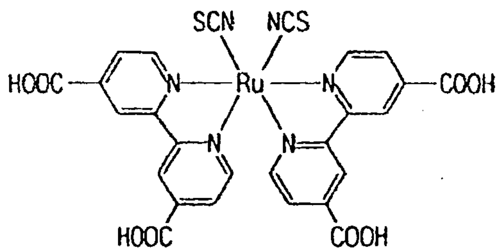

(1)

(Examples of Seventh Aspect)

Examples of the present aspect will now be described, but the present aspect is not limited by the following examples.

(Evaluation)

Electrical conductivity (S/cm):

Each of the compositions obtained in examples and comparative examples was formed into a pellet measuring 0.1 mm in thickness × 30 mm × 30 mm by applying a pressure. Electrical conductivity of these pellet was measured by LORESTA (manufactured by Mitsubishi Chemical Corporation). Change in electrical conductivity with heat (%)
After measuring electrical conductivity R25B at a temperature of 25°C, the pellet were allowed to stand under the environment of a temperature of 150°C for 500 hours. Then, the temperature of the pellet was returned to 25°C and electrical conductivity R25A was measured. Change in electrical conductivity with heat was calculated by the following equation.

$$\text{Change in electrical conductivity with heat (\%)} = 100 \times (R_{25B} - R_{25A}) / R_{25B}$$

Residual ion analysis:

0.5 g of pellet were eluted in 50 ml of ultra pure water at 95°C for 16 hours and an effluent was measured by an ion chromatograph.

(Reference Example 1) (Synthesis of polyanion I)

To a solvent mixture of water (80 ml) and methanol (20 ml), 17 g (0.1 mols) of sodium isoprenesulfonate (manufactured by JSR Corporation under the trade name of IPS) and 6.8 g (0.1 mols) of isoprene (manufactured by Tokyo Kasei Kogyo Co., Ltd.) were added. While stirring at room temperature, a complex oxidizing agent solution prepared by previously dissolving 0.228 g (0.001 mols) of ammonium persulfate and 0.04 g (0.0001 mols) of ferric sulfate in 10 ml of water was added dropwise for 20 minutes.

The resulting solution mixture was stirred at room temperature for 3 hours and heated at reflux for one hour, and then the solvent was removed under pressure to obtain a pale yellow solid.

The results of IR absorption spectrum, ESCA analysis and GPC analysis revealed that the resulting compound is a copolymer composed of a sodium isoprenesulfonate unit and an isoprene unit in a ratio of about 1:1 and is a polyanion having a molecular weight of about 20000. The resulting pale yellow solid was taken as a polyanion I.

(Reference Example 2) (Synthesis of polyanion II)

In the same manner as in Reference Example 1, except that the amount of isoprene was changed to 27.2 g from 6.8 g, a polyanion II was obtained as a pale yellow solid. The analytical results revealed that the resulting polyanion is a polyanion which comprises a sodium isoprenesulfonate unit and an isoprene unit in a ratio of 1:3 and has a molecular weight of about 14000.

(Reference Example 3) (Synthesis of polyanion III)

To water (50 ml) maintained at 80°C, a solution mixture prepared by dissolving 17 g (0.1 mols) of sodium isoprenesulfonate and 55.5 g (0.5 mols) of N-vinyl-2-pyrrolidone (manufactured by Tokyo Kasei Kogyo Co., Ltd.) in 100 ml of water and a complex oxidizing agent solution prepared by dissolving 0.912 g (0.004 mols) of ammonium persulfate and 0.04 g (0.0001 mols) of ferric sulfate in 10 ml of water were simultaneously added dropwise for 20 minutes while stirring. Then, the resulting solution was stirred for 3 hours and water was removed under reduced pressure to obtain a polyanion III as a pale yellow solid.

The polyanion was identified by the same method as in case of the polyanion I and it was found that the polyanion is a polyanion which comprises a sodium isoprenesulfonate unit and an N-vinyl-2-pyrrolidone unit in a ratio of 1:5 and has a molecular weight of about 30000.

(Reference Example 4) (Synthesis of polyanion IV)

To a solvent mixture of water (200 ml) and methanol (50 ml), 13 g (0.1 mols) of sodium vinylsulfonate (product manufactured by Asahi Kasei Finechem Co., Ltd. under the trade name of N-SVS-25) and 34 g (0.5 mols) of isoprene were added. While stirring at room temperature, a complex oxidizing agent solution prepared by dissolving 0.684 g (0.003 mols) of ammonium persulfate and 0.04 g (0.0001 mols) of ferric sulfate in 10 ml of water was added dropwise for 20 minutes.

The resulting solution was stirred at room temperature for 3 hours and then, after heating at reflux for one hour, the solvent was removed under reduced pressure to obtain a polyanion IV as a pale yellow solid.

The polyanion was identified by the same method as in case of the polyanion I and it was found that the polyanion is a polyanion which comprises a sodium vinylsulfonate unit and an isoprene unit in a ratio of 1:5 and has a molecular weight of about 15000.

(Reference Example 5) (Synthesis of polyanion V)

14.2 g (0.1 mols) of sodium allylsulfonate was dissolved in 100 ml of water, and a complex oxidizing agent solution of 0.04 g (0.0001 mols) of ferric sulfate was added while stirring at 80°C. After stirring the solution for 3 hours, water was removed under reduced pressure to obtain a polyanion V as a pale yellow solid.

The polyanion was identified by the same method as in case of the polyanion I and it was found that the polyanion is a polyanion which comprises a sodium isoprenesulfonate as a repeating unit and has a molecular weight of about 15000.

(Example 26)

6.80 g (0.1 mols) of pyrrole and 11.85 g (0.05 mols) of a polyanion I were dissolved in 300 ml of water and 2 g of a 10 wt% sulfuric acid solution was added to the solution, followed by cooling to 0°C.

While maintaining the solution at 0°C, an oxidation catalyst solution prepared by dissolving 22.80 g (0.1 mols) of ammonium persulfate and 8.0 g (0.02 mols) of ferric sulfate in 100 ml of water was slowly added under stirring, followed by stirring for 3 hours.

To the resulting reaction solution, 100 ml of ethanol was added and the precipitate was filtered under reduced pressure to obtain a blackish blue solid.

The resulting blackish blue solid was homogeneously dispersed in 200 ml of water and 100 ml of ethanol was added, and then the precipitate was filtered under reduced pressure and the blackish blue solid obtained was washed. The above washing operation was conducted three times to remove residual ions in the solid to obtain a conductive composition containing polypyrrole and a polyanion I as a blackish blue solid.

The resulting solid was compressed to give a pellet, followed by vacuum drying. Electrical conductivity of the resulting pellet was evaluated. The results are shown in Table 7.

(Examples 27 to 29)

In the same manner as in Example 26, except that the same mol number of a polyanion II (Example 27), a polyanion III (Example 28) and a polyanion IV (Example 29) were used in place of the polyanion I, conductive compositions were obtained as a blackish blue solid.

The resulting solid was compressed to give pellet and electrical conductivity of the pellet was evaluated. The results are shown in Table 7.

(Example 30)

6.80 g (0.1 mols) of pyrrole, 6.31 g (0.014 mols) of a polyanion I and 4.82 g (0.028 mols) of p-toluenesulfonic acid were dissolved in 300 ml of water and cooled to 0°C.

While maintaining the solution at 0°C, an oxidation catalyst solution prepared by dissolving 22.80 g (0.1 mols) of ammonium persulfate and 8.0 g (0.02 mols) of ferric sulfate in 100 ml of water was slowly added under stirring, followed by stirring for 3 hours. The precipitate was filtered under reduced pressure to obtain a blackish blue solid.

The resulting blackish blue solid was homogeneously dispersed in 200 ml of water, and then the precipitate was filtered under reduced pressure and the blackish blue solid was washed. The above washing operation was conducted several times to remove residual ions in the solid. As a result, a blackish blue solid containing polypyrrole, a polyanion I and p-toluenesulfonic acid was obtained.

The resulting solid was compressed to give a pellet and then vacuum-dried. Electrical conductivity of the resulting pellet was evaluated. The results are shown in Table 7.

(Example 31)

6.80 g (0.1 mols) of pyrrole, 6.31 g (0.014 mols) of a polyanion II and 9.76 g (0.028 mols) of sodium dodecylbenzenesulfonate were dissolved in 300 ml of water and cooled to 0°C.

While maintaining the solution at 0°C, an oxidation catalyst solution prepared by dissolving 22.80 g (0.1 mols) of ammonium persulfate and 8.0 g (0.02 mols) of ferric sulfate in 100 ml of water was slowly added under stirring, followed by stirring for 3 hours.

The precipitate obtained by the reaction was filtered under reduced pressure to obtain a blackish blue solid.

The resulting blackish blue solid was homogeneously dispersed in 200 ml of water, and then the precipitate was filtered under reduced pressure and the blackish blue solid obtained was washed. The above washing operation was conducted several times to remove residual ions in the solid. As a result, a blackish blue solid containing polypyrrole, a polyanion II and p-toluenesulfonic acid was obtained.

The resulting solid was compressed to give pellet and then vacuum-dried. Electrical conductivity of the resulting pellet was evaluated. The results are shown in Table 1.

(Comparative Example 10)

6.80 g (0.1 mols) of pyrrole and 21.3 g (0.15 mols) of a polyanion V were dissolved in 300 ml of water and cooled to 0°C.

While maintaining the solution at 0°C, an oxidation catalyst solution prepared by dissolving 22.80 g (0.1 mols) of ammonium persulfate and 8.0 g (0.02 mols) of ferric sulfate in 100 ml of water was slowly added under stirring, followed by stirring for 3 hours. As a result, a blackish blue solution was obtained.

To the resulting blackish blue solution, 500 ml of isopropanol was added and the precipitate was filtered under reduced pressure to obtain a blackish blue solid. The resulting blackish blue solid was dispersed again in 200 ml of

water and 300 ml of isopropanol was added, and then the precipitate was filtered under reduced pressure and the solid was washed. The above washing operation was repeated twice to remove residual ions in the solid. As a result, a blackish blue solid containing polypyrrole and a polyanion V was obtained.

The resulting solid was compressed to give a pellet and then vacuum-dried. Electrical conductivity of the resulting pellet was evaluated. The results are shown in Table 7.

Table 7

| | Electrical conductivity (S/cm) | Change in electrical conductivity with heat (%) | Residual ions (ppm) |
|---|---|---|---|
| Example 26 | 230 | -35 | <10 |
| Example 27 | 270 | -25 | <10 |
| Example 28 | 130 | -80 | <10 |
| Example 29 | 190 | -30 | <10 |
| Example 30 | 280 | -8 | <10 |
| Example 31 | 290 | -5 | <10 |
| Comparative Example 10 | 0.55 | -21000 | 13000 |

As is apparent from the results shown in Table 7, the composition of Comparative Example 10 exhibit low electrical conductivity and drastically large change in electrical conductivity with heat and also contains a large amount of residual ions, whereas, all compositions of Examples 26 to 31 exhibit high electrical conductivity and small change in electrical conductivity with heat, and are also stable to temperature variation and scarcely contain residual ions, and therefore excellent in moisture resistance because electrical conductivity does not substantially vary with humidity variation.

INDUSTRIAL APPLICABILITY

According to the seventh aspect of the present invention, there can be obtained a conductive composition which exhibits high conductivity and excellent heat resistance and also contain a small amount of residual ions. The seventh aspect of the present invention can provide a conductive composition containing a conjugated conductive polymer, which has high conductivity and causes no change in electrical conductivity due to temperature variation, and also contains a small amount of residual ions. The present aspect can be employed for various purposes which require conductivity, for example, conductive coating materials, antistatic agents, electromagnetic wave shielding materials, conductor materials which require transparency, battery materials, capacitor materials, conductive adhesive materials, sensors, electric device materials, semiconductive materials, electrostatic copying materials, photosensitive members, transfer materials, intermediate transfer materials, and carrying members for printer and the like and electrophotographic materials.

## Claims

**1.** A conductive composition comprising a conjugated conductive polymer and a polyanion: wherein
the conjugated conductive polymer is at least one selected from the group consisting of polypyrroles and
the polyanion is at least one selected from the group consisting of substituted or unsubstituted polyalkylene, substituted or unsubstituted polyalkenylene, and
the polyanion is a copolymer which is obtained by copolymerization of a monomer having an anion group and a monomer having no anion group,

- the monomer having an anion group is selected from vinylsulfonic acid, vinylsulfonic acid salt, allylsulfonic acid, allylsulfonic acid salt, methallylsulfonic acid, methallylsulfonic acid salt, styrenesulfonic acid, 4-sulfobutyl methacrylate, 4-sulfobutyl methacrylate salt, methallyloxybenzenesulfonic acid, methallyloxybenzenesulfonic acid salt, allyloxybenzenesulfonic acid, allyloxybenzenesulfonic acid salt, styrenesulfonic acid salt, α-methylstyrenesulfonic acid, α-methylstyrenesulfonic acid salt, acrylamide-t-butylsulfonic acid, acrylamide-t-butylsulfonic acid salt, 2-acrylamide-2-methylpropanesulfonic acid, 2-acrylamide-2-methylpropanesulfonic acid salt,

cyclobutene-3-sulfonic acid, cyclobutene-3-sulfonic acid salt, isoprenesulfonic acid, isoprenesulfonic acid salt, 1,3-butadiene-1-sulfonic acid, 1,3-butadiene-1-sulfonic acid salt, 1-methyl-1,3-butadiene-2-sulfonic acid, 1-methyl-1,3-butadiene-3-sulfonic acid salt, 1-methyl-1,3-butadiene-4-sulfonic acid and 1-methyl-1,3-butadiene-4-sulfonic acid salt, and

the polyanion also satisfies the relation: $m/n \leq 1$ where m represents the number of the monomer having an anion group and n represents the number of the monomer having no anion group.

**2.** A conductive composition comprising a conjugated conductive polymer and a polyanion: wherein
the conjugated conductive polymer is at least one selected from the group consisting of polythiophenes, and
the polyanion is at least one selected from the group consisting of substituted or unsubstituted polyalkenylene, and
the polyanion is a copolymer which is obtained by copolymerization of a monomer having an anion group and a monomer having no anion group,
the monomer having an anion group is selected from vinylsulfonic acid, vinylsulfonic acid salt, allylsulfonic acid, allylsulfonic acid salt, methallylsulfonic acid, methallylsulfonic acid salt, styrenesulfonic acid, 4-sulfobutyl methacrylate, 4-sulfobutyl methacrylate salt, methallyloxybenzenesulfonic acid, methallyloxybenzenesulfonic acid salt, allyloxybenzenesulfonic acid, allyloxybenzenesulfonic acid salt, styrenesulfonic acid salt, $\alpha$-methylstyrenesulfonic acid, $\alpha$-methylstyrenesulfonic acid salt, acrylamide-t-butylsulfonic acid, acrylamide-t-butylsulfonic acid salt, 2-acrylamide-2-methylpropanesulfonic acid, 2-acrylamide-2-methylpropanesulfonic acid salt, cyclobutene-3-sulfonic acid, cyclobutene-3-sulfonic acid salt, isoprenesulfonic acid, isoprenesulfonic acid salt, 1,3-butadiene-1-sulfonic acid, 1,3-butadiene-1-sulfonic acid salt, 1-methyl-1,3-butadiene-2-sulfonic acid, 1-methyl-1,3-butadiene-3-sulfonic acid salt, 1-methyl-1,3-butadiene-4-sulfonic acid and 1-methyl-1,3-butadiene-4-sulfonic acid salt, and
the polyanion also satisfies the relation: $0.2 \leq m/n \leq 1$ where m represents the number of the monomer having an anion group and n represents the number of the monomer having no anion group.

**3.** The conductive composition according to claim 1, wherein the polyanion, which comprises the monomer having an anion group and the monomer having no anion group, is a polymer which includes a substituted or unsubstituted alkenylene as a constituent unit.

**4.** The conductive composition according to claim 2 or 3, wherein the substituted or unsubstituted alkenylene is a substituted or unsubstituted butenylene.

**5.** The conductive composition according to claim 1 or 2, wherein the mol number of the anion group of the polyanion is less than that of the dopant of the conjugated conductive polymer.

**6.** The conductive composition according to claim 1 or 2, further comprising an anion other than the polyanion.

**7.** The conductive composition according to claim 6, wherein the anion other than the polyanion is an organic sulfonic acid.

**8.** A method for preparing the conductive composition according to claim 1 or 2, which comprises subjecting a monomer of the conjugated conductive polymer to oxidation polymerization in the presence of the polyanion.

**9.** A method for preparing the conductive composition according to claim 1 or 2, which comprises subjecting a monomer of the conjugated conductive polymer to oxidation polymerization in the presence of the polyanion and the organic sulfonic acid.

## Patentansprüche

**1.** Leitfähige Zusammensetzung, umfassend ein konjugiertes leitfähiges Polymer und ein Polyanion, wobei
das konjugierte leitfähige Polymer mindestens eines ist, das aus der Gruppe ausgewählt ist, welche aus Polypyrrolen besteht, und
das Polyanion mindestens eines ist, das aus der Gruppe ausgewählt ist, welche aus substituiertem oder nichtsubstituiertem Polyalkylen, substituiertem oder nichtsubstituiertem Polyalkenylen besteht, und
das Polyanion ein Copolymer ist, das durch Copolymerisation eines Monomers mit einer Aniongruppe und eines Monomers ohne eine Aniongruppe erhalten wird, das Monomer mit einer Aniongruppe ausgewählt ist aus Vinylsulfonsäure, Vinylsulfonsäuresalz, Allylsulfonsäure, Allylsulfonsäuresalz, Methallylsulfonsäure, Methallylsulfonsäuresalz, Styrolsulfonsäure, 4-Sulfobutylmethacrylat, 4-Sulfobutylmethacrylatsalz, Methallyloxybenzolsulfonsäure, Methallyloxybenzolsulfonsäuresalz, Allyloxybenzolsulfonsäure, Allyloxybenzolsulfonsäuresalz, Styrolsulfonsäuresalz, α-Methylstyrolsulfonsäure, α-Methylstyrolsulfonsäuresalz, Acrylamid-t-butylsulfonsäure, Acrylamid-t-butylsulfonsäuresalz, 2-Acrylamid-2-methylpropansulfonsäure, 2-Acrylamid-2-methylpropansulfonsäuresalz, Cyclobuten-3-sulfonsäure, Cyclobuten-3-sulfonsäuresalz, Isoprensulfonsäure, Isoprensulfonsäuresalz, 1,3-Butadien-1-sulfonsäure, 1,3-Butadien-1-sulfonsäuresalz, 1-Methyl-1,3-butadien-2-sulfonsäure, 1-methyl-1,3-butadien-3-sulfonsäuresalz, 1-Methyl-1,3-butadien-4-sulfonsäure und 1-Methyl-1,3-butadien-4-sulfonsäuresalz, und
das Polyanion außerdem der Beziehung $m/n \leq 1$ genügt, wobei m die Zahl des Monomers mit einer Aniongruppe und n die Zahl des Monomers ohne eine Aniongruppe darstellt.

**2.** Leitfähige Zusammensetzung, umfassend ein konjugiertes leitfähiges Polymer und ein Polyanion, wobei
das konjugierte leitfähige Polymer mindestens eines ist, das aus der Gruppe ausgewählt ist, welche aus Polythiophenen besteht, und
das Polyanion mindestens eines ist, das aus der Gruppe ausgewählt ist, welche aus substituiertem oder nichtsubstituiertem Polyalkylen besteht, und
das Polyanion ein Copolymer ist, das durch Copolymerisation eines Monomers mit einer Aniongruppe und eines Monomers ohne eine Aniongruppe erhalten wird, das Monomer mit einer Aniongruppe ausgewählt ist aus Vinylsulfonsäure, Vinylsulfonsäuresalz, Allylsulfonsäure, Allylsulfonsäuresalz, Methallylsulfonsäure, Methallylsulfonsäuresalz, Styrolsulfonsäure, 4-Sulfobutylmethacrylat, 4-Sulfobutylmethacrylatsalz, Methallyloxybenzolsulfonsäure, Methallyloxybenzolsulfonsäuresalz, Allyloxybenzolsulfonsäure, Allyloxybenzolsulfonsäuresalz, Styrolsulfonsäuresalz, α-Methylstyrolsulfonsäure, α-Methylstyrolsulfonsäuresalz, Acrylamid-t-butylsulfonsäure, Acrylamid-t-butylsulfonsäuresalz, 2-Acrylamid-2-methylpropansulfonsäure, 2-Acrylamid-2-methylpropansulfonsäuresalz, Cyclobuten-3-sulfonsäure, Cyclobuten-3-sulfonsäuresalz, Isoprensulfonsäure, Isoprensulfonsäuresalz, 1,3-Butadien-1-sulfonsäure, 1,3-Butadien-1-sulfonsäuresalz, 1-Methyl-1,3-butadien-2-sulfonsäure, 1-methyl-1,3-butadien-3-sulfonsäuresalz, 1-Methyl-1,3-butadien-4-sulfonsäure und 1-Methyl-1,3-butadien-4-sulfonsäuresalz, und
das Polyanion außerdem der Beziehung $0{,}2 \leq m/n \leq 1$ genügt, wobei m die Zahl des Monomers mit einer Aniongruppe und n die Zahl des Monomers ohne eine Aniongruppe darstellt.

**3.** Leitfähige Zusammensetzung nach Anspruch 1, wobei das Polyanion, welches die Bestandteilseinheit mit einer Aniongruppe und die Bestandteilseinheit ohne eine Aniongruppe umfasst, ein Polymer ist, welches ein substituiertes oder nichtsubstituiertes Alkenylen als eine Struktureinheit enthält.

**4.** Leitfähige Zusammensetzung nach Anspruch 2 oder 3, wobei das substituierte oder nichtsubstituierte Alkenylen ein substituiertes oder nichtsubstituiertes Butenylen ist.

**5.** Leitfähige Zusammensetzung nach Anspruch 1 oder 2, wobei die Molzahl der Aniongruppe des Polyanions kleiner als diejenige des Dotierstoffes des konjugierten leitfähigen Polymers ist.

**6.** Leitfähige Zusammensetzung nach Anspruch 1 oder 2, ferner ein Anion umfassend, das von dem Polyanion verschieden ist.

**7.** Leitfähige Zusammensetzung nach Anspruch 6, wobei das Anion, das von dem Polyanion verschieden ist, eine organische Sulfonsäure ist.

**8.** Verfahren zur Herstellung der leitfähigen Zusammensetzung nach Anspruch 1 oder 2, welches das Unterziehen eines Monomers des konjugierten leitfähigen Polymers einer Oxidationspolymerisation in Gegenwart des Polyanions umfasst.

**9.** Verfahren zur Herstellung der leitfähigen Zusammensetzung nach Anspruch 1 oder 2, welches das Unterziehen eines Monomers des konjugierten leitfähigen Polymers einer Oxidationspolymerisation in Gegenwart des Polyanions und der organischen Sulfonsäure umfasst.

## Revendications

**1.** Composition conductrice comprenant un polymère conducteur conjugué et un polyanion : dans laquelle le polymère conducteur conjugué est au moins un choisi parmi le groupe constitué de polypyrroles et
le polyanion est au moins un choisi parmi le groupe constitué de polyalkylène substitué ou non substitué, de polyalcénylène substitué ou non substitué, et
le polyanion est un copolymère qui est obtenu par copolymérisation d'un monomère ayant un groupe anion et un monomère n'ayant aucun groupe anion,
le monomère ayant un groupe anion est choisi parmi l'acide vinylsulfonique, le sel d'acide vinylsulfonique, l'acide allylsulfonique, le sel d'acide allylsulfonique, l'acide méthallylulfonique, le sel d'acide méthallylulfonique, l'acide styrènesulfonique, le méthacrylate de 4-sulfobutyle, le sel de méthacrylate de 4-sulfobutyle, l'acide méthallyloxybenzènesulfonique, le sel d'acide méthallyloxybenzènesulfonique, l'acide allyloxybenzènesulfonique, le sel d'acide allyloxybenzènesulfonique, le sel d'acide styrènesulfonique, l'acide $\alpha$-méthylstyrènesulfonique, le sel d'acide $\alpha$-méthylstyrènesulfonique, l'acide acrylamide-t-butylsulfonique, le sel acrylamide-t-butylsulfonique, l'acide 2-acrylamide-2-méthylpropanesulfonique, le sel d'acide 2-acrylamide-2-méthylpropanesulfonique, l'acide cyclobutène-3-sulfonique, le sel d'acide cyclobutène-3-sulfonique, l'acide isoprènesulfonique, le sel d'acide isoprènesulfonique, l'acide 1,3-butadiène-1-sulfonique, le sel d'acide 1,3-butadiène-1-sulfonique, l'acide 1-méthyl-1,3-butadiène-2-sulfonique, le sel d'acide 1-méthyl-1,3-butadiène-3-sulfonique, l'acide méthyle 1-méthyl-1,3-butadiène-4-sulfonique et le sel d'acide 1-méthyl-1,3-butadiène-4-sulfonique, et
le polyanion satisfait également la relation : $m/n \leq 1$ où m représente le nombre du monomère ayant un groupe anion et n représente le nombre du monomère n'ayant aucun groupe anion.

**2.** Composition conductrice comprenant un polymère conducteur conjugué et un polyanion : dans laquelle le polymère conducteur conjugué est au moins un choisi parmi le groupe constitué de polythiophènes, et
le polyanion est au moins un choisi parmi le groupe constitué de polyalcénylène substitué ou non substitué, et
le polyanion est un copolymère qui est obtenu par copolymérisation d'un monomère ayant un groupe anion et un monomère n'ayant aucun groupe anion,
le monomère ayant un groupe anion est choisi parmi l'acide vinylsulfonique, le sel d'acide vinylsulfonique, l'acide allylsulfonique, le sel d'acide allylsulfonique, l'acide méthallylulfonique, le sel d'acide méthallylulfonique, l'acide styrènesulfonique, le méthacrylate de 4-sulfobutyle, le sel de méthacrylate de 4-sulfobutyle, l'acide méthallyloxybenzènesulfonique, le sel d'acide méthallyloxybenzènesulfonique, l'acide allyloxybenzènesulfonique, le sel d'acide allyloxybenzènesulfonique, le sel d'acide styrènesulfonique, l'acide $\alpha$-méthylstyrènesulfonique, le sel d'acide $\alpha$-méthylstyrènesulfonique, l'acide acrylamide-t-butylsulfonique, le sel acrylamide-t-butylsulfonique, l'acide 2-acrylamide-2-méthylpropanesulfonique, le sel d'acide 2-acrylamide-2-méthylpropanesulfonique, l'acide cyclobutène-3-sulfonique, le sel d'acide cyclobutène-3-sulfonique l'acide isoprènesulfonique, le sel d'acide isoprènesulfonique, l'acide 1,3-butadiène-1-sulfonique, le sel d'acide 1,3-butadiène-1-sulfonique, l'acide 1-méthyl-1,3-butadiène-2-sulfonique, le sel d'acide 1-méthyl-1,3-butadiène-2-sulfonique, l'acide méthyle 1-méthyl-1,3-butadiène-3-sulfonique et le sel d'acide 1-méthyl-1,3-butadiène-3-sulfonique, et
le polyanion satisfait également la relation : $0,2 \leq m/n \leq 1$ où m représente le nombre du monomère ayant un groupe anion et n représente le nombre du monomère n'ayant aucun groupe anion.

**3.** Composition conductrice selon la revendication 1, dans laquelle le polyanion, qui comprend le monomère ayant un groupe anion et le monomère n'ayant aucun groupe anion, est un polymère qui comprend un alkylène substitué ou non substitué en tant que motif constitutif.

**4.** Composition conductrice selon la revendication 2 ou 3, dans laquelle l'alkylène substitué ou non substitué et butylène substitué ou non substitué.

**5.** Composition conductrice selon la revendication 1 ou 2, dans laquelle le nombre de moles du groupe anion du polyanion est inférieur à celui du dopant du polymère conducteur conjugué.

**6.** Composition conductrice selon la revendication 1 ou 2, comprenant en outre un anion autre que le polyanion.

**7.** Composition conductrice selon la revendication 6, dans laquelle Lannion autre que le polyanion et un acide sulfonique organique.

**8.** Procédé de préparation de la composition conductrice selon la revendication 1 ou 2, qui comprend la soumission d'un monomère du polymère conducteur conjugué à une polymérisation par oxydation en présence du polyanion.

**9.** Procédé de préparation de la composition conductrice selon la revendication 1 ou 2, qui comprend la soumission d'un monomère du polymère conducteur conjugué à une polymérisation par oxydation en présence du polyanion et de l'acide sulfonique organique.

FIG. 1

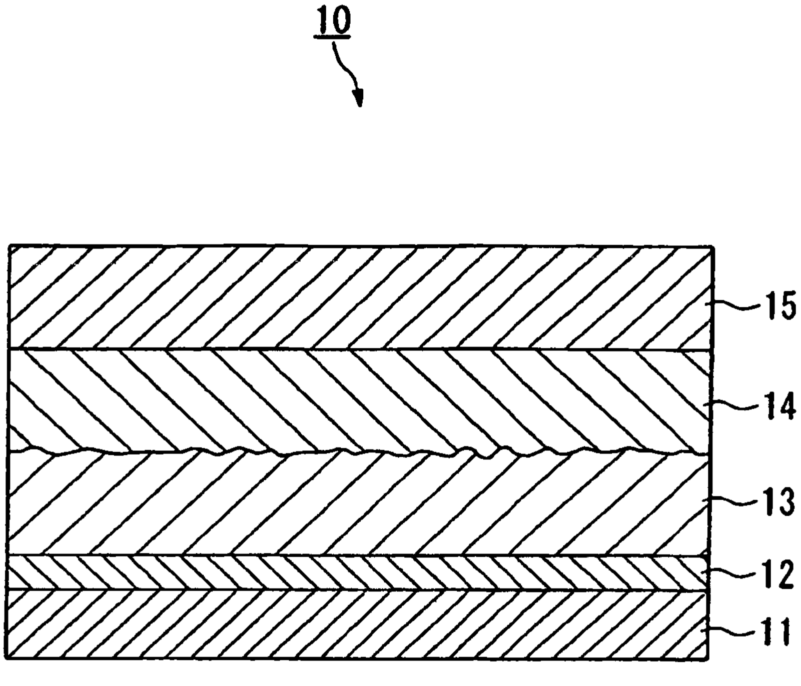

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003173429 A
- JP 2003375667 A
- JP 2003176426 A
- JP 2004109702 A
- JP 2004013032 A
- JP 2004027627 A
- JP 2003311929 A
- JP 2546617 B
- JP HEI06208198 B
- JP HEI11241021 B
- JP HEI07238149 B
- JP 2003037024 A
- JP SHO63158829 B
- JP SHO63173313 B
- JP HEI7105718 B
- JP HEI1174157 B
- JP 2003142168 A
- JP 2003243681 A


### Non-patent literature cited in the description


- **CHIANG, L. Y. ; WANG, L. Y. ; SWIRCZEWSKI. J. W. ; SOLED, S. ; CAMERON, S.** *J. Org. Chem.,* 1994, vol. 59, 3960